Europäisches Patentamt

European Patent Office

Office européen des brevets

(11) Veröffentlichungsnummer: **0 176 105**
**A2**

(12) # EUROPÄISCHE PATENTANMELDUNG

(21) Anmeldenummer: 85112294.5

(22) Anmeldetag: 27.09.85

(51) Int. Cl.⁴: **G 21 C 7/00**
**G 21 C 15/18**

(30) Priorität: 27.09.84 DE 3435541
05.07.85 DE 3524175

(43) Veröffentlichungstag der Anmeldung:
02.04.86 Patentblatt 86/14

(84) Benannte Vertragsstaaten:
BE CH DE FR GB LI NL SE

(71) Anmelder: Max-Planck-Gesellschaft zur Förderung der
Wissenschaften e.V.
Bunsenstrasse 10
D-3400 Göttingen(DE)

(72) Erfinder: Klapdor, Hans Volker, Prof. Dr.
Forstquelle 4
D-6900 Heidelberg(DE)

(72) Erfinder: Metzinger, Josef, Dr.
Schwanheimer Strasse 16c
D-6930 Eberbach(DE)

(74) Vertreter: von Bezold, Dieter, Dr. et al,
Patentanwälte Dr. D. von Bezold, Dipl.-Ing. P. Schütz,
Dipl.-Ing. W. Heusler Maria-Theresia-Strasse 22 Postfach
86 02 60
D-8000 München 86(DE)

(54) Verfahren zum Betrieb eines Kernreaktors und Kernreaktor zur Durchführung des Verfahrens.

(57) Aufgrund neuer Erkenntnisse über die Werte der Nach-zerfallswärme, die nach dem Abschalten eines Kernreaktors aufgrund des radioaktiven Zerfalles frei wird, lassen sich Kernreaktoren, die ein Notkühlsystem vorgegebener Kühllei-stung haben, mit höherer maximaler Nutzleistung betreiben als es aufgrund der bisherigen Annahmen als zulässig erachtet worden ist. In entsprechender Weise ist es bei der Neukonstruktion eines Kernkraftwerks möglich, bei vorgege-bener Nennleistung mit einem Notkühlsystem kleinerer Leistung auszukommen, als es bisher für nötig erachtet und durch die Sicherheitsnormen festgelegt war.

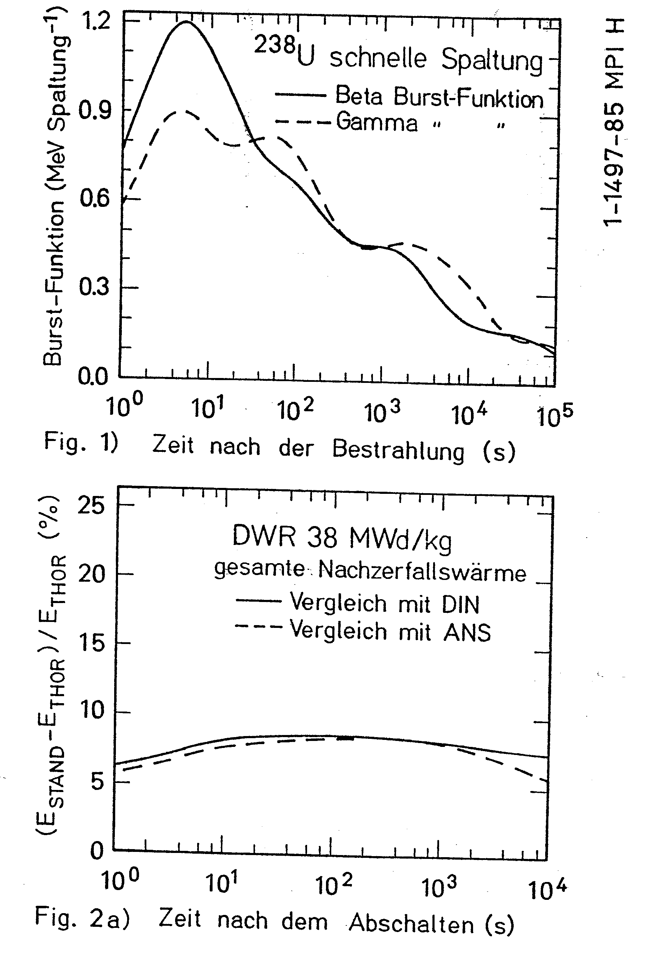

Fig. 2a) Zeit nach dem Abschalten (s)

EP 0 176 105 A2

DR. DIETER v. BEZOLD
DIPL. ING. PETER SCHÜTZ
DIPL. ING. WOLFGANG HEUSLER
PATENTANWÄLTE
MARIA-THERESIA-STRASSE 22
POSTFACH 86 02 60
D-8000 MUENCHEN 86

ELASSEN BEIM
OPÄISCHEN PATENTAMT

OPEAN PATENT ATTORNEYS

IDATAIRES EN BREVETS EUROPÉENS

0176105

TELEFON (089) 4706006
TELEX 522638
TELEGRAMM SOMBEZ
FAX GR II + III (089) 2716063

25. September 1985
11670 EP Dr.v.B/Schä/59

Max-Planck-Gesellschaft
zur Förderung der Wissenschaften e.V.,
Bunsenstrasse 10, D-3400 Göttingen (DE)

## Verfahren zum Betrieb eines Kernreaktors und Kernreaktor zur Durchführung des Verfahrens

Für die Bemessung der Kühlleistung des Notkühlsystems eines Kernreaktors bzw. für das Verhältnis der maximalen Nutzleistung im Dauerbetrieb (Nennleistung) des Reaktors zur Kühlleistung des Notkühlsystems des Reaktors ist die sogenannte Nachzerfallswärme maßgeblich, d.h. die Wärmemenge, die durch den radioaktiven Zerfall der Spaltprodukte freigesetzt wird, nachdem der Reaktor durch Unterbrechung der Kettenreaktion abgeschaltet worden ist. Die Abführung der Nachzerfallswärme ist, insbesondere für einen Leichtwasser-Reaktor (LWR), während der ersten Minuten nach dem Abschalten des Reaktors am kritischsten. Unmittelbar nach dem Abschalten entspricht die Nachzerfallswärme einer Wärmeleistung von etwa 7% der Betriebsleistung des Reaktors vor dem Abschalten. Bei einem Druckwasserreaktor würde die Nachzerfallswärme bei Ausfall der Kühlsysteme innerhalb von 50 Sekunden zum Schmelzen der Umhüllungen der Brennelemente führen. Bei einem Leichtwasser-Reaktor bestimmt typischerweise die während der ersten 200 Sekunden nach dem Abschalten freiwerdende Nachzerfallswärme die erforderliche Notkühlleistung des Reaktors.

RO MÜNCHEN NR. 691 48-800 - BANKKONTO HYPOBANK MÜNCHEN (BLZ 700 200 40) KTO. 60 60 257 378 SWIFT HYPO DE MM

Die Nachzerfallswärme setzt sich im wesentlichen aus drei Anteilen zusammen, die folgende Ursachen haben:

1) den Nachzerfall der Spaltprodukte;

2) den Nachzerfall der Elemente, wie $^{239}U$, $^{239}Np$ und weiterer Aktiniden, die durch Neutroneneinfang aus dem Kernbrennstoff entstanden sind, und

3) den Nachzerfall von Isotopen, die durch Neutroneneinfang der Spaltprodukte entstanden sind.

Die 1984 und 1985 gültigen Kernreaktor-Sicherheitsbestimmungen, wie die DIN-Norm 25463 (Juli 1982) und die ANS-Norm ANSI/ANS-5.1-1979 /1985, die Nachzerfallswärme und damit letztlich die Mindest-Kühlleistung des Notkühlsystems eines Kernreaktors in Abhängigkeit von der Nennleistung des Reaktors, also der maximal zulässigen Nutzleistung, die dem Reaktor im normalen Betrieb entnommen werden darf, festlegen, beruhen auf verhältnismäßig unsicheren Annahmen. Die bisher zur Verfügung stehenden experimentellen Informationen sind unvollständig und reichen daher für eine genaue Berechnung der Nachzerfallswärme, insbesondere für die ersten Minuten nach dem Abschalten, nicht aus, wie z. B. in dem Bericht MPI H-1985-V14 des Max-Planck-Instituts für Kernphysik, Heidelberg (DE) dargelegt ist. Auch theoretisch war die Nachzerfallswärme bisher nur recht ungenau vorhersagbar, da man eine ganze Anzahl von Vereinfachungen machen mußte und insbesondere hinsichtlich des ß-Zerfalles der in Betracht kommenden Nuklide nur unvollkommene Beschreibungen existierten, wie ebenfalls in dem oben erwähnten Bericht diskutiert ist.

Die Folge hiervon ist eine erhebliche Überdimensionierung der Reaktor-Notkühlsysteme, wie sich aufgrund der der Erfindung zugrundeliegenden neuen und genaueren Daten ergibt, die auf einer genaueren Berechnung des ß-Zerfalles der beteiligten Nuklide beruhen.

Die vorliegende Erfindung behebt diesen Nachteil dadurch, daß ein Kernreaktor, der für eine maximale Nutzleistung (Nennleistung) ausgelegt ist und ein Notkühlsystem mit vorgegebener Kühlleistung zur Abführung der Nachzerfallswärme hat, wobei die Nachzerfallswärme-Kühlleistung ein vorgegebener Bruchteil der maximal zulässigen Nutzleistung oder Nennleistung ist, so betrieben wird, daß der besagte Bruchteil kleiner als der durch die 1984 gültigen Sicherheitsbestimmungen festgelegte Wert ist.

Der besagte Bruchteil kann vorteilhafterweise mindestens 1%, vorzugsweise mindestens 2% oder 3% kleiner als der durch die Sicherheitsbestimmungen festgelegte Wert sein.

Im allgemeinen wird der besagte Bruchteil höchstens 10% kleiner als der durch die Sicherheitsbestimmungen festgelegte Wert sein, in manchen Fällen wird die obere Grenze der Reduzierung bei 8%, 6% oder etwa 5% liegen.

Dieses neue Verfahren zum Betrieb eines Kernreaktors ist wirtschaftlicher als die bekannten Verfahren, was bei den vorhandenen und zukünftigen Kernkraftwerkskapazitäten zu großen Einsparungen führt.

Ferner werden durch die Erfindung Kernreaktoren oder Kernkraftwerke angegeben, die sich hinsichtlich der für vorgegebene Anlagekosten erzielbaren Nutzleistung oder bei vorgegebener Nutzleistung hinsichtlich der Anlagekosten vorteilhaft von den bekannten Kernreaktoren unterscheiden, da das Verhältnis von maximaler Nutz- oder Nennleistung zur Notkühlleistung größer ist als es bisher für notwendig erachtet wurde.

Die Lehren der vorliegenden Erfindung basieren auf neuen und zuverlässigeren Daten, die hinsichtlich der Größe der Nachzerfallswärme gewonnen wurden, und zwar hinsichtlich aller drei oben erwähnten Anteile. Es wurde nämlich festgestellt, daß die Nachzerfallswärme geringer ist, als aufgrund der bisherigen Messungen und Rechnungen angenommen werden müßte. Dadurch wird es nun möglich, einen Reaktor, der ein Notkühlsystem vorgegebener Kühlleistung hat, mit höherer Nutz- oder Nennleistung im Dauerbetrieb zu betreiben als bisher, was vor allem hinsichtlich existierender Leichtwasser-Kernreaktoren, Schwerwasser-Kernreaktoren und gasgekühlter Kernreaktoren, wie sie im großen Umfang zur Stromerzeugung verwendet werden, von großer Bedeutung ist und durch eine einfache Modifikation der Regelungs- und Sicherheitssysteme erreicht werden kann.

Ferner können bei vorgegebener Nennleistung die Notkühlsysteme des Reaktors kleiner ausgelegt werden als es bisher für nötig erachtet wurde. Letzteres ist ebenfalls von beträchtlicher Bedeutung für Leichtwasser-Kernreaktoren, Schwerwasser-Kernreaktoren und gasgekühlte Reaktoren. Das obige gilt auch für hochkonvertierende Leichtwasser-Reaktoren, Hochtemperatur-Reaktoren und Schnelle Brüter, für die bisher praktisch keine Nachzerfallswärmedaten vorlagen.

Im folgenden wird die Erfindung unter Bezugnahme auf die Zeichnungen näher erläutert. Es zeigen:

Fig. 1 den zeitlichen Verlauf der sogenannten Burst-Funktion für $^{238}U$;

Fig. 2a eine graphische Darstellung der prozentualen Überbewertung der bis zu einem vorgegebenen Zeitpunkt ab Abschalten des Reaktors freigewordenen Nachzerfallswärme bei der oben genannten DIN-Norm (ausgezogene Kurve) bzw. ANS-Norm (gestrichelte Kurve), bezogen auf die neu ermittelte Nachzerfallswärme $E_{THOR}$, auf der die Erfindung basiert, für einen Druckwasserreaktor (DWR) mit einem Abbrand von 38 MWd pro Kilogramm Kernbrennstoff, der bei diesem Beispiel aus angereichertem Uran (3,4 % $^{235}U$) bestand;

Fig. 2b und Fig. 2c Diagramme entsprechend Fig. 2a für Abbrände von 19 MWd/kg bzw. 53,4 MWd/kg;

Fig. 3 Kurven für den Druckwasser-Reaktor gem. Fig. 2a, welche den Unterschied des auf dem Neutroneneinfang der Spaltprodukte (ausgezogene Kurve) bzw. der Aktiniden (gestrichelte Kurve) beruhenden Anteils der Nachzerfallswärme, bezogen auf die ANS-Norm zeigen;

Fig. 4   Kurven entsprechend Fig. 3 für die DIN-Norm.

Fig. 5   Diagramme entsprechend Fig. 2a für den Fall eines Siedewasser-Kernreaktors (SWR) und einen Abbrand von 23 MWd/kg des bei Fig. 2a erwähnten Kernbrennstoffes.

Fig. 6   Diagramme entsprechend Fig. 2a für einen hochkonvertierenden Leichtwasserreaktor (fortgeschrittenen Druckwasser-Reaktor, FDWR) und einen Abbrand von 38,4 MWd/kg des Kernbrennstoffes folgender Zusammensetzung:

   0,20 % $^{235}U$,
   88,65 % $^{238}U$,
   6,44 % $^{239}Pu$,
   2,96 % $^{240}Pu$,
   1,06 % $^{241}Pu$,
   0,69 % $^{242}Pu$.

Fig. 7   Diagramme entsprechend Fig. 2a für den Fall eines Schwerwasserreaktors des Typs "CANDU" und einen Abbrand von 15,1 MWd/kg des aus natürlichem Uran bestehenden Kernbrennstoffes.

Fig. 8, bestehend aus Teil 1 bis 18, eine Tabelle mit einer Liste von Daten für die im ANHANG erläuterte Berechnung der Nachzerfallswärme, dabei sind:

$Z$      die Kernladungszahl des betreffenden Isotops,

$A$      die Massenzahl des Isotops,

$K$      eine Angabe darüber, ob das Isotop vom Grundzustand (G) oder einem isomeren Zustand (I) zerfällt,

$\lambda^{tot}$      die Gesamtzerfallsrate des Isotops (Z,A,K) pro Sek.,

$P_{\beta^-(G)}$      die Wahrscheinlichkeit eines Zerfalles durch $\beta^-$-Emission, der schließlich den Grundzustand des Tochterkernes bevölkert,

$P_{\beta^-(I)}$      die Wahrscheinlichkeit eines Zerfalles durch $\beta^-$-Emission, der schließlich einen isomeren Zustand des Tochterkernes bevölkert,

$P_{\beta^+(G)}$      die Wahrscheinlichkeit eines Zerfalles durch $\beta^+$-Emission, der schließlich den Grundzustand des Tochterkernes bevölkert,

$P_{\beta^+(I)}$      die Wahrscheinlichkeit eines Zerfalles durch $\beta^+$-Emission, der schließlich einen isomeren Zustand des Tochterkernes bevölkert,

$P_\alpha$      die Wahrscheinlichkeit eines $\alpha$-Zerfalles,

$P_\gamma$      die Wahrscheinlichkeit eines $\gamma$-Zerfalles eines isomeren Zustandes,

$P_{SF}$      die Wahrscheinlichkeit eines Zerfalles durch spontane Spaltung,

$P_{1n}$      die Wahrscheinlichkeit einer $\beta^-$-verzögerten Ein-Neutronen-Emission,

$P_{2n}$      die Wahrscheinlichkeit einer $\beta^-$-verzögerten Zwei-Neutronen-Emission,

$E_{Total}$      die gesamte im Reaktorkern deponierte Zerfallsenergie (Zerfallswärme) aus dem Zerfall des Isotops (Z,A,K) in MeV.

Wie das Isotopeninventar eines gegebenen Kernreaktors zu einem bestimmten Zeitpunkt während des Betriebes des Reaktors und nach dem Abschalten des Reaktors als Funktion der Betriebsparameter und der Betriebsdauer des Reaktors, sowie die Isotopenverteilung in einem gegebenen Kernbrennstoff nach kurzzeitiger Bestrahlung mit Neutronen berechnet werden kann, ist bekannt, siehe z. B. die Veröffentlichung von A. Tobias, Progr. Nucl. Energy, 5, 1-93 (1980). Die Nachzerfallswärme, die zur Zeit t nach dem Abschalten (t=0) bzw. nach Bestrahlung frei wird, kann dann durch Integration über das Isotopeninventar zum Zeitpunkt t und über die Energiebeiträge der verschiedenen Isotope berechnet werden. Weitere Integration über die Zeit t vom Zeitpunkt des Abschaltens (t=0) an ergibt die totale Restwärme $E_{THOR}$, die seit Abschalten bis zum Zeitpunkt t freigesetzt wird.

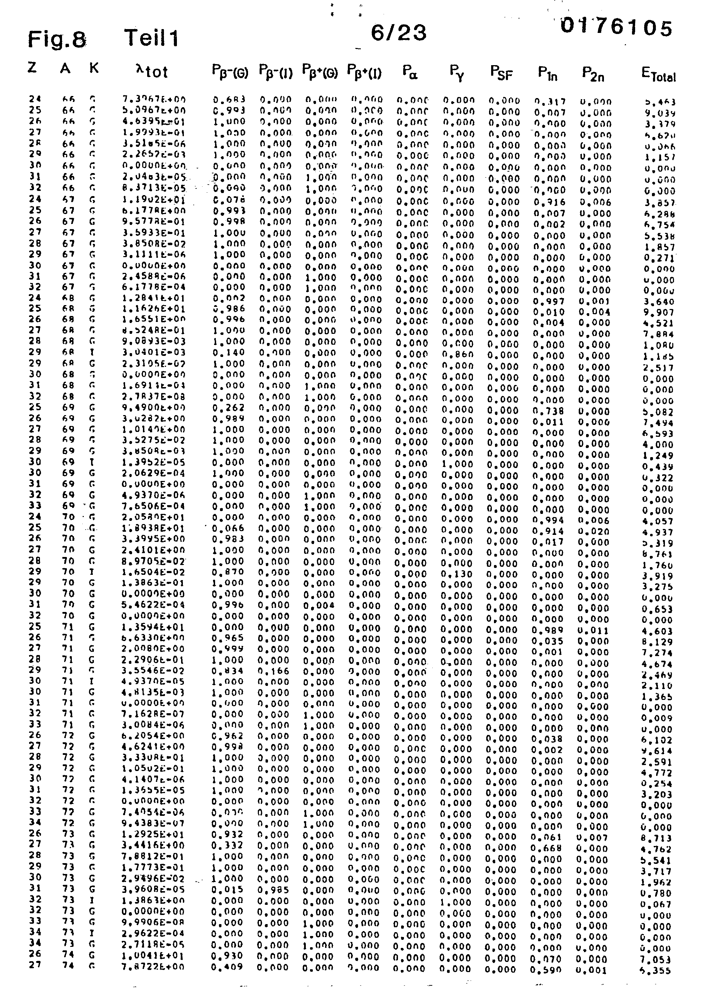

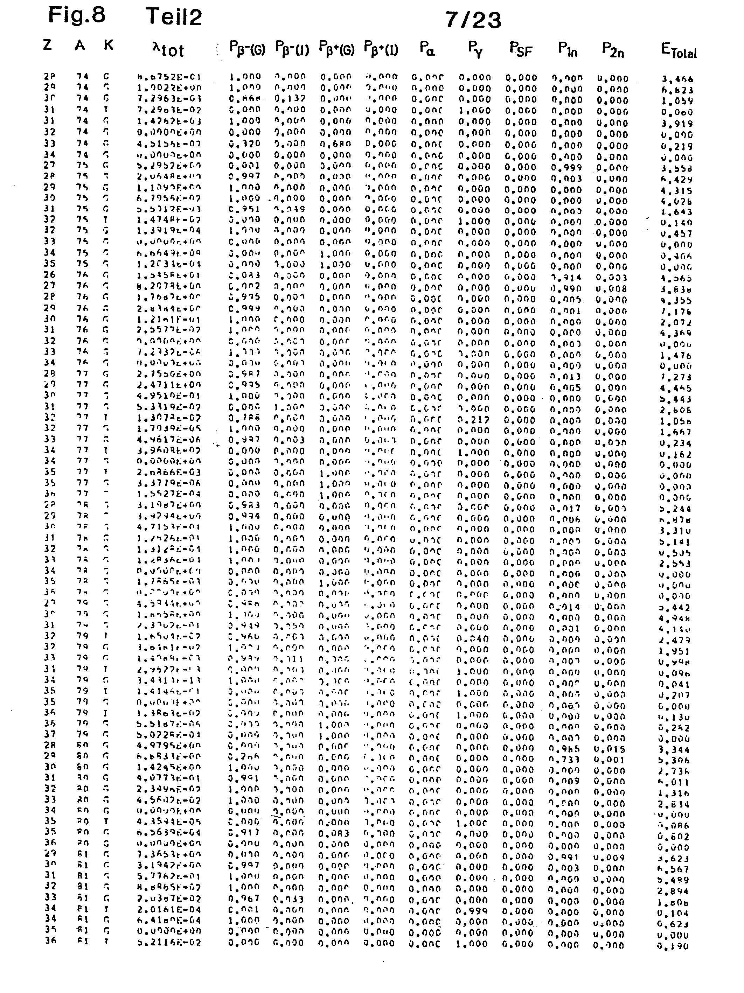

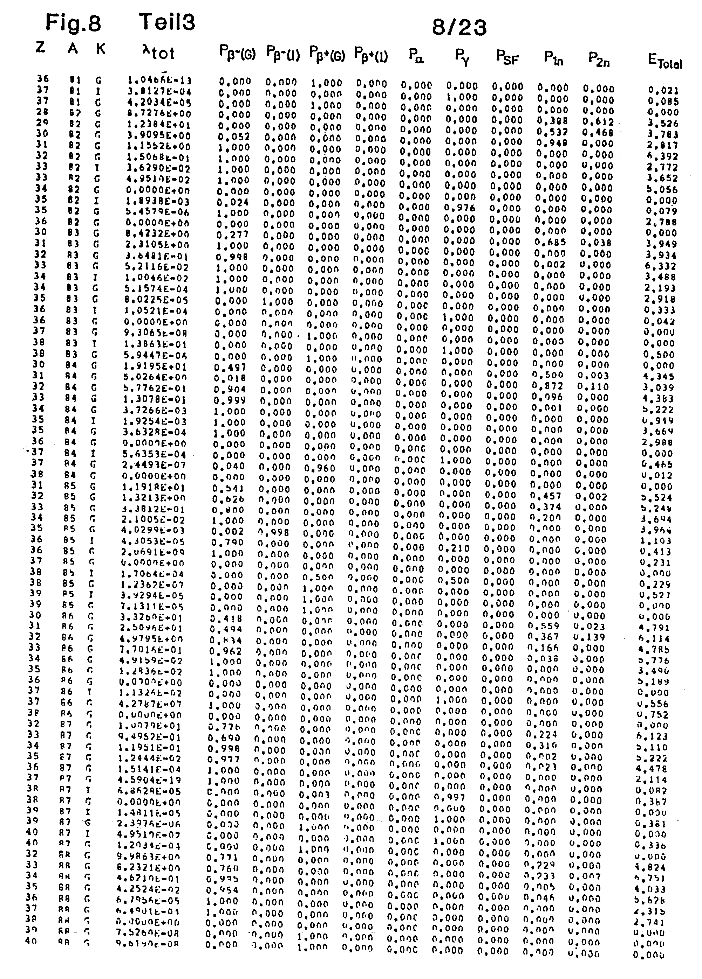

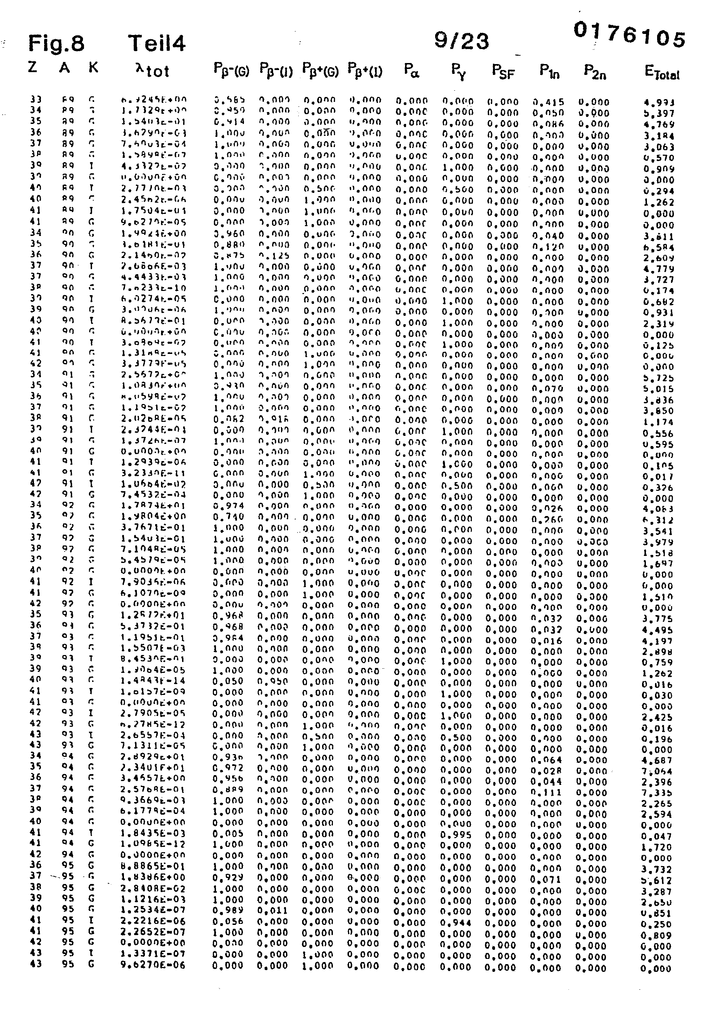

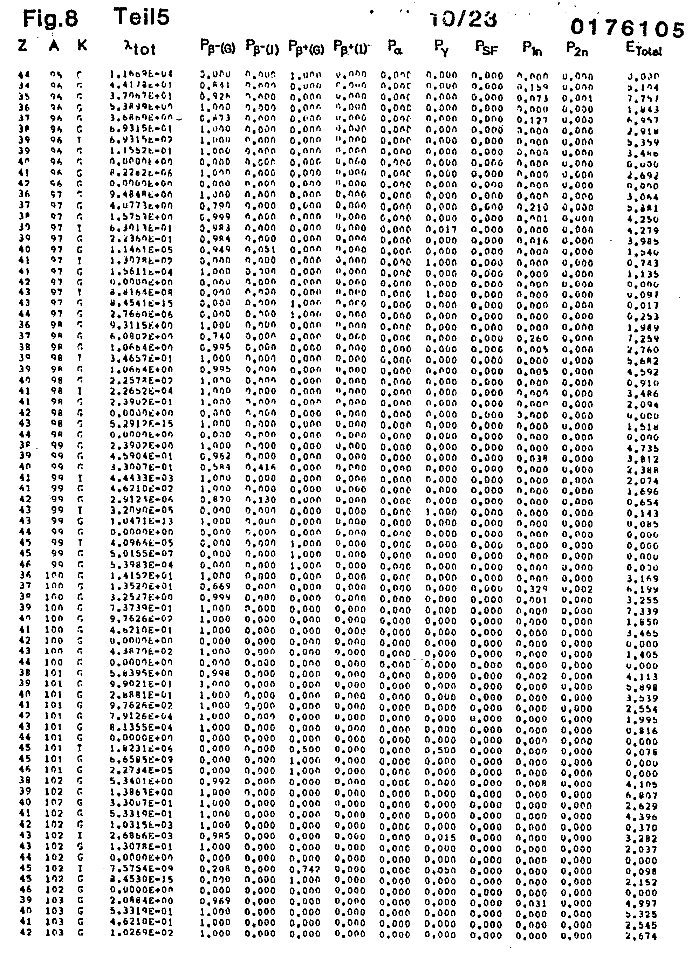

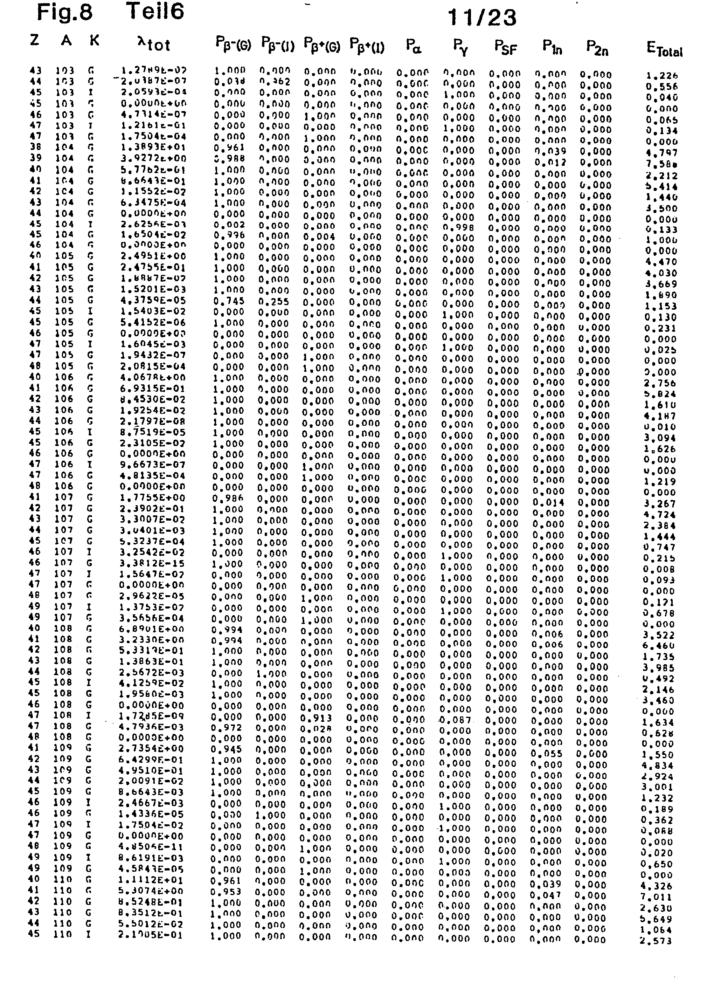

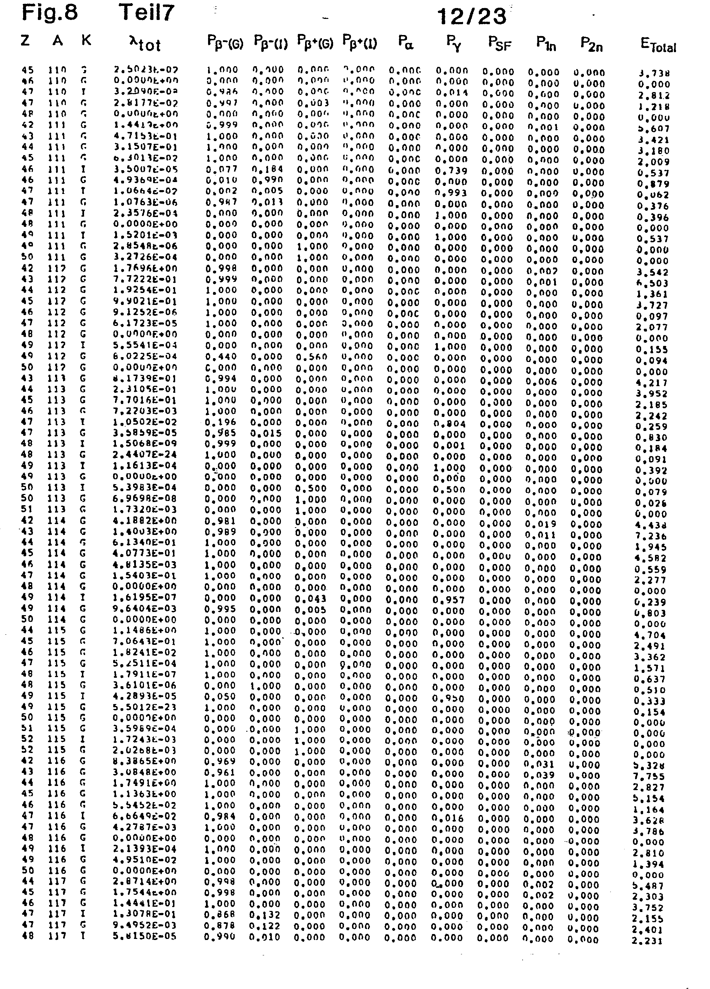

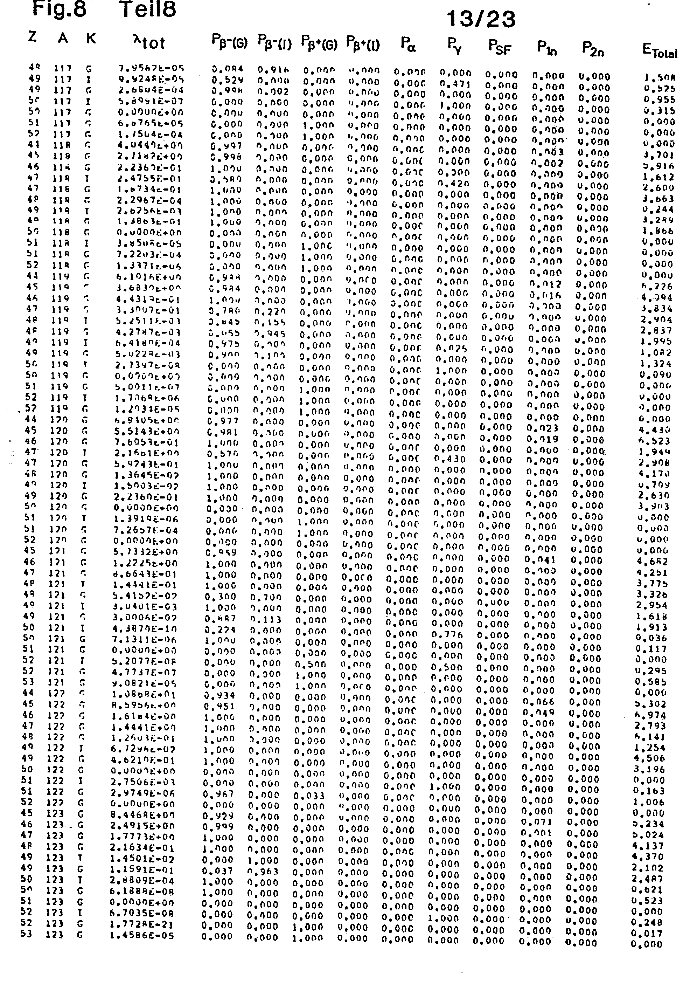

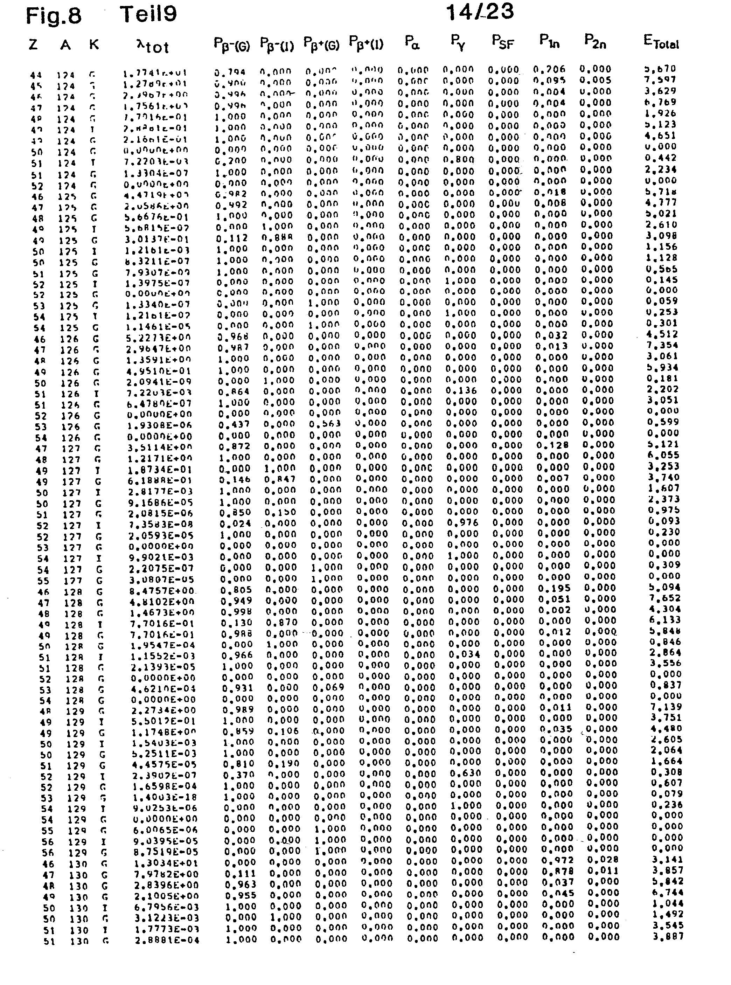

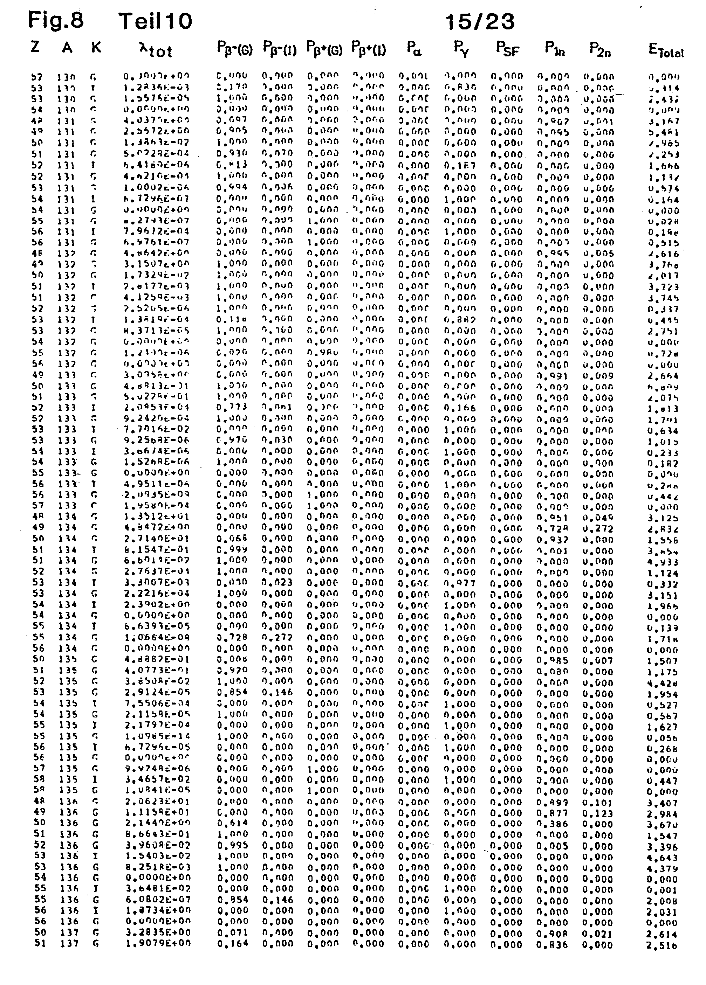

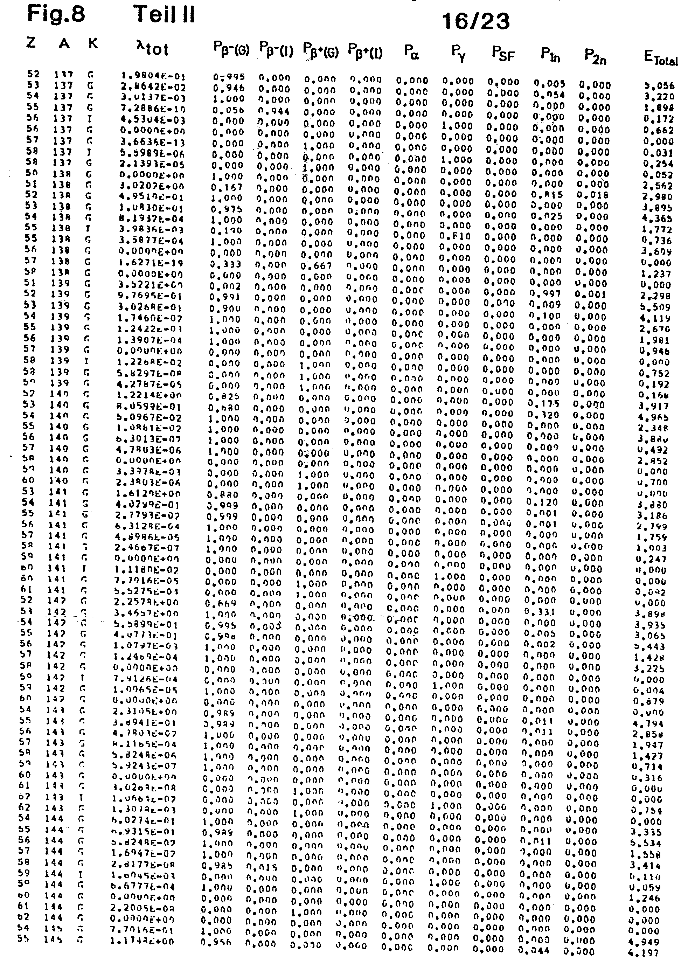

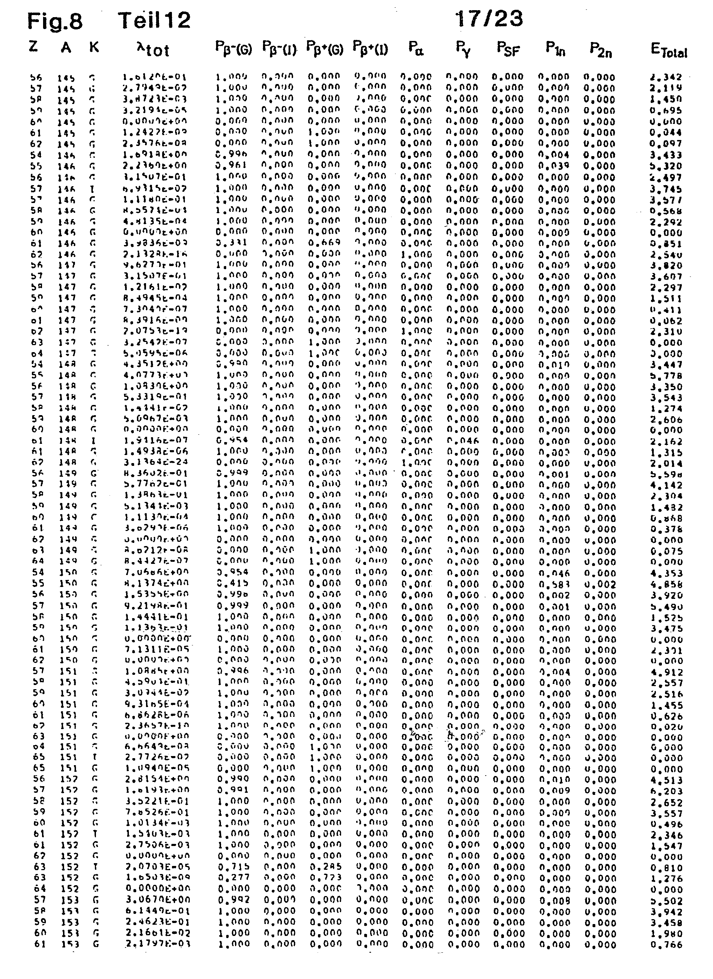

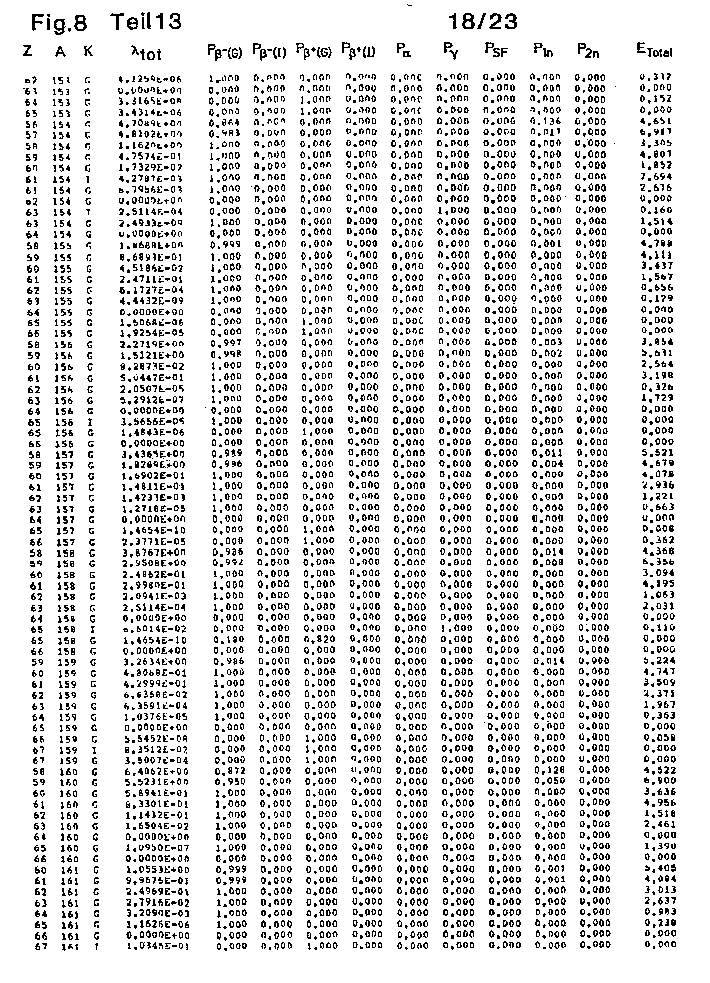

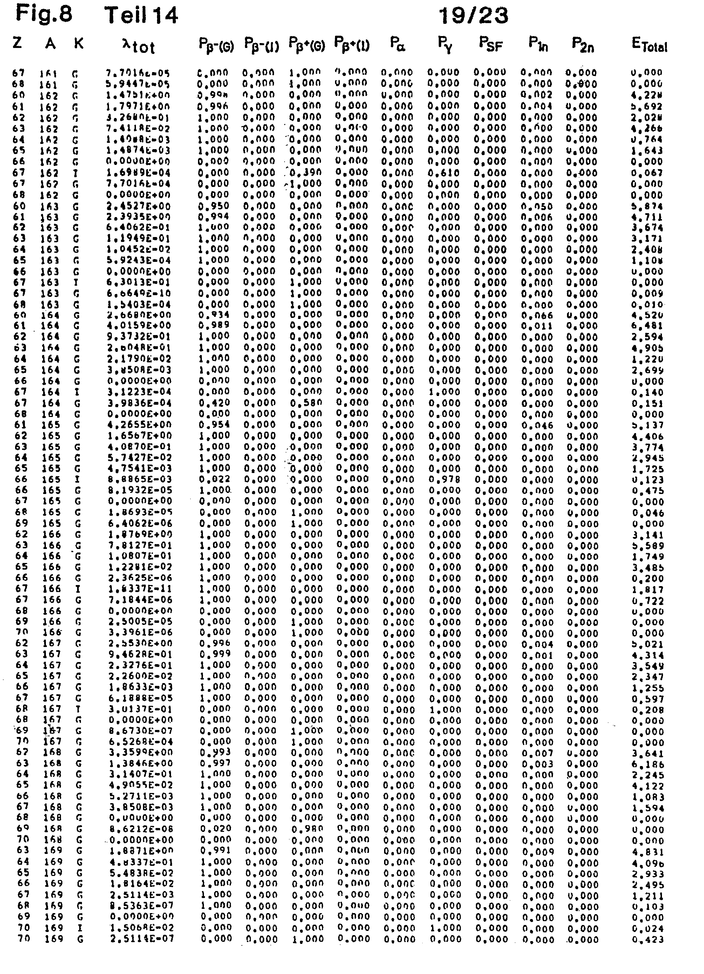

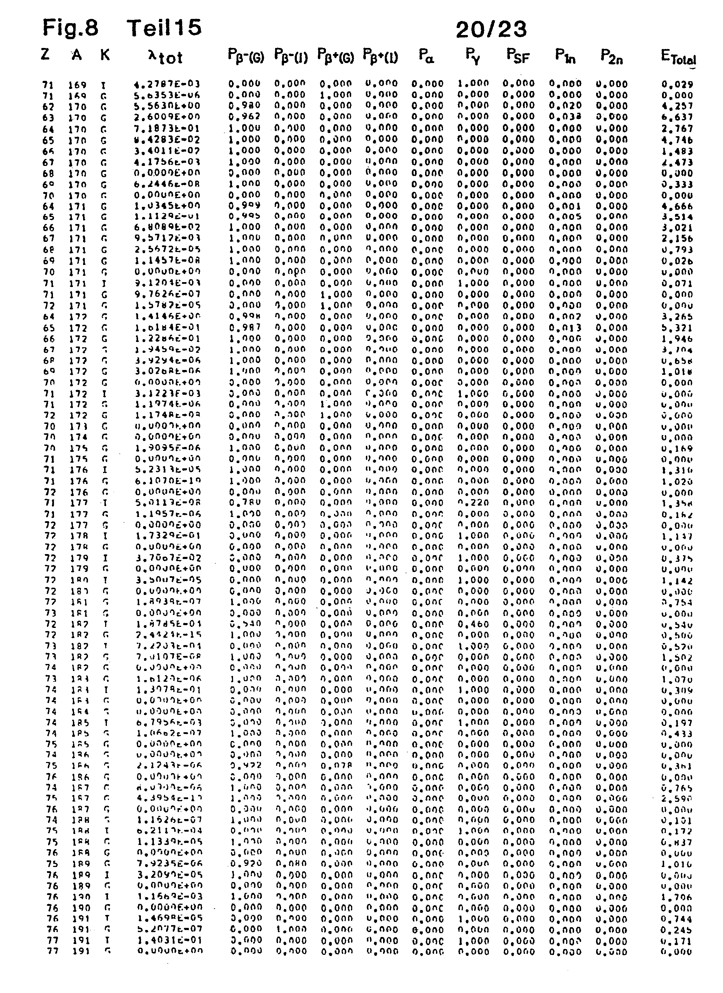

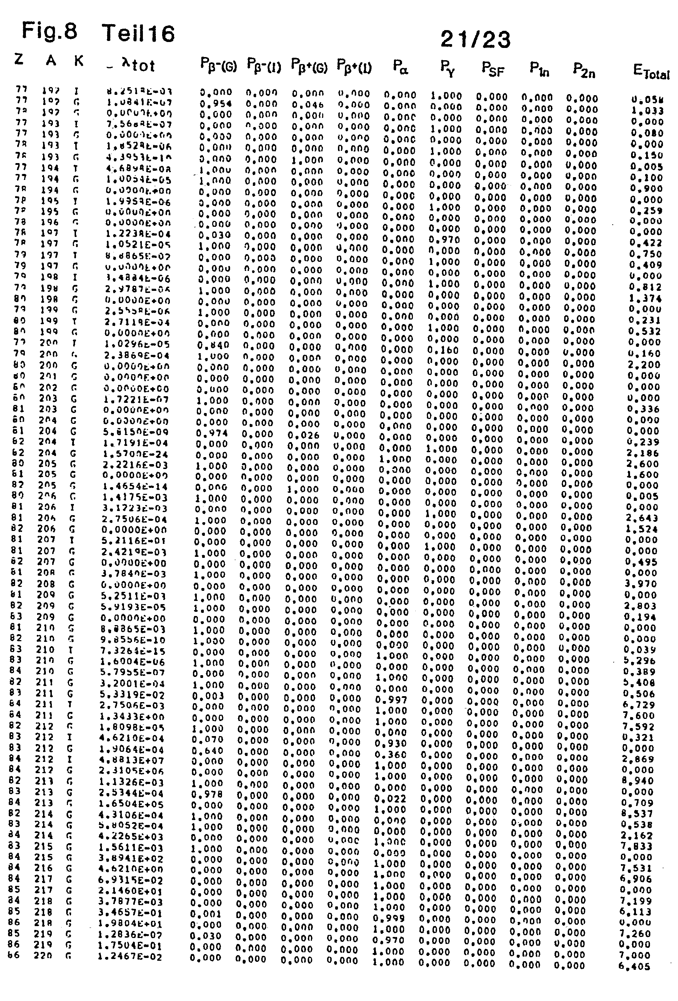

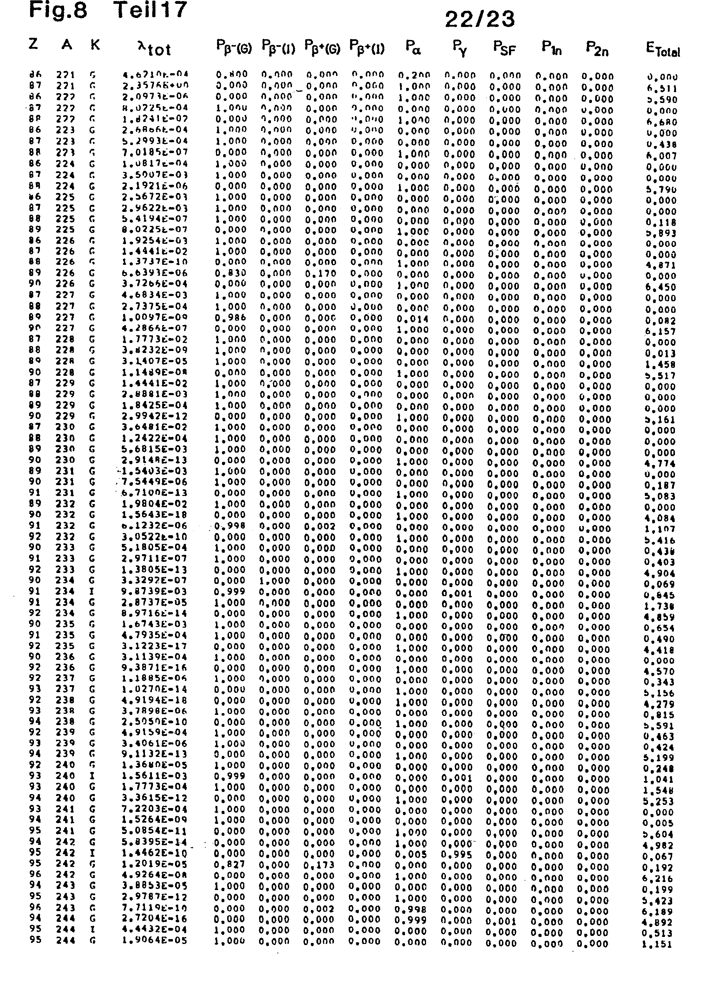

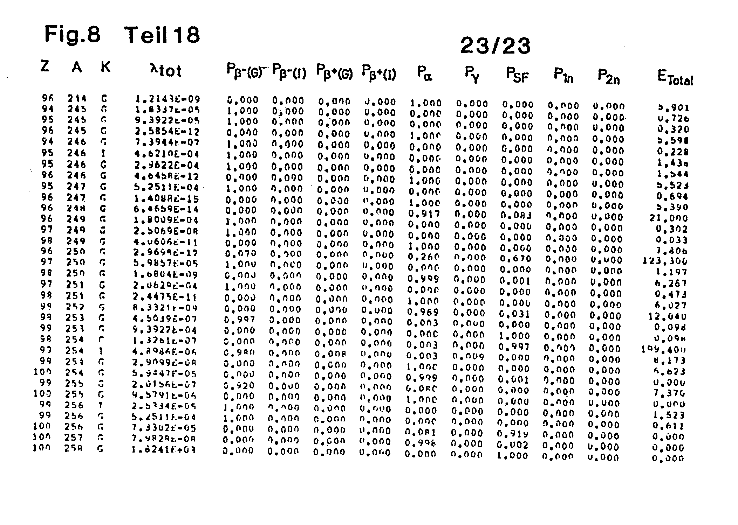

Die vorliegende Erfindung basiert nun auf neuen und zuverlässigeren Daten des Nachzerfallswärme-Beitrages von Isotopen, für die bisher keine genügend genauen experimentellen Daten vorlagen. Diese Beiträge zur Nachzerfallswärme sind in der Tabelle der Fig. 8 enthalten und wurden mittels eines mikroskopischen Kernmodelles gewonnen, das für andere Zwecke im Prinzip bekannt war, jedoch zur Berechnung der Nachzerfallswärmen modifiziert und erweitert wurde. Die Zerfallswärmedaten für die obige Berechnung der Gesamt-Nachzerfallswärme werden also der Tabelle der Fig. 8 entnommen, die neue und zuverlässigere Werte enthält.

In Fig. 1 ist als erstes spezielles Beispiel für die mit den neuen Daten gewinnbare zuverlässigere Information der zeitliche Verlauf der sogenannten Burst-Funktion, d.h. der mit der seit Abschaltung des Reaktors verstrichenen Zeit t multiplizierten Nachzerfallswärme pro Spaltungsereignis als Funktion der Zeit t für die Spaltung von $^{238}U$ durch schnelle Neutronen dargestellt, wobei die ausgezogene Kurve den auf der Beta-Strahlung beruhenden Anteil und die gestrichelte Kurve den auf der Gamma-Strahlung beruhenden Anteil der Nachzerfallswärme bedeuten.

-8-

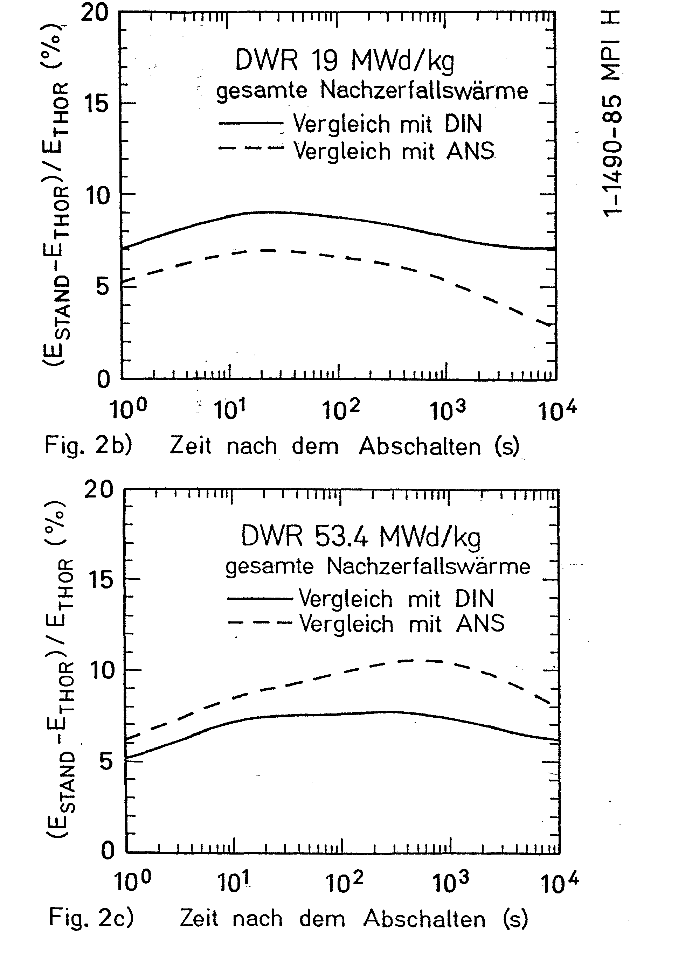

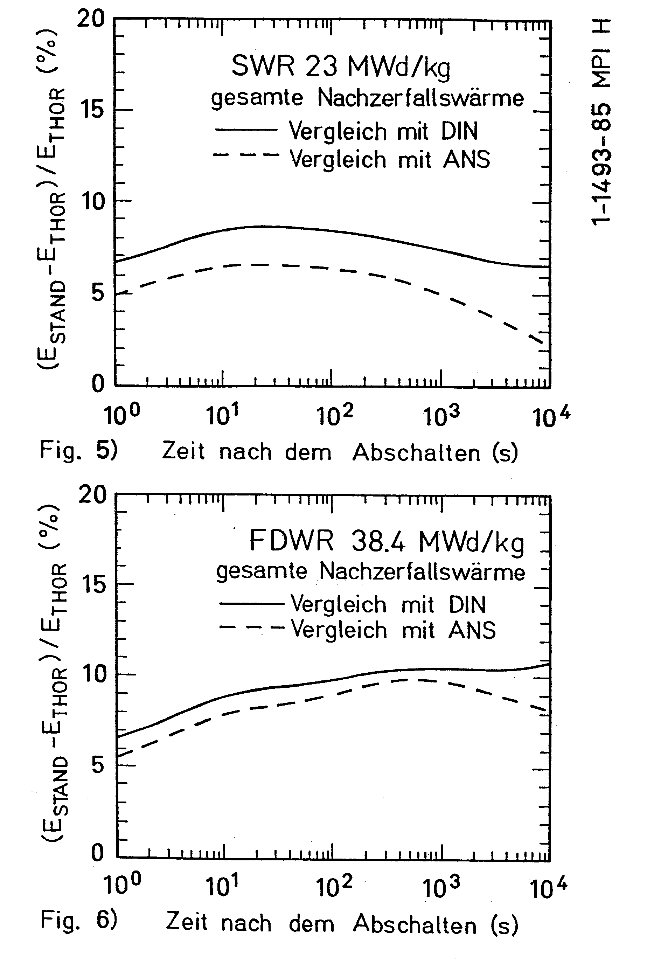

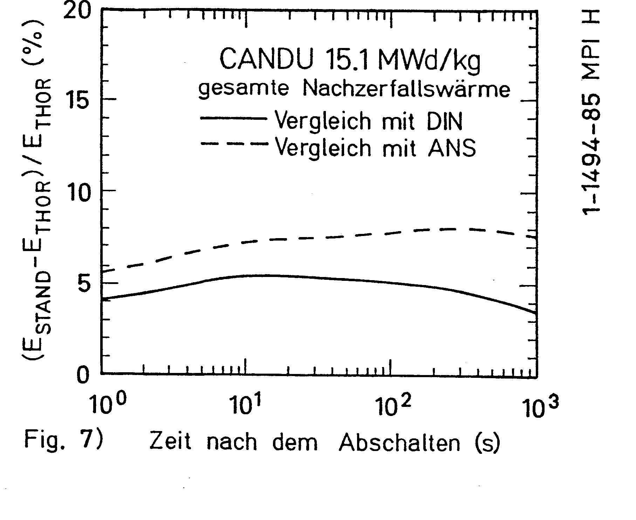

Wie weiterhin Fig. 2a am Beispiel eine Druckwasserreaktors mit einem derzeit üblichen mittleren Abbrand von 38 MWd/kg zeigt, liegen die mit den neuen Zerfallswärme-Daten gewonnenen Werte für die totale Nachzerfallswärme überraschenderweise größenordnungsmäßig 6 - 8 % unter den bisher als richtig angesehenen und den Sicherheitsnormen zugrundegelegten Werten. Entsprechendes gilt auch für kleinere und, was noch wichtiger ist, für größere Abbrandwerte, wie die Fig. 2b bzw. Fig. 2c zeigen, sowie für andere Kernreaktortypen, wie aus den Fig. 5 bis 7 hervorgeht.

Die neuen Werte ermöglichen es also, die Nutzleistung bei einem Reaktor mit einem Notkühlsystem vorgegebener Kühlleistung entsprechend zu erhöhen bzw. bei Neukonstruktion eines Reaktors das Notkühlsystem kleiner zu bemessen, als es bisher für notwendig erachtet worden ist, ohne daß hierdurch die Sicherheit beeinträchtigt wird. Schon eine Erhöhung der Nutzleistung bzw. Verringerung der Notkühlleistung um nur 1 % bringt schon ganz erhebliche wirtschaftliche Vorteile mit sich, entsprechend höhere Vorteile ergeben sich bei 2%, 3%, 4%, 5% u.s.w.

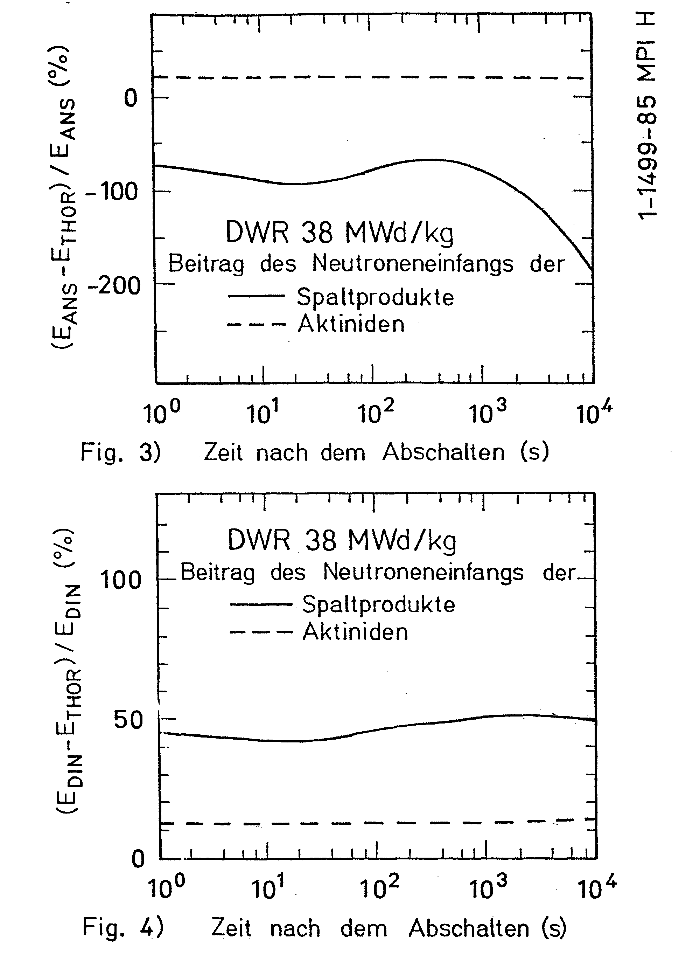

Die Fig. 3 und 4 zeigen am Beispiel der Beiträge der Nachzerfallswärme, die auf dem Neutroneneinfang der Spaltprodukte (ausgezogene Kurven) bzw. der Aktiniden (gestrichelte Kurven) beruhen, daß der ANS- bzw. der DIN-Norm eine erhebliche Fehleinschätzung dieser Beiträge zugrunde lag, wobei die Beiträge nicht immer überschätzt, sondern im Falle des Beitrages der Nachzerfallswärme aufgrund des Neutroneneinfanges von Spaltprodukten bei der ANS-Norm sogar unterschätzt wurden. Entsprechendes gilt auch in mehr oder weniger großem Maße für die anderen Beiträge zur Nachzerfallswärme. Erst die richtige Ermittlung aller eingangs genannten Beiträge, auf der die vorliegende Erfindung beruht, ermöglicht es, die Nachzer-fallswärme-Abführungskapazität des Notkühlsystems bei vorgegebener Nennleistung auf den jeweils optimalen Wert zu reduzieren oder bei vorgegebener Notkühlleistung den Reaktor mit einer entsprechend höheren maximalen Nutzleistung (Nennleistung) zu betreiben.

Die Fig. 2a, 3 und 4 zeigen, daß für einen Druckwasserreaktor mit einem Abbrand von 38 MWd/kg die Reduzierung der Nachzerfallswärme etwa 6 bis 8% beträgt. Da das Notkühlsystem nach dem Abschalten auch noch die im Reaktorkern enthaltene spezifische Wärme abführen muß, die in der kritischen Zeitspanne in derselben Größenordnung liegt wie die Nachzerfallswärme, läßt sich die maximale Nutzleistung des angenommenen Druckwasserreaktors um etwa 3% bis 4 % erhöhen, bei anderen Betriebsdaten gegebenenfalls um 5 % oder mehr.

Bei anderen Reaktortypen als dem als Beispiel genannten Druckwasserreaktor und bei anderen Reaktor-Betriebsdaten werden sich im allgemeinen etwas andere Werte ergeben - wie in den Fig. 2b, 2c und 5 bis 7 beispielhaft gezeigt - so daß der Bruchteil der maximal zulässigen Reaktorleistung, der als Nachzerfallswärmeabführungsleistung des Notkühlsystems zur Verfügung gestellt werden muß, um bis zu 5%, 6%, 8%, 10% und ggf. mehr kleiner sein kann, als sich aus den derzeitigen, also 1984/1985 gültigen Normen bzw. Sicherheitsbestimmungen ergibt, wie den oben erwähnten Normen DIN 25463 (Juli 1982) und ANSI/ANS-5.1-1979 sowie anderen entsprechenden nationalen Normvorschriften.

## ANHANG

Die Berechnung des Nukliden- oder Isotopeninventars eines Kernreaktors zu einem beliebigen Zeitpunkt während des Betriebes oder nach dem Abschalten des Reaktors und die Berechnung der Nachzerfallswärme in Abhängigkeit von der Betriebsdauer des Reaktors und der nach dem Abschalten verstrichenen Zeit kann ähnlich erfolgen, wie es von A. Tobias in Prog. Nucl. Energy 5, 1-93, 1980 beschrieben ist. Auf diese Veröffentlichung wird hier ausdrücklich Bezug genommen.

Die Rechnungen sollten jedoch zweckmäßigerweise mit einem auf $10^{-308}$ bis $10^{308}$ erweiterten Wertbereich durchgeführt werden.

Für die Berechnung des Isotopeninventars an einem beliebigen Punkt im Reaktor sind also lineare Zerfallsketten der Form

$$N_1 \xrightarrow{\lambda_1} N_2 \xrightarrow{\lambda_2} N_3 \xrightarrow{\lambda_3} N_4 \xrightarrow{\lambda_4} \ldots \longrightarrow N_i \xrightarrow{\lambda_i} \ldots \qquad (1)$$

aufzustellen und zu lösen. Hierbei ist $N_i$ die Anzahl der Kerne des Nuklids oder Isotops i, das durch die Kernladung Z, die Atommasse A und den bei Fig. 8 definiertem Typ K spezifiziert ist. Für ein beliebiges Isotop i in einer solchen Zerfallskette ist die zeitliche Änderung von $N_i$ im Zeitpunkt t durch die folgende Gleichung gegeben:

$$\frac{d}{dt}(N_i) = -\lambda_i^{tot} N_i + \alpha_i F + \gamma_{i-1} N_{i-1} \qquad (2)$$

Dabei ist $\lambda_i^{tot}$ die gesamte Zerfallsrate des Isotops i pro Sekunde, die für jedes Isotop i (Z,A,K) in der Tabelle der Fig. 8 aufgeführt ist, und

$$\lambda_i^{tot} = \lambda_i^{\beta^-(G)} + \lambda_i^{\beta^-(I)} + \lambda_i^{\beta^+(G)} + \lambda_i^{\beta^+(I)} + \lambda_i^{SF} + \lambda_i^{\alpha} + \lambda_i^{\gamma}$$

$$+ \lambda_i^{1n} + \lambda_i^{2n} + \sigma_i^n \phi + \sigma_i^f \phi \; ;$$

$\gamma_{i-1}$ ist eine der partiellen Zerfallsraten:

$$\lambda_i^{\beta^-(G)}, \; \lambda_i^{\beta^-(I)}, \; \lambda_i^{\beta^+(G)}, \; \lambda_i^{\beta^+(I)}, \; \lambda_i^{\gamma}, \; \lambda_i^{\alpha}, \; \lambda_i^{SF}, \; \lambda_i^{1n}, \; \lambda_i^{2n}, \; \sigma_i^n \phi,$$

mit der das (i-1)-te Isotop zur Zerfallskette beiträgt.

$$\lambda_i^x = \lambda_i^{tot} \, P_i^x \; ;$$

Hierbei steht x für einen der Indizes

$$\beta^-(G), \; \beta^-(I), \; \beta^+(G), \; \beta^+(I), \; \alpha, \; \gamma, \; SF, \; 1n, \; 2n$$

Für $P_i^x$ sind die Werte für jedes Isotop i (Z,A,K) in der Tabelle in Fig. 8 angegeben.

F ist die Spaltrate pro Sekunde,
$\alpha_i$ ist die Spaltstärke des Isotops i,
$\phi$ ist der Neutronenfluß pro $cm^2$ und Sekunde und
$\sigma_i^n$ und $\sigma_i^f$ sind die Einfangswirkungsquerschnitte (in $cm^2$) für Neutroneneinfang ohne bzw. mit nachfolgender Spaltung.

Die Spaltstärkewerte werden einer üblichen Kerndatensammlung entnommen, z.B. ENDF/B-IV, V oder VI, Brookhaven, National Lab. Beim Aufstellen der Zerfallsketten ist, wie üblich, darauf zu achten, daß die Selbsterzeugung eines Isotops unterbleibt.

Bei typischen Reaktorbedingungen ist für jede Einheitszelle im Reaktorkern ein Gleichungssystem der Form der Gleichung (2) für etwa 1400 Isotope zu lösen. Für jedes Glied einer Zerfallskette wird eine analytische Lösung der folgenden Form

$$N_1(t) = \sum_{r=1}^{1} \frac{1}{\gamma_1} \prod_{k=r}^{1} \gamma_k \left\{ Fa_r \left[ \sum_{j=r}^{1} \frac{(1 - e^{-\lambda_j^{tot} t})}{\lambda_j^{tot} \prod_{m=r}^{1} (\lambda_m^{tot} - \lambda_j^{tot})} \right] \right.$$

$$\left. + N_r^0 \left[ \sum_{j=r}^{1} \frac{e^{-\lambda_j^{tot} t}}{\prod_{m=r}^{1} (\lambda_m^{tot} - \lambda_j^{tot})} \right] \right\} \quad (3)$$

verwendet, hierin ist

$$(\lambda_m^{tot} - \lambda_j^{tot}) = 1 \text{ für } j = m.$$

Die Anfangshäufigkeiten $N^0$ und die Neutroneneinfangs-Wirkungsquerschnitte sind reaktorspezifisch und vom Betreiber anzugeben.

Während der Reaktor-Betriebszeit ändert sich die Zusammensetzung des spaltbaren Materials im Reaktor-Kern gemäß der Gleichung (3). Die damit verbundene Änderung der Parameter F und $\alpha_i$ werden dadurch berücksichtigt, daß man die Betriebszeit in Zeitintervalle mit konstanten Spaltraten und Spaltstärken unterteilt, d.h. der reale Verlauf der Reaktor-Ausgangsleistung wird durch eine Treppenfunktion angenähert ("Leistungshistogramm"). Für typische Reaktor-Betriebsbedingungen muß die Anzahl der Zeitschritte so groß gewählt werden, daß die zu berechnenden Größen nicht mehr von der Anzahl der Zeitintervalle abhängt. Die Zeitintervalle sollen klein im Vergleich zu den totalen Zerfallsraten der beteiligten Isotope sein.

Die Berechnung der Zerfallswärme H im Zeitpunkt t erfolgt durch Summation der Ergebnisse der Gleichung (3) gemäß der folgenden Gleichung (4):

$$H(t) = \sum_i \lambda_i^{tot} \ N_i(t) \ E_{Total,i} \qquad (4)$$

Die Berechnung der integralen oder Gesamt-Zerfallswärme $E_{THOR}$ vom Zeitpunkt des Abschaltens bis zu einem vorgegebenen Zeitpunkt t erfolgt durch numerische Integration der Gleichung (4) mit dem Gaußschen Integrationsverfahren. Die benötigten totalen Zerfallsenergien $E_{Total,i}$ der verschiedenen Isotope Z, A, K werden der Tabelle in Fig. 8 entnommen.

## Patentansprüche

1. Verfahren zum Betrieb eines Kernreaktors, der für eine vorgegebene maximale Nutzleistung (Nennleistung) im normalen Betrieb ausgelegt ist und ein Notkühlsystem mit vorgegebener Kühlleistung zur Abführung der Nachzerfallswärme hat, wobei die Nachzerfallswärme-Kühlleistung ein vorgegebener Bruchteil der maximal zulässigen Nutzleistung ist, **dadurch gekennzeichnet,** daß der besagte Bruchteil kleiner als der durch die 1984 gültigen Sicherheitsbestimmungen festgelegte Wert ist.

2. Verfahren nach Anspruch 1, **dadurch gekennzeichnet,** daß der Bruchteil mindestens 1% kleiner als der durch die Sicherheitsbestimmungen festgelegte Wert ist.

3. Verfahren nach Anspruch 2, **dadurch gekennzeichnet,** daß der Bruchteil mindestens 2%, vorzugsweise mindestens 3% oder mindestens 4% kleiner als der durch die Sicherheitsbestimmungen festgelegte Wert ist.

4. Verfahren nach Anspruch 1, 2 oder 3, **dadurch gekennzeichnet,** daß der Bruchteil höchstens 10% kleiner als der durch die Sicherheitsbestimmungen festgelegte Wert ist.

5. Verfahren nach Anspruch 4, **dadurch gekennzeichnet,** daß der Bruchteil höchstens 8% oder 6% oder 5% kleiner als der durch die Sicherheitsbestimmungen festgelegte Wert ist.

6. Kernreaktor zur Durchführung des Verfahrens nach Anspruch 1, mit einem Regelsystem, das die im Dauerbetrieb maximal zulässige abgegebene Nutzleistung bestimmt, und mit einem entsprechenden Notkühlsystem, **dadurch gekennzeichnet,** daß das Regelsystem so ausgelegt ist, daß die maximal zulässige entnehmbare Nutzleistung bis zu mindestens etwa 5% größer ist als der Wert, der sich bei Zugrundelegung der Kühlleistung des Notkühlsystems nach den 1984 gültigen Sicherheitsbestimmungen ergibt.

7. Kernreaktor nach Anspruch 6, **dadurch gekennzeichnet,** daß die Nennleistung maximal 5% oder maximal 6% größer ist als der durch die 1984 gültigen Sicherheitsbestimmungen festgelegte Wert.

8. Kernreaktor nach Anspruch 6 oder 7, **dadurch gekennzeichnet,** daß die Nennleistung mindestens 1%, vorzugsweise mindestens 2%, 3% oder 4% größer als die sich aus den 1984 gültigen Sicherheitsbestimmungen ergebende Leistung ist.

9. Kernreaktor zur Durchführung des Verfahrens nach Anspruch 1, mit einer vorgegebenen maximalen Nutzleistung (Nennleistung) und einem Notkühlsystem vorgegebener Kühlleistung zur Abführung der Nachzerfallswärme, wobei die Nachzerfallswärme-Kühlleistung ein vorgegebener Bruchteil der Nennleistung ist, **dadurch gekennzeichnet,** daß der besagte Bruchteil kleiner als der sich aus den 1984 gültigen Sicherheitsbestimmungen ergebende Wert ist.

10. Kernreaktor nach Anspruch 9, **dadurch gekennzeichnet,** daß der Bruchteil höchstens 10%, vorzugsweise 8%, 6% oder etwa 5% kleiner als der sich aus den Sicherheitsbestimmungen ergebende Wert ist.

11. Kernreaktor nach Anspruch 9 oder 10, **dadurch gekennzeichnet,** daß der Bruchteil mindestens 1%, vorzugsweise mindestens 2%, 3% oder 4% kleiner als der sich aus den Sicherheitsbestimmungen ergebende Wert ist.

12. Kernreaktor nach einem der Ansprüche 6 bis 11, **dadurch gekennzeichnet,** daß die Sicherheitsbestimmungen der Norm DIN 25436 oder ANSI/ANS-5.1-1979 entsprechen.

Fig. 1) Zeit nach der Bestrahlung (s)

Fig. 2a) Zeit nach dem Abschalten (s)

1-1497-85 MPI H

0176105

2/23

Fig. 2b)   Zeit nach dem Abschalten (s)

Fig. 2c)   Zeit nach dem Abschalten (s)

1-1490-85 MPI H

1-1499-85 MPI H

Fig. 3)    Zeit nach dem Abschalten (s)

DWR 38 MWd/kg
Beitrag des Neutroneneinfangs der
——— Spaltprodukte
– – – Aktiniden

Fig. 4)    Zeit nach dem Abschalten (s)

DWR 38 MWd/kg
Beitrag des Neutroneneinfangs der
——— Spaltprodukte
– – – Aktiniden

Fig. 5)   Zeit nach dem Abschalten (s)

Fig. 6)   Zeit nach dem Abschalten (s)

Fig. 7)   Zeit nach dem Abschalten (s)

# Fig.8  Teil1

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 24 | 66 | G | 7.3967E+00 | 0.683 | 0.000 | 0.000 | 0.000 | 0.000 | 0.000 | 0.000 | 0.317 | 0.000 | 5.463 |
| 25 | 66 | G | 5.0967E+00 | 0.993 | 0.000 | 0.000 | 0.000 | 0.000 | 0.000 | 0.000 | 0.007 | 0.000 | 9.039 |
| 26 | 66 | G | 4.6395E-01 | 1.000 | 0.000 | 0.000 | 0.000 | 0.000 | 0.000 | 0.000 | 0.000 | 0.000 | 3.379 |
| 27 | 66 | G | 1.9993E-01 | 1.000 | 0.000 | 0.000 | 0.000 | 0.000 | 0.000 | 0.000 | 0.000 | 0.000 | 6.620 |
| 28 | 66 | G | 3.5165E-06 | 1.000 | 0.000 | 0.000 | 0.000 | 0.000 | 0.000 | 0.000 | 0.000 | 0.000 | 0.066 |
| 29 | 66 | G | 2.2652E-03 | 1.000 | 0.000 | 0.000 | 0.000 | 0.000 | 0.000 | 0.000 | 0.000 | 0.000 | 1.157 |
| 30 | 66 | G | 0.0000E+00 | 0.000 | 0.000 | 0.000 | 0.000 | 0.000 | 0.000 | 0.000 | 0.000 | 0.000 | 0.000 |
| 31 | 66 | G | 2.0463E-05 | 0.000 | 0.000 | 1.000 | 0.000 | 0.000 | 0.000 | 0.000 | 0.000 | 0.000 | 0.000 |
| 32 | 66 | G | 8.3713E-05 | 0.000 | 0.000 | 1.000 | 0.000 | 0.000 | 0.000 | 0.000 | 0.000 | 0.000 | 0.000 |
| 24 | 67 | G | 1.1902E+01 | 0.078 | 0.000 | 0.000 | 0.000 | 0.000 | 0.000 | 0.000 | 0.916 | 0.006 | 3.857 |
| 25 | 67 | G | 6.1778E+00 | 0.993 | 0.000 | 0.000 | 0.000 | 0.000 | 0.000 | 0.000 | 0.007 | 0.000 | 6.288 |
| 26 | 67 | G | 9.5778E-01 | 0.998 | 0.000 | 0.000 | 0.000 | 0.000 | 0.000 | 0.000 | 0.002 | 0.000 | 6.754 |
| 27 | 67 | G | 3.5933E-01 | 1.000 | 0.000 | 0.000 | 0.000 | 0.000 | 0.000 | 0.000 | 0.000 | 0.000 | 5.538 |
| 28 | 67 | G | 3.8508E-02 | 1.000 | 0.000 | 0.000 | 0.000 | 0.000 | 0.000 | 0.000 | 0.000 | 0.000 | 1.857 |
| 29 | 67 | G | 3.1111E-06 | 1.000 | 0.000 | 0.000 | 0.000 | 0.000 | 0.000 | 0.000 | 0.000 | 0.000 | 0.271 |
| 30 | 67 | G | 0.0000E+00 | 0.000 | 0.000 | 0.000 | 0.000 | 0.000 | 0.000 | 0.000 | 0.000 | 0.000 | 0.000 |
| 31 | 67 | G | 2.4588E-06 | 0.000 | 0.000 | 1.000 | 0.000 | 0.000 | 0.000 | 0.000 | 0.000 | 0.000 | 0.000 |
| 32 | 67 | G | 6.1778E-04 | 0.000 | 0.000 | 1.000 | 0.000 | 0.000 | 0.000 | 0.000 | 0.000 | 0.000 | 0.000 |
| 24 | 68 | G | 1.2841E+01 | 0.002 | 0.000 | 0.000 | 0.000 | 0.000 | 0.000 | 0.000 | 0.997 | 0.001 | 3.640 |
| 25 | 68 | G | 1.1626E+01 | 0.986 | 0.000 | 0.000 | 0.000 | 0.000 | 0.000 | 0.000 | 0.010 | 0.004 | 9.907 |
| 26 | 68 | G | 1.6551E+00 | 0.996 | 0.000 | 0.000 | 0.000 | 0.000 | 0.000 | 0.000 | 0.004 | 0.000 | 4.521 |
| 27 | 68 | G | 8.5248E-01 | 1.000 | 0.000 | 0.000 | 0.000 | 0.000 | 0.000 | 0.000 | 0.000 | 0.000 | 7.884 |
| 28 | 68 | G | 9.0893E-03 | 1.000 | 0.000 | 0.000 | 0.000 | 0.000 | 0.000 | 0.000 | 0.000 | 0.000 | 1.080 |
| 29 | 68 | I | 3.0401E-03 | 0.140 | 0.000 | 0.000 | 0.000 | 0.000 | 0.860 | 0.000 | 0.000 | 0.000 | 1.165 |
| 29 | 68 | G | 2.3105E-02 | 1.000 | 0.000 | 0.000 | 0.000 | 0.000 | 0.000 | 0.000 | 0.000 | 0.000 | 2.517 |
| 30 | 68 | G | 0.0000E+00 | 0.000 | 0.000 | 0.000 | 0.000 | 0.000 | 0.000 | 0.000 | 0.000 | 0.000 | 0.000 |
| 31 | 68 | G | 1.6911E-03 | 0.000 | 0.000 | 1.000 | 0.000 | 0.000 | 0.000 | 0.000 | 0.000 | 0.000 | 0.000 |
| 32 | 68 | G | 2.7837E-08 | 0.000 | 0.000 | 1.000 | 0.000 | 0.000 | 0.000 | 0.000 | 0.000 | 0.000 | 0.000 |
| 25 | 69 | G | 9.4900E+00 | 0.262 | 0.000 | 0.000 | 0.000 | 0.000 | 0.000 | 0.000 | 0.738 | 0.000 | 5.082 |
| 26 | 69 | G | 3.0282E+00 | 0.989 | 0.000 | 0.000 | 0.000 | 0.000 | 0.000 | 0.000 | 0.011 | 0.000 | 7.494 |
| 27 | 69 | G | 1.0149E+00 | 1.000 | 0.000 | 0.000 | 0.000 | 0.000 | 0.000 | 0.000 | 0.000 | 0.000 | 6.593 |
| 28 | 69 | G | 3.5275E-02 | 1.000 | 0.000 | 0.000 | 0.000 | 0.000 | 0.000 | 0.000 | 0.000 | 0.000 | 4.000 |
| 29 | 69 | G | 3.8504E-03 | 1.000 | 0.000 | 0.000 | 0.000 | 0.000 | 0.000 | 0.000 | 0.000 | 0.000 | 1.249 |
| 30 | 69 | I | 1.3952E-05 | 0.000 | 0.000 | 0.000 | 0.000 | 0.000 | 1.000 | 0.000 | 0.000 | 0.000 | 0.439 |
| 30 | 69 | G | 2.0629E-04 | 1.000 | 0.000 | 0.000 | 0.000 | 0.000 | 0.000 | 0.000 | 0.000 | 0.000 | 0.322 |
| 31 | 69 | G | 0.0000E+00 | 0.000 | 0.000 | 0.000 | 0.000 | 0.000 | 0.000 | 0.000 | 0.000 | 0.000 | 0.000 |
| 32 | 69 | G | 4.9370E-06 | 0.000 | 0.000 | 1.000 | 0.000 | 0.000 | 0.000 | 0.000 | 0.000 | 0.000 | 0.000 |
| 33 | 69 | G | 7.6506E-04 | 0.000 | 0.000 | 1.000 | 0.000 | 0.000 | 0.000 | 0.000 | 0.000 | 0.000 | 0.000 |
| 24 | 70 | G | 2.0580E+01 | 0.000 | 0.000 | 0.000 | 0.000 | 0.000 | 0.000 | 0.000 | 0.994 | 0.006 | 4.057 |
| 25 | 70 | G | 1.8938E+01 | 0.066 | 0.000 | 0.000 | 0.000 | 0.000 | 0.000 | 0.000 | 0.914 | 0.020 | 4.937 |
| 26 | 70 | G | 3.3995E+00 | 0.983 | 0.000 | 0.000 | 0.000 | 0.000 | 0.000 | 0.000 | 0.017 | 0.000 | 5.319 |
| 27 | 70 | G | 2.4101E+00 | 1.000 | 0.000 | 0.000 | 0.000 | 0.000 | 0.000 | 0.000 | 0.000 | 0.000 | 8.761 |
| 28 | 70 | G | 8.9705E-02 | 1.000 | 0.000 | 0.000 | 0.000 | 0.000 | 0.000 | 0.000 | 0.000 | 0.000 | 1.760 |
| 29 | 70 | I | 1.6504E-02 | 0.870 | 0.000 | 0.000 | 0.000 | 0.000 | 0.130 | 0.000 | 0.000 | 0.000 | 3.919 |
| 29 | 70 | G | 1.3863E-01 | 1.000 | 0.000 | 0.000 | 0.000 | 0.000 | 0.000 | 0.000 | 0.000 | 0.000 | 3.275 |
| 30 | 70 | G | 0.0000E+00 | 0.000 | 0.000 | 0.000 | 0.000 | 0.000 | 0.000 | 0.000 | 0.000 | 0.000 | 0.000 |
| 31 | 70 | G | 5.4622E-04 | 0.996 | 0.000 | 0.004 | 0.000 | 0.000 | 0.000 | 0.000 | 0.000 | 0.000 | 0.653 |
| 32 | 70 | G | 0.0000E+00 | 0.000 | 0.000 | 0.000 | 0.000 | 0.000 | 0.000 | 0.000 | 0.000 | 0.000 | 0.000 |
| 25 | 71 | G | 1.3594E+01 | 0.000 | 0.000 | 0.000 | 0.000 | 0.000 | 0.000 | 0.000 | 0.989 | 0.011 | 4.603 |
| 26 | 71 | G | 6.6330E+00 | 0.965 | 0.000 | 0.000 | 0.000 | 0.000 | 0.000 | 0.000 | 0.035 | 0.000 | 8.129 |
| 27 | 71 | G | 2.0080E+00 | 0.999 | 0.000 | 0.000 | 0.000 | 0.000 | 0.000 | 0.000 | 0.001 | 0.000 | 7.274 |
| 28 | 71 | G | 2.2906E-01 | 1.000 | 0.000 | 0.000 | 0.000 | 0.000 | 0.000 | 0.000 | 0.000 | 0.000 | 4.674 |
| 29 | 71 | G | 3.5546E-02 | 0.834 | 0.166 | 0.000 | 0.000 | 0.000 | 0.000 | 0.000 | 0.000 | 0.000 | 2.469 |
| 30 | 71 | I | 4.9370E-05 | 1.000 | 0.000 | 0.000 | 0.000 | 0.000 | 0.000 | 0.000 | 0.000 | 0.000 | 2.110 |
| 30 | 71 | G | 4.8135E-03 | 1.000 | 0.000 | 0.000 | 0.000 | 0.000 | 0.000 | 0.000 | 0.000 | 0.000 | 1.365 |
| 31 | 71 | G | 0.0000E+00 | 0.000 | 0.000 | 0.000 | 0.000 | 0.000 | 0.000 | 0.000 | 0.000 | 0.000 | 0.000 |
| 32 | 71 | G | 7.1628E-07 | 0.000 | 0.000 | 1.000 | 0.000 | 0.000 | 0.000 | 0.000 | 0.000 | 0.000 | 0.009 |
| 33 | 71 | G | 3.0084E-06 | 0.000 | 0.000 | 1.000 | 0.000 | 0.000 | 0.000 | 0.000 | 0.000 | 0.000 | 0.000 |
| 26 | 72 | G | 6.2054E+00 | 0.962 | 0.000 | 0.000 | 0.000 | 0.000 | 0.000 | 0.000 | 0.038 | 0.000 | 6.102 |
| 27 | 72 | G | 4.6241E+00 | 0.998 | 0.000 | 0.000 | 0.000 | 0.000 | 0.000 | 0.000 | 0.002 | 0.000 | 9.614 |
| 28 | 72 | G | 3.3308E-01 | 1.000 | 0.000 | 0.000 | 0.000 | 0.000 | 0.000 | 0.000 | 0.000 | 0.000 | 2.591 |
| 29 | 72 | G | 1.0502E-01 | 1.000 | 0.000 | 0.000 | 0.000 | 0.000 | 0.000 | 0.000 | 0.000 | 0.000 | 4.772 |
| 30 | 72 | G | 4.1407E-06 | 1.000 | 0.000 | 0.000 | 0.000 | 0.000 | 0.000 | 0.000 | 0.000 | 0.000 | 0.254 |
| 31 | 72 | G | 1.3655E-05 | 1.000 | 0.000 | 0.000 | 0.000 | 0.000 | 0.000 | 0.000 | 0.000 | 0.000 | 3.203 |
| 32 | 72 | G | 0.0000E+00 | 0.000 | 0.000 | 0.000 | 0.000 | 0.000 | 0.000 | 0.000 | 0.000 | 0.000 | 0.000 |
| 33 | 72 | G | 7.4054E-06 | 0.000 | 0.000 | 1.000 | 0.000 | 0.000 | 0.000 | 0.000 | 0.000 | 0.000 | 0.000 |
| 34 | 72 | G | 9.4383E-07 | 0.000 | 0.000 | 1.000 | 0.000 | 0.000 | 0.000 | 0.000 | 0.000 | 0.000 | 0.000 |
| 26 | 73 | G | 1.2925E+01 | 0.932 | 0.000 | 0.000 | 0.000 | 0.000 | 0.000 | 0.000 | 0.061 | 0.007 | 8.713 |
| 27 | 73 | G | 3.4416E+00 | 0.332 | 0.000 | 0.000 | 0.000 | 0.000 | 0.000 | 0.000 | 0.668 | 0.000 | 4.762 |
| 28 | 73 | G | 7.8812E-01 | 1.000 | 0.000 | 0.000 | 0.000 | 0.000 | 0.000 | 0.000 | 0.000 | 0.000 | 5.541 |
| 29 | 73 | G | 1.7773E-01 | 1.000 | 0.000 | 0.000 | 0.000 | 0.000 | 0.000 | 0.000 | 0.000 | 0.000 | 3.717 |
| 30 | 73 | G | 2.9496E-02 | 1.000 | 0.000 | 0.000 | 0.000 | 0.000 | 0.000 | 0.000 | 0.000 | 0.000 | 1.962 |
| 31 | 73 | G | 3.9608E-05 | 0.015 | 0.985 | 0.000 | 0.000 | 0.000 | 0.000 | 0.000 | 0.000 | 0.000 | 0.780 |
| 32 | 73 | I | 1.3863E+00 | 0.000 | 0.000 | 0.000 | 0.000 | 0.000 | 1.000 | 0.000 | 0.000 | 0.000 | 0.067 |
| 32 | 73 | G | 0.0000E+00 | 0.000 | 0.000 | 0.000 | 0.000 | 0.000 | 0.000 | 0.000 | 0.000 | 0.000 | 0.000 |
| 33 | 73 | G | 9.9906E-08 | 0.000 | 0.000 | 1.000 | 0.000 | 0.000 | 0.000 | 0.000 | 0.000 | 0.000 | 0.000 |
| 34 | 73 | I | 2.9622E-04 | 0.000 | 0.000 | 1.000 | 0.000 | 0.000 | 0.000 | 0.000 | 0.000 | 0.000 | 0.000 |
| 34 | 73 | G | 2.7118E-05 | 0.000 | 0.000 | 1.000 | 0.000 | 0.000 | 0.000 | 0.000 | 0.000 | 0.000 | 0.000 |
| 26 | 74 | G | 1.0041E+01 | 0.930 | 0.000 | 0.000 | 0.000 | 0.000 | 0.000 | 0.000 | 0.070 | 0.000 | 7.053 |
| 27 | 74 | G | 7.8722E+00 | 0.409 | 0.000 | 0.000 | 0.000 | 0.000 | 0.000 | 0.000 | 0.590 | 0.001 | 5.355 |

# Fig.8　　Teil2　　　　　　7/23

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 29 | 74 | G | 6.6752E-01 | 1.000 | 0.000 | 0.000 | 0.000 | 0.000 | 0.000 | 0.000 | 0.000 | 0.000 | 3.466 |
| 29 | 74 | G | 1.0022E+00 | 1.000 | 0.000 | 0.000 | 0.000 | 0.000 | 0.000 | 0.000 | 0.000 | 0.000 | 6.623 |
| 30 | 74 | G | 7.2963E-03 | 0.868 | 0.132 | 0.000 | 0.000 | 0.000 | 0.000 | 0.000 | 0.000 | 0.000 | 1.059 |
| 31 | 74 | I | 7.2963E-02 | 0.000 | 0.000 | 0.000 | 0.000 | 0.000 | 1.000 | 0.000 | 0.000 | 0.000 | 0.000 |
| 31 | 74 | G | 1.4262E-03 | 1.000 | 0.000 | 0.000 | 0.000 | 0.000 | 0.000 | 0.000 | 0.000 | 0.000 | 3.919 |
| 32 | 74 | G | 0.0000E+00 | 0.000 | 0.000 | 0.000 | 0.000 | 0.000 | 0.000 | 0.000 | 0.000 | 0.000 | 0.000 |
| 33 | 74 | G | 4.5154E-07 | 0.320 | 0.000 | 0.680 | 0.000 | 0.000 | 0.000 | 0.000 | 0.000 | 0.000 | 0.219 |
| 34 | 74 | G | 0.0000E+00 | 0.000 | 0.000 | 0.000 | 0.000 | 0.000 | 0.000 | 0.000 | 0.000 | 0.000 | 0.000 |
| 27 | 75 | G | 5.2952E+00 | 0.001 | 0.000 | 0.000 | 0.000 | 0.000 | 0.000 | 0.000 | 0.999 | 0.000 | 3.558 |
| 28 | 75 | G | 2.0648E+00 | 0.997 | 0.000 | 0.000 | 0.000 | 0.000 | 0.000 | 0.000 | 0.003 | 0.000 | 6.429 |
| 29 | 75 | G | 1.1093E+00 | 1.000 | 0.000 | 0.000 | 0.000 | 0.000 | 0.000 | 0.000 | 0.000 | 0.000 | 4.315 |
| 30 | 75 | G | 6.7955E-02 | 1.000 | 0.000 | 0.000 | 0.000 | 0.000 | 0.000 | 0.000 | 0.000 | 0.000 | 4.026 |
| 31 | 75 | G | 5.5012E-03 | 0.951 | 0.049 | 0.000 | 0.000 | 0.000 | 0.000 | 0.000 | 0.000 | 0.000 | 1.643 |
| 32 | 75 | I | 1.4748E-02 | 0.000 | 0.000 | 0.000 | 0.000 | 0.000 | 1.000 | 0.000 | 0.000 | 0.000 | 0.140 |
| 32 | 75 | G | 1.3919E-04 | 1.000 | 0.000 | 0.000 | 0.000 | 0.000 | 0.000 | 0.000 | 0.000 | 0.000 | 0.457 |
| 33 | 75 | G | 0.0000E+00 | 0.000 | 0.000 | 0.000 | 0.000 | 0.000 | 0.000 | 0.000 | 0.000 | 0.000 | 0.000 |
| 34 | 75 | G | 6.6649E-08 | 0.000 | 0.000 | 1.000 | 0.000 | 0.000 | 0.000 | 0.000 | 0.000 | 0.000 | 0.466 |
| 35 | 75 | G | 1.2031E-01 | 0.000 | 0.000 | 1.000 | 0.000 | 0.000 | 0.000 | 0.000 | 0.000 | 0.000 | 0.000 |
| 26 | 76 | G | 1.5456E+01 | 0.083 | 0.000 | 0.000 | 0.000 | 0.000 | 0.000 | 0.000 | 0.914 | 0.003 | 4.565 |
| 27 | 76 | G | 8.2078E+00 | 0.002 | 0.000 | 0.000 | 0.000 | 0.000 | 0.000 | 0.000 | 0.990 | 0.008 | 3.838 |
| 28 | 76 | G | 1.7667E+00 | 0.975 | 0.000 | 0.000 | 0.000 | 0.000 | 0.000 | 0.000 | 0.005 | 0.000 | 4.355 |
| 29 | 76 | G | 2.8344E+00 | 0.999 | 0.000 | 0.000 | 0.000 | 0.000 | 0.000 | 0.000 | 0.001 | 0.000 | 7.176 |
| 30 | 76 | G | 1.2161E-01 | 1.000 | 0.000 | 0.000 | 0.000 | 0.000 | 0.000 | 0.000 | 0.000 | 0.000 | 2.072 |
| 31 | 76 | G | 2.5577E-02 | 1.000 | 0.000 | 0.000 | 0.000 | 0.000 | 0.000 | 0.000 | 0.000 | 0.000 | 4.369 |
| 32 | 76 | G | 0.0000E+00 | 0.000 | 0.000 | 0.000 | 0.000 | 0.000 | 0.000 | 0.000 | 0.000 | 0.000 | 0.000 |
| 33 | 76 | G | 7.2732E-06 | 1.000 | 0.000 | 0.000 | 0.000 | 0.000 | 0.000 | 0.000 | 0.000 | 0.000 | 1.476 |
| 34 | 76 | G | 0.0000E+00 | 0.000 | 0.000 | 0.000 | 0.000 | 0.000 | 0.000 | 0.000 | 0.000 | 0.000 | 0.000 |
| 28 | 77 | G | 2.7550E+00 | 0.987 | 0.000 | 0.000 | 0.000 | 0.000 | 0.000 | 0.000 | 0.013 | 0.000 | 7.273 |
| 29 | 77 | G | 2.4711E+00 | 0.995 | 0.000 | 0.000 | 0.000 | 0.000 | 0.000 | 0.000 | 0.005 | 0.000 | 4.445 |
| 30 | 77 | G | 4.9510E-01 | 1.000 | 0.000 | 0.000 | 0.000 | 0.000 | 0.000 | 0.000 | 0.000 | 0.000 | 5.443 |
| 31 | 77 | G | 5.3319E-02 | 0.000 | 1.000 | 0.000 | 0.000 | 0.000 | 0.000 | 0.000 | 0.000 | 0.000 | 2.606 |
| 32 | 77 | I | 1.3073E-02 | 0.785 | 0.000 | 0.000 | 0.000 | 0.000 | 0.217 | 0.000 | 0.000 | 0.000 | 1.058 |
| 32 | 77 | G | 1.7039E-05 | 1.000 | 0.000 | 0.000 | 0.000 | 0.000 | 0.000 | 0.000 | 0.000 | 0.000 | 1.667 |
| 33 | 77 | G | 4.9617E-06 | 0.997 | 0.003 | 0.000 | 0.000 | 0.000 | 0.000 | 0.000 | 0.000 | 0.000 | 0.234 |
| 34 | 77 | I | 3.9608E-02 | 0.000 | 0.000 | 0.000 | 0.000 | 0.000 | 1.000 | 0.000 | 0.000 | 0.000 | 0.162 |
| 34 | 77 | G | 0.0000E+00 | 0.000 | 0.000 | 0.000 | 0.000 | 0.000 | 0.000 | 0.000 | 0.000 | 0.000 | 0.000 |
| 35 | 77 | I | 2.6866E-03 | 0.000 | 0.000 | 1.000 | 0.000 | 0.000 | 0.000 | 0.000 | 0.000 | 0.000 | 0.000 |
| 35 | 77 | G | 3.3779E-06 | 0.000 | 0.000 | 1.000 | 0.000 | 0.000 | 0.000 | 0.000 | 0.000 | 0.000 | 0.000 |
| 36 | 77 | G | 1.5527E-04 | 0.000 | 0.000 | 1.000 | 0.000 | 0.000 | 0.000 | 0.000 | 0.000 | 0.000 | 0.000 |
| 28 | 78 | G | 3.1987E+00 | 0.983 | 0.000 | 0.000 | 0.000 | 0.000 | 0.000 | 0.000 | 0.017 | 0.000 | 5.244 |
| 29 | 78 | G | 3.4744E+00 | 0.994 | 0.000 | 0.000 | 0.000 | 0.000 | 0.000 | 0.000 | 0.006 | 0.000 | 6.878 |
| 30 | 78 | G | 4.7153E-01 | 1.000 | 0.000 | 0.000 | 0.000 | 0.000 | 0.000 | 0.000 | 0.000 | 0.000 | 3.310 |
| 31 | 78 | G | 1.7626E-01 | 1.000 | 0.000 | 0.000 | 0.000 | 0.000 | 0.000 | 0.000 | 0.000 | 0.000 | 5.141 |
| 32 | 78 | G | 1.3122E-01 | 1.000 | 0.000 | 0.000 | 0.000 | 0.000 | 0.000 | 0.000 | 0.000 | 0.000 | 0.505 |
| 33 | 78 | G | 1.2836E-01 | 1.000 | 0.000 | 0.000 | 0.000 | 0.000 | 0.000 | 0.000 | 0.000 | 0.000 | 2.553 |
| 34 | 78 | G | 0.0000E+00 | 0.000 | 0.000 | 0.000 | 0.000 | 0.000 | 0.000 | 0.000 | 0.000 | 0.000 | 0.000 |
| 35 | 78 | G | 1.7865E-03 | 0.000 | 0.000 | 1.000 | 0.000 | 0.000 | 0.000 | 0.000 | 0.000 | 0.000 | 0.000 |
| 36 | 78 | G | 0.0000E+00 | 0.000 | 0.000 | 0.000 | 0.000 | 0.000 | 0.000 | 0.000 | 0.000 | 0.000 | 0.000 |
| 29 | 79 | G | 4.5934E+00 | 0.986 | 0.000 | 0.000 | 0.000 | 0.000 | 0.000 | 0.000 | 0.014 | 0.000 | 5.442 |
| 30 | 79 | G | 1.6658E+00 | 1.000 | 0.000 | 0.000 | 0.000 | 0.000 | 0.000 | 0.000 | 0.000 | 0.000 | 4.948 |
| 31 | 79 | G | 2.3302E-01 | 0.749 | 0.250 | 0.000 | 0.000 | 0.000 | 0.000 | 0.000 | 0.001 | 0.000 | 4.130 |
| 32 | 79 | I | 1.6501E-02 | 0.460 | 0.000 | 0.000 | 0.000 | 0.000 | 0.540 | 0.000 | 0.000 | 0.000 | 2.479 |
| 32 | 79 | G | 3.0461E-02 | 1.000 | 0.000 | 0.000 | 0.000 | 0.000 | 0.000 | 0.000 | 0.000 | 0.000 | 1.951 |
| 33 | 79 | G | 1.4204E-03 | 0.934 | 0.111 | 0.000 | 0.000 | 0.000 | 0.000 | 0.000 | 0.000 | 0.000 | 0.948 |
| 33 | 79 | I | 2.9522E-03 | 0.000 | 0.000 | 0.000 | 0.000 | 0.000 | 1.000 | 0.000 | 0.000 | 0.000 | 0.096 |
| 34 | 79 | G | 3.4311E-13 | 1.000 | 0.000 | 0.000 | 0.000 | 0.000 | 0.000 | 0.000 | 0.000 | 0.000 | 0.041 |
| 35 | 79 | I | 1.4145E-01 | 0.000 | 0.000 | 0.000 | 0.000 | 0.000 | 1.000 | 0.000 | 0.000 | 0.000 | 0.207 |
| 35 | 79 | G | 0.0000E+00 | 0.000 | 0.000 | 0.000 | 0.000 | 0.000 | 0.000 | 0.000 | 0.000 | 0.000 | 0.000 |
| 36 | 79 | I | 1.3863E-02 | 0.000 | 0.000 | 0.000 | 0.000 | 0.000 | 1.000 | 0.000 | 0.000 | 0.000 | 0.130 |
| 36 | 79 | G | 5.5187E-04 | 0.000 | 0.000 | 1.000 | 0.000 | 0.000 | 0.000 | 0.000 | 0.000 | 0.000 | 0.242 |
| 37 | 79 | G | 5.0228E-04 | 0.000 | 0.000 | 1.000 | 0.000 | 0.000 | 0.000 | 0.000 | 0.000 | 0.000 | 0.000 |
| 28 | 80 | G | 4.9795E+00 | 0.000 | 0.000 | 0.000 | 0.000 | 0.000 | 0.000 | 0.000 | 0.965 | 0.015 | 3.344 |
| 29 | 80 | G | 6.6831E+00 | 0.266 | 0.000 | 0.000 | 0.000 | 0.000 | 0.000 | 0.000 | 0.733 | 0.001 | 5.306 |
| 30 | 80 | G | 1.4245E+00 | 1.000 | 0.000 | 0.000 | 0.000 | 0.000 | 0.000 | 0.000 | 0.000 | 0.000 | 2.736 |
| 31 | 80 | G | 4.0773E-01 | 0.991 | 0.000 | 0.000 | 0.000 | 0.000 | 0.000 | 0.000 | 0.009 | 0.000 | 6.011 |
| 32 | 80 | G | 2.3496E-02 | 1.000 | 0.000 | 0.000 | 0.000 | 0.000 | 0.000 | 0.000 | 0.000 | 0.000 | 1.316 |
| 33 | 80 | G | 4.5607E-02 | 1.000 | 0.000 | 0.000 | 0.000 | 0.000 | 0.000 | 0.000 | 0.000 | 0.000 | 2.834 |
| 34 | 80 | G | 0.0000E+00 | 0.000 | 0.000 | 0.000 | 0.000 | 0.000 | 0.000 | 0.000 | 0.000 | 0.000 | 0.000 |
| 35 | 80 | I | 4.3544E-05 | 0.000 | 0.000 | 0.000 | 0.000 | 0.000 | 1.000 | 0.000 | 0.000 | 0.000 | 0.086 |
| 35 | 80 | G | 6.5639E-04 | 0.917 | 0.000 | 0.083 | 0.000 | 0.000 | 0.000 | 0.000 | 0.000 | 0.000 | 0.602 |
| 36 | 80 | G | 0.0000E+00 | 0.000 | 0.000 | 0.000 | 0.000 | 0.000 | 0.000 | 0.000 | 0.000 | 0.000 | 0.000 |
| 29 | 81 | G | 7.3653E+00 | 0.000 | 0.000 | 0.000 | 0.000 | 0.000 | 0.000 | 0.000 | 0.991 | 0.009 | 3.623 |
| 30 | 81 | G | 3.1942E+00 | 0.997 | 0.000 | 0.000 | 0.000 | 0.000 | 0.000 | 0.000 | 0.003 | 0.000 | 6.567 |
| 31 | 81 | G | 5.7762E-01 | 1.000 | 0.000 | 0.000 | 0.000 | 0.000 | 0.000 | 0.000 | 0.000 | 0.000 | 5.489 |
| 32 | 81 | G | 8.6865E-02 | 1.000 | 0.000 | 0.000 | 0.000 | 0.000 | 0.000 | 0.000 | 0.000 | 0.000 | 2.894 |
| 33 | 81 | G | 2.0387E-02 | 0.967 | 0.033 | 0.000 | 0.000 | 0.000 | 0.000 | 0.000 | 0.000 | 0.000 | 1.806 |
| 34 | 81 | I | 2.0161E-04 | 0.001 | 0.000 | 0.000 | 0.000 | 0.000 | 0.999 | 0.000 | 0.000 | 0.000 | 0.104 |
| 34 | 81 | G | 6.418E-04 | 1.000 | 0.000 | 0.000 | 0.000 | 0.000 | 0.000 | 0.000 | 0.000 | 0.000 | 0.623 |
| 35 | 81 | G | 0.0000E+00 | 0.000 | 0.000 | 0.000 | 0.000 | 0.000 | 0.000 | 0.000 | 0.000 | 0.000 | 0.000 |
| 36 | 81 | I | 5.2116E-02 | 0.000 | 0.000 | 0.000 | 0.000 | 0.000 | 1.000 | 0.000 | 0.000 | 0.000 | 0.190 |

## Fig.8　Teil3　　　　　　　

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 36 | 81 | G | 1.0466E-13 | 0.000 | 0.000 | 1.000 | 0.000 | 0.000 | 0.000 | 0.000 | 0.000 | 0.000 | 0.021 |
| 37 | 81 | I | 3.8127E-04 | 0.000 | 0.000 | 0.000 | 0.000 | 0.000 | 1.000 | 0.000 | 0.000 | 0.000 | 0.085 |
| 37 | 81 | G | 4.2034E-05 | 0.000 | 0.000 | 1.000 | 0.000 | 0.000 | 0.000 | 0.000 | 0.000 | 0.000 | 0.000 |
| 28 | 82 | G | 8.7276E+00 | 0.000 | 0.000 | 0.000 | 0.000 | 0.000 | 0.000 | 0.000 | 0.388 | 0.612 | 3.526 |
| 29 | 82 | G | 1.2384E+01 | 0.000 | 0.000 | 0.000 | 0.000 | 0.000 | 0.000 | 0.000 | 0.532 | 0.468 | 3.783 |
| 30 | 82 | G | 3.9095E+00 | 0.052 | 0.000 | 0.000 | 0.000 | 0.000 | 0.000 | 0.000 | 0.948 | 0.000 | 2.817 |
| 31 | 82 | G | 1.1552E+00 | 1.000 | 0.000 | 0.000 | 0.000 | 0.000 | 0.000 | 0.000 | 0.000 | 0.000 | 6.392 |
| 32 | 82 | G | 1.5068E-01 | 1.000 | 0.000 | 0.000 | 0.000 | 0.000 | 0.000 | 0.000 | 0.000 | 0.000 | 2.772 |
| 33 | 82 | I | 3.6290E-02 | 1.000 | 0.000 | 0.000 | 0.000 | 0.000 | 0.000 | 0.000 | 0.000 | 0.000 | 3.652 |
| 33 | 82 | G | 4.9510E-02 | 1.000 | 0.000 | 0.000 | 0.000 | 0.000 | 0.000 | 0.000 | 0.000 | 0.000 | 5.056 |
| 34 | 82 | G | 0.0000E+00 | 0.000 | 0.000 | 0.000 | 0.000 | 0.000 | 0.000 | 0.000 | 0.000 | 0.000 | 0.000 |
| 35 | 82 | I | 1.8938E-03 | 0.024 | 0.000 | 0.000 | 0.000 | 0.000 | 0.976 | 0.000 | 0.000 | 0.000 | 0.079 |
| 35 | 82 | G | 5.4579E-06 | 1.000 | 0.000 | 0.000 | 0.000 | 0.000 | 0.000 | 0.000 | 0.000 | 0.000 | 2.788 |
| 36 | 82 | G | 0.0000E+00 | 0.000 | 0.000 | 0.000 | 0.000 | 0.000 | 0.000 | 0.000 | 0.000 | 0.000 | 0.000 |
| 30 | 83 | G | 8.4232E+00 | 0.277 | 0.000 | 0.000 | 0.000 | 0.000 | 0.000 | 0.000 | 0.000 | 0.000 | 3.949 |
| 31 | 83 | G | 2.3105E+00 | 1.000 | 0.000 | 0.000 | 0.000 | 0.000 | 0.000 | 0.000 | 0.685 | 0.038 | 3.934 |
| 32 | 83 | G | 3.6481E-01 | 0.998 | 0.000 | 0.000 | 0.000 | 0.000 | 0.000 | 0.000 | 0.000 | 0.000 | 6.332 |
| 33 | 83 | G | 5.2116E-02 | 1.000 | 0.000 | 0.000 | 0.000 | 0.000 | 0.000 | 0.000 | 0.002 | 0.000 | 3.488 |
| 34 | 83 | I | 1.0046E-02 | 1.000 | 0.000 | 0.000 | 0.000 | 0.000 | 0.000 | 0.000 | 0.000 | 0.000 | 2.193 |
| 34 | 83 | G | 5.1574E-04 | 1.000 | 0.000 | 0.000 | 0.000 | 0.000 | 0.000 | 0.000 | 0.000 | 0.000 | 2.918 |
| 35 | 83 | G | 8.0225E-05 | 0.000 | 1.000 | 0.000 | 0.000 | 0.000 | 0.000 | 0.000 | 0.000 | 0.000 | 0.333 |
| 36 | 83 | I | 1.0521E-04 | 0.000 | 0.000 | 0.000 | 0.000 | 0.000 | 1.000 | 0.000 | 0.000 | 0.000 | 0.042 |
| 36 | 83 | G | 0.0000E+00 | 0.000 | 0.000 | 0.000 | 0.000 | 0.000 | 0.000 | 0.000 | 0.000 | 0.000 | 0.000 |
| 37 | 83 | G | 9.3065E-08 | 0.000 | 0.000 | 1.000 | 0.000 | 0.000 | 0.000 | 0.000 | 0.000 | 0.000 | 0.000 |
| 38 | 83 | I | 1.3863E-01 | 0.000 | 0.000 | 0.000 | 0.000 | 0.000 | 0.000 | 0.000 | 0.005 | 0.000 | 0.500 |
| 38 | 83 | G | 5.9447E-06 | 0.000 | 0.000 | 1.000 | 0.000 | 0.000 | 1.000 | 0.000 | 0.000 | 0.000 | 0.000 |
| 30 | 84 | G | 1.9195E+01 | 0.497 | 0.000 | 0.000 | 0.000 | 0.000 | 0.000 | 0.000 | 0.000 | 0.000 | 4.345 |
| 31 | 84 | G | 5.0264E+00 | 0.018 | 0.000 | 0.000 | 0.000 | 0.000 | 0.000 | 0.000 | 0.500 | 0.003 | 3.039 |
| 32 | 84 | G | 5.7762E-01 | 0.904 | 0.000 | 0.000 | 0.000 | 0.000 | 0.000 | 0.000 | 0.872 | 0.110 | 4.383 |
| 33 | 84 | G | 1.3078E-01 | 0.999 | 0.000 | 0.000 | 0.000 | 0.000 | 0.000 | 0.000 | 0.096 | 0.000 | 5.222 |
| 34 | 84 | G | 3.7266E-03 | 1.000 | 0.000 | 0.000 | 0.000 | 0.000 | 0.000 | 0.000 | 0.001 | 0.000 | 0.949 |
| 35 | 84 | I | 1.9254E-03 | 1.000 | 0.000 | 0.000 | 0.000 | 0.000 | 0.000 | 0.000 | 0.000 | 0.000 | 3.669 |
| 35 | 84 | G | 3.6328E-04 | 1.000 | 0.000 | 0.000 | 0.000 | 0.000 | 0.000 | 0.000 | 0.000 | 0.000 | 2.988 |
| 36 | 84 | G | 0.0000E+00 | 0.000 | 0.000 | 0.000 | 0.000 | 0.000 | 0.000 | 0.000 | 0.000 | 0.000 | 0.000 |
| 37 | 84 | I | 5.6353E-04 | 0.000 | 0.000 | 0.000 | 0.000 | 0.000 | 0.000 | 0.000 | 0.000 | 0.000 | 0.465 |
| 37 | 84 | G | 2.4493E-07 | 0.040 | 0.000 | 0.960 | 0.000 | 0.000 | 1.000 | 0.000 | 0.000 | 0.000 | 0.012 |
| 38 | 84 | G | 0.0000E+00 | 0.000 | 0.000 | 0.000 | 0.000 | 0.000 | 0.000 | 0.000 | 0.000 | 0.000 | 0.000 |
| 31 | 85 | G | 1.1918E+01 | 0.541 | 0.000 | 0.000 | 0.000 | 0.000 | 0.000 | 0.000 | 0.000 | 0.000 | 5.524 |
| 32 | 85 | G | 1.3213E+00 | 0.626 | 0.000 | 0.000 | 0.000 | 0.000 | 0.000 | 0.000 | 0.457 | 0.002 | 5.248 |
| 33 | 85 | G | 3.3812E-01 | 0.800 | 0.000 | 0.000 | 0.000 | 0.000 | 0.000 | 0.000 | 0.374 | 0.000 | 3.644 |
| 34 | 85 | G | 2.1005E-02 | 1.000 | 0.000 | 0.000 | 0.000 | 0.000 | 0.000 | 0.000 | 0.200 | 0.000 | 3.964 |
| 35 | 85 | G | 4.0299E-03 | 0.002 | 0.998 | 0.000 | 0.000 | 0.000 | 0.000 | 0.000 | 0.000 | 0.000 | 1.103 |
| 36 | 85 | I | 4.3053E-05 | 0.790 | 0.000 | 0.000 | 0.000 | 0.000 | 0.210 | 0.000 | 0.000 | 0.000 | 0.413 |
| 36 | 85 | G | 2.0691E-09 | 1.000 | 0.000 | 0.000 | 0.000 | 0.000 | 0.000 | 0.000 | 0.000 | 0.000 | 0.231 |
| 37 | 85 | G | 0.0000E+00 | 0.000 | 0.000 | 0.000 | 0.000 | 0.000 | 0.000 | 0.000 | 0.000 | 0.000 | 0.000 |
| 38 | 85 | I | 1.7064E-04 | 0.000 | 0.000 | 0.500 | 0.000 | 0.000 | 0.500 | 0.000 | 0.000 | 0.000 | 0.229 |
| 38 | 85 | G | 1.2362E-07 | 0.000 | 0.000 | 1.000 | 0.000 | 0.000 | 0.000 | 0.000 | 0.000 | 0.000 | 0.527 |
| 39 | 85 | I | 3.9294E-05 | 0.000 | 0.000 | 1.000 | 0.000 | 0.000 | 0.000 | 0.000 | 0.000 | 0.000 | 0.000 |
| 39 | 85 | G | 7.1311E-05 | 0.000 | 0.000 | 1.000 | 0.000 | 0.000 | 0.000 | 0.000 | 0.000 | 0.000 | 0.000 |
| 30 | 86 | G | 3.3260E+01 | 0.418 | 0.000 | 0.000 | 0.000 | 0.000 | 0.000 | 0.000 | 0.000 | 0.000 | 0.000 |
| 31 | 86 | G | 2.5096E+01 | 0.494 | 0.000 | 0.000 | 0.000 | 0.000 | 0.000 | 0.000 | 0.559 | 0.023 | 4.791 |
| 32 | 86 | G | 4.9795E+00 | 0.834 | 0.000 | 0.000 | 0.000 | 0.000 | 0.000 | 0.000 | 0.367 | 0.139 | 6.114 |
| 33 | 86 | G | 7.7016E-01 | 0.962 | 0.000 | 0.000 | 0.000 | 0.000 | 0.000 | 0.000 | 0.166 | 0.000 | 4.785 |
| 34 | 86 | G | 4.9159E-02 | 1.000 | 0.000 | 0.000 | 0.000 | 0.000 | 0.000 | 0.000 | 0.038 | 0.000 | 5.776 |
| 35 | 86 | G | 1.2836E-02 | 1.000 | 0.000 | 0.000 | 0.000 | 0.000 | 0.000 | 0.000 | 0.000 | 0.000 | 3.490 |
| 36 | 86 | G | 0.0000E+00 | 0.000 | 0.000 | 0.000 | 0.000 | 0.000 | 0.000 | 0.000 | 0.000 | 0.000 | 5.189 |
| 37 | 86 | I | 1.1326E-02 | 0.000 | 0.000 | 0.000 | 0.000 | 0.000 | 0.000 | 0.000 | 0.000 | 0.000 | 0.000 |
| 37 | 86 | G | 4.2787E-07 | 1.000 | 0.000 | 0.000 | 0.000 | 0.000 | 1.000 | 0.000 | 0.000 | 0.000 | 0.556 |
| 38 | 86 | G | 0.0000E+00 | 0.000 | 0.000 | 0.000 | 0.000 | 0.000 | 0.000 | 0.000 | 0.000 | 0.000 | 0.752 |
| 32 | 87 | G | 1.0079E+01 | 0.776 | 0.000 | 0.000 | 0.000 | 0.000 | 0.000 | 0.000 | 0.000 | 0.000 | 0.000 |
| 33 | 87 | G | 9.4952E-01 | 0.690 | 0.000 | 0.000 | 0.000 | 0.000 | 0.000 | 0.000 | 0.224 | 0.000 | 6.123 |
| 34 | 87 | G | 1.1951E-01 | 0.998 | 0.000 | 0.000 | 0.000 | 0.000 | 0.000 | 0.000 | 0.310 | 0.000 | 5.110 |
| 35 | 87 | G | 1.2444E-02 | 0.977 | 0.000 | 0.000 | 0.000 | 0.000 | 0.000 | 0.000 | 0.002 | 0.000 | 5.222 |
| 36 | 87 | G | 1.5141E-04 | 1.000 | 0.000 | 0.000 | 0.000 | 0.000 | 0.000 | 0.000 | 0.023 | 0.000 | 4.478 |
| 37 | 87 | G | 4.5904E-19 | 1.000 | 0.000 | 0.000 | 0.000 | 0.000 | 0.000 | 0.000 | 0.000 | 0.000 | 2.114 |
| 38 | 87 | I | 6.8629E-05 | 0.000 | 0.000 | 0.003 | 0.000 | 0.000 | 0.000 | 0.000 | 0.000 | 0.000 | 0.082 |
| 38 | 87 | G | 0.0000E+00 | 0.000 | 0.000 | 0.000 | 0.000 | 0.000 | 0.997 | 0.000 | 0.000 | 0.000 | 0.367 |
| 39 | 87 | I | 1.4811E-05 | 0.000 | 0.000 | 0.000 | 0.000 | 0.000 | 1.000 | 0.000 | 0.000 | 0.000 | 0.000 |
| 39 | 87 | G | 2.3976E-06 | 0.000 | 0.000 | 1.000 | 0.000 | 0.000 | 0.000 | 0.000 | 0.000 | 0.000 | 0.361 |
| 40 | 87 | I | 4.9519E-07 | 0.000 | 0.000 | 0.000 | 0.000 | 0.000 | 0.000 | 0.000 | 0.000 | 0.000 | 0.000 |
| 40 | 87 | G | 1.2034E-04 | 0.000 | 0.000 | 1.000 | 0.000 | 0.000 | 1.000 | 0.000 | 0.000 | 0.000 | 0.336 |
| 32 | 88 | G | 9.9863E+00 | 0.771 | 0.000 | 0.000 | 0.000 | 0.000 | 0.000 | 0.000 | 0.229 | 0.000 | 0.000 |
| 33 | 88 | G | 6.2321E+00 | 0.760 | 0.000 | 0.000 | 0.000 | 0.000 | 0.000 | 0.000 | 0.229 | 0.000 | 4.824 |
| 34 | 88 | G | 4.6710E-01 | 0.935 | 0.000 | 0.000 | 0.000 | 0.000 | 0.000 | 0.000 | 0.233 | 0.007 | 4.751 |
| 35 | 88 | G | 4.2524E-02 | 0.954 | 0.000 | 0.000 | 0.000 | 0.000 | 0.000 | 0.000 | 0.005 | 0.000 | 4.033 |
| 36 | 88 | G | 6.1956E-05 | 1.000 | 0.000 | 0.000 | 0.000 | 0.000 | 0.000 | 0.000 | 0.046 | 0.000 | 5.628 |
| 37 | 88 | G | 6.4901E-01 | 1.000 | 0.000 | 0.000 | 0.000 | 0.000 | 0.000 | 0.000 | 0.000 | 0.000 | 2.315 |
| 38 | 88 | G | 0.0000E+00 | 0.000 | 0.000 | 0.000 | 0.000 | 0.000 | 0.000 | 0.000 | 0.000 | 0.000 | 2.741 |
| 39 | 88 | G | 7.5260E-08 | 0.000 | 0.000 | 1.000 | 0.000 | 0.000 | 0.000 | 0.000 | 0.000 | 0.000 | 0.000 |
| 40 | 88 | G | 9.6190E-08 | 0.000 | 0.000 | 1.000 | 0.000 | 0.000 | 0.000 | 0.000 | 0.000 | 0.000 | 0.000 |

# Fig.8 Teil4

| Z | A | K | $\lambda_{tot}$ | $P_{\beta^-}(G)$ | $P_{\beta^-}(I)$ | $P_{\beta^+}(G)$ | $P_{\beta^+}(I)$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 33 | 89 | G | 6.9245E+00 | 0.585 | 0.000 | 0.000 | 0.000 | 0.000 | 0.000 | 0.000 | 0.415 | 0.000 | 4.993 |
| 34 | 89 | G | 1.7329E+00 | 0.950 | 0.000 | 0.000 | 0.000 | 0.000 | 0.000 | 0.000 | 0.050 | 0.000 | 5.397 |
| 35 | 89 | G | 1.5403E-01 | 0.914 | 0.000 | 0.000 | 0.000 | 0.000 | 0.000 | 0.000 | 0.086 | 0.000 | 4.769 |
| 36 | 89 | G | 3.6790E-03 | 1.000 | 0.000 | 0.050 | 0.000 | 0.000 | 0.000 | 0.000 | 0.000 | 0.000 | 3.184 |
| 37 | 89 | G | 7.5003E-04 | 1.000 | 0.000 | 0.000 | 0.000 | 0.000 | 0.000 | 0.000 | 0.000 | 0.000 | 3.063 |
| 38 | 89 | G | 1.5999E-07 | 1.000 | 0.000 | 0.000 | 0.000 | 0.000 | 0.000 | 0.000 | 0.000 | 0.000 | 0.570 |
| 39 | 89 | I | 4.3322E-02 | 0.000 | 0.000 | 0.000 | 0.000 | 0.000 | 1.000 | 0.000 | 0.000 | 0.000 | 0.909 |
| 39 | 89 | G | 0.0000E+00 | 0.000 | 0.000 | 0.000 | 0.000 | 0.000 | 0.000 | 0.000 | 0.000 | 0.000 | 0.000 |
| 40 | 89 | I | 2.7710E-03 | 0.000 | 0.000 | 0.500 | 0.000 | 0.000 | 0.500 | 0.000 | 0.000 | 0.000 | 0.294 |
| 40 | 89 | G | 2.4562E-06 | 0.000 | 0.000 | 1.000 | 0.000 | 0.000 | 0.000 | 0.000 | 0.000 | 0.000 | 1.262 |
| 41 | 89 | I | 1.7504E-01 | 0.000 | 0.000 | 1.000 | 0.000 | 0.000 | 0.000 | 0.000 | 0.000 | 0.000 | 0.000 |
| 41 | 89 | G | 9.6270E-05 | 0.000 | 0.000 | 1.000 | 0.000 | 0.000 | 0.000 | 0.000 | 0.000 | 0.000 | 0.000 |
| 34 | 90 | G | 1.9924E+00 | 0.960 | 0.000 | 0.000 | 0.000 | 0.000 | 0.000 | 0.000 | 0.040 | 0.000 | 3.811 |
| 35 | 90 | G | 3.6181E-01 | 0.880 | 0.000 | 0.000 | 0.000 | 0.000 | 0.000 | 0.000 | 0.120 | 0.000 | 6.584 |
| 36 | 90 | G | 2.1460E-02 | 0.875 | 0.125 | 0.000 | 0.000 | 0.000 | 0.000 | 0.000 | 0.000 | 0.000 | 2.609 |
| 37 | 90 | I | 2.6606E-03 | 1.000 | 0.000 | 0.000 | 0.000 | 0.000 | 0.000 | 0.000 | 0.000 | 0.000 | 4.779 |
| 37 | 90 | G | 4.4433E-03 | 1.000 | 0.000 | 0.000 | 0.000 | 0.000 | 0.000 | 0.000 | 0.000 | 0.000 | 3.727 |
| 38 | 90 | G | 7.6233E-10 | 1.000 | 0.000 | 0.000 | 0.000 | 0.000 | 0.000 | 0.000 | 0.000 | 0.000 | 0.174 |
| 39 | 90 | I | 6.0274E-05 | 0.000 | 0.000 | 0.000 | 0.000 | 0.000 | 1.000 | 0.000 | 0.000 | 0.000 | 0.682 |
| 39 | 90 | G | 3.0306E-06 | 1.000 | 0.000 | 0.000 | 0.000 | 0.000 | 0.000 | 0.000 | 0.000 | 0.000 | 0.931 |
| 40 | 90 | I | 8.5672E-01 | 0.000 | 0.000 | 0.000 | 0.000 | 0.000 | 1.000 | 0.000 | 0.000 | 0.000 | 2.319 |
| 40 | 90 | G | 0.0000E+00 | 0.000 | 0.000 | 0.000 | 0.000 | 0.000 | 0.000 | 0.000 | 0.000 | 0.000 | 0.000 |
| 41 | 90 | I | 3.0904E-02 | 0.000 | 0.000 | 0.000 | 0.000 | 0.000 | 1.000 | 0.000 | 0.000 | 0.000 | 0.125 |
| 41 | 90 | G | 1.3148E-05 | 0.000 | 0.000 | 1.000 | 0.000 | 0.000 | 0.000 | 0.000 | 0.000 | 0.000 | 0.000 |
| 42 | 90 | G | 3.3779E-05 | 0.000 | 0.000 | 1.000 | 0.000 | 0.000 | 0.000 | 0.000 | 0.000 | 0.000 | 0.000 |
| 34 | 91 | G | 2.5672E+00 | 1.000 | 0.000 | 0.000 | 0.000 | 0.000 | 0.000 | 0.000 | 0.000 | 0.000 | 5.725 |
| 35 | 91 | G | 1.0830E+00 | 0.930 | 0.000 | 0.000 | 0.000 | 0.000 | 0.000 | 0.000 | 0.070 | 0.000 | 5.015 |
| 36 | 91 | G | 8.0599E-02 | 1.000 | 0.000 | 0.000 | 0.000 | 0.000 | 0.000 | 0.000 | 0.000 | 0.000 | 3.836 |
| 37 | 91 | G | 1.1951E-02 | 1.000 | 0.000 | 0.000 | 0.000 | 0.000 | 0.000 | 0.000 | 0.000 | 0.000 | 3.850 |
| 38 | 91 | G | 2.0268E-05 | 0.982 | 0.018 | 0.000 | 0.000 | 0.000 | 0.000 | 0.000 | 0.000 | 0.000 | 1.174 |
| 39 | 91 | I | 2.3243E-01 | 0.000 | 0.000 | 0.000 | 0.000 | 0.000 | 1.000 | 0.000 | 0.000 | 0.000 | 0.556 |
| 39 | 91 | G | 1.3726E-07 | 1.000 | 0.000 | 0.000 | 0.000 | 0.000 | 0.000 | 0.000 | 0.000 | 0.000 | 0.595 |
| 40 | 91 | G | 0.0000E+00 | 0.000 | 0.000 | 0.000 | 0.000 | 0.000 | 0.000 | 0.000 | 0.000 | 0.000 | 0.000 |
| 41 | 91 | I | 1.2939E-06 | 0.000 | 0.000 | 0.000 | 0.000 | 0.000 | 1.000 | 0.000 | 0.000 | 0.000 | 0.105 |
| 41 | 91 | G | 3.2330E-11 | 0.000 | 0.000 | 1.000 | 0.000 | 0.000 | 0.000 | 0.000 | 0.000 | 0.000 | 0.017 |
| 42 | 91 | I | 1.0664E-02 | 0.000 | 0.000 | 0.500 | 0.000 | 0.000 | 0.500 | 0.000 | 0.000 | 0.000 | 0.376 |
| 42 | 91 | G | 7.4532E-03 | 0.000 | 0.000 | 1.000 | 0.000 | 0.000 | 0.000 | 0.000 | 0.000 | 0.000 | 0.000 |
| 34 | 92 | G | 1.7874E+01 | 0.974 | 0.000 | 0.000 | 0.000 | 0.000 | 0.000 | 0.000 | 0.026 | 0.000 | 4.063 |
| 35 | 92 | G | 1.9804E+00 | 0.740 | 0.000 | 0.000 | 0.000 | 0.000 | 0.000 | 0.000 | 0.260 | 0.000 | 6.312 |
| 36 | 92 | G | 3.7671E-01 | 1.000 | 0.000 | 0.000 | 0.000 | 0.000 | 0.000 | 0.000 | 0.000 | 0.000 | 3.541 |
| 37 | 92 | G | 1.5403E-01 | 1.000 | 0.000 | 0.000 | 0.000 | 0.000 | 0.000 | 0.000 | 0.000 | 0.000 | 3.979 |
| 38 | 92 | G | 7.1048E-05 | 1.000 | 0.000 | 0.000 | 0.000 | 0.000 | 0.000 | 0.000 | 0.000 | 0.000 | 1.518 |
| 39 | 92 | G | 5.4579E-05 | 1.000 | 0.000 | 0.000 | 0.000 | 0.000 | 0.000 | 0.000 | 0.000 | 0.000 | 1.697 |
| 40 | 92 | G | 0.0000E+00 | 0.000 | 0.000 | 0.000 | 0.000 | 0.000 | 0.000 | 0.000 | 0.000 | 0.000 | 0.000 |
| 41 | 92 | I | 7.9036E-06 | 0.000 | 0.000 | 1.000 | 0.000 | 0.000 | 0.000 | 0.000 | 0.000 | 0.000 | 0.000 |
| 41 | 92 | G | 6.1070E-09 | 0.000 | 0.000 | 1.000 | 0.000 | 0.000 | 0.000 | 0.000 | 0.000 | 0.000 | 1.510 |
| 42 | 92 | G | 0.0000E+00 | 0.000 | 0.000 | 0.000 | 0.000 | 0.000 | 0.000 | 0.000 | 0.000 | 0.000 | 0.000 |
| 35 | 93 | G | 1.2672E+01 | 0.968 | 0.000 | 0.000 | 0.000 | 0.000 | 0.000 | 0.000 | 0.032 | 0.000 | 3.775 |
| 36 | 93 | G | 5.3732E-01 | 0.968 | 0.000 | 0.000 | 0.000 | 0.000 | 0.000 | 0.000 | 0.032 | 0.000 | 4.495 |
| 37 | 93 | G | 1.1951E-01 | 0.984 | 0.000 | 0.000 | 0.000 | 0.000 | 0.000 | 0.000 | 0.016 | 0.000 | 4.197 |
| 38 | 93 | G | 1.5507E-03 | 1.000 | 0.000 | 0.000 | 0.000 | 0.000 | 0.000 | 0.000 | 0.000 | 0.000 | 2.898 |
| 39 | 93 | I | 8.4530E-01 | 0.000 | 0.000 | 0.000 | 0.000 | 0.000 | 1.000 | 0.000 | 0.000 | 0.000 | 0.759 |
| 39 | 93 | G | 1.9064E-05 | 1.000 | 0.000 | 0.000 | 0.000 | 0.000 | 0.000 | 0.000 | 0.000 | 0.000 | 1.262 |
| 40 | 93 | G | 1.4943E-14 | 0.050 | 0.950 | 0.000 | 0.000 | 0.000 | 0.000 | 0.000 | 0.000 | 0.000 | 0.016 |
| 41 | 93 | I | 1.6157E-09 | 0.000 | 0.000 | 0.000 | 0.000 | 0.000 | 1.000 | 0.000 | 0.000 | 0.000 | 0.030 |
| 41 | 93 | G | 0.0000E+00 | 0.000 | 0.000 | 0.000 | 0.000 | 0.000 | 0.000 | 0.000 | 0.000 | 0.000 | 0.000 |
| 42 | 93 | I | 2.7905E-05 | 0.000 | 0.000 | 0.000 | 0.000 | 0.000 | 1.000 | 0.000 | 0.000 | 0.000 | 2.425 |
| 42 | 93 | G | 6.2785E-12 | 0.000 | 0.000 | 1.000 | 0.000 | 0.000 | 0.000 | 0.000 | 0.000 | 0.000 | 0.016 |
| 43 | 93 | I | 2.6557E-04 | 0.000 | 0.000 | 0.500 | 0.000 | 0.000 | 0.500 | 0.000 | 0.000 | 0.000 | 0.196 |
| 43 | 93 | G | 7.1311E-05 | 0.000 | 0.000 | 1.000 | 0.000 | 0.000 | 0.000 | 0.000 | 0.000 | 0.000 | 0.000 |
| 34 | 94 | G | 2.8929E+01 | 0.936 | 0.000 | 0.000 | 0.000 | 0.000 | 0.000 | 0.000 | 0.064 | 0.000 | 4.687 |
| 35 | 94 | G | 2.3401E+01 | 0.972 | 0.000 | 0.000 | 0.000 | 0.000 | 0.000 | 0.000 | 0.028 | 0.000 | 7.064 |
| 36 | 94 | G | 3.4657E+00 | 0.956 | 0.000 | 0.000 | 0.000 | 0.000 | 0.000 | 0.000 | 0.044 | 0.000 | 2.396 |
| 37 | 94 | G | 2.5768E-01 | 0.889 | 0.000 | 0.000 | 0.000 | 0.000 | 0.000 | 0.000 | 0.111 | 0.000 | 7.335 |
| 38 | 94 | G | 9.3669E-03 | 1.000 | 0.000 | 0.000 | 0.000 | 0.000 | 0.000 | 0.000 | 0.000 | 0.000 | 2.265 |
| 39 | 94 | G | 6.1779E-04 | 1.000 | 0.000 | 0.000 | 0.000 | 0.000 | 0.000 | 0.000 | 0.000 | 0.000 | 2.594 |
| 40 | 94 | G | 0.0000E+00 | 0.000 | 0.000 | 0.000 | 0.000 | 0.000 | 0.000 | 0.000 | 0.000 | 0.000 | 0.000 |
| 41 | 94 | I | 1.8435E-03 | 0.005 | 0.000 | 0.000 | 0.000 | 0.000 | 0.995 | 0.000 | 0.000 | 0.000 | 0.047 |
| 41 | 94 | G | 1.0965E-12 | 1.000 | 0.000 | 0.000 | 0.000 | 0.000 | 0.000 | 0.000 | 0.000 | 0.000 | 1.720 |
| 42 | 94 | G | 0.0000E+00 | 0.000 | 0.000 | 0.000 | 0.000 | 0.000 | 0.000 | 0.000 | 0.000 | 0.000 | 0.000 |
| 36 | 95 | G | 8.8865E-01 | 1.000 | 0.000 | 0.000 | 0.000 | 0.000 | 0.000 | 0.000 | 0.000 | 0.000 | 3.732 |
| 37 | 95 | G | 1.8386E+00 | 0.929 | 0.000 | 0.000 | 0.000 | 0.000 | 0.000 | 0.000 | 0.071 | 0.000 | 5.612 |
| 38 | 95 | G | 2.8408E-02 | 1.000 | 0.000 | 0.000 | 0.000 | 0.000 | 0.000 | 0.000 | 0.000 | 0.000 | 3.287 |
| 39 | 95 | G | 1.1216E-03 | 1.000 | 0.000 | 0.000 | 0.000 | 0.000 | 0.000 | 0.000 | 0.000 | 0.000 | 2.650 |
| 40 | 95 | G | 1.2534E-07 | 0.989 | 0.011 | 0.000 | 0.000 | 0.000 | 0.000 | 0.000 | 0.000 | 0.000 | 0.851 |
| 41 | 95 | I | 2.2216E-06 | 0.056 | 0.000 | 0.000 | 0.000 | 0.000 | 0.944 | 0.000 | 0.000 | 0.000 | 0.250 |
| 41 | 95 | G | 2.2652E-07 | 1.000 | 0.000 | 0.000 | 0.000 | 0.000 | 0.000 | 0.000 | 0.000 | 0.000 | 0.809 |
| 42 | 95 | G | 0.0000E+00 | 0.000 | 0.000 | 0.000 | 0.000 | 0.000 | 0.000 | 0.000 | 0.000 | 0.000 | 0.000 |
| 43 | 95 | I | 1.3371E-07 | 0.000 | 0.000 | 1.000 | 0.000 | 0.000 | 0.000 | 0.000 | 0.000 | 0.000 | 0.000 |
| 43 | 95 | G | 9.6270E-06 | 0.000 | 0.000 | 1.000 | 0.000 | 0.000 | 0.000 | 0.000 | 0.000 | 0.000 | 0.000 |

Fig.8  Teil5                10/23        0176105

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{ln}$ | $P_{2n}$ | $E_{Total}$ |
|---|---|---|---|---|---|---|---|---|---|---|---|---|---|
| 44 | 95 | G | 1.1669E-04 | 0.000 | 0.000 | 1.000 | 0.000 | 0.000 | 0.000 | 0.000 | 0.000 | 0.000 | 0.000 |
| 34 | 96 | G | 4.4173E+01 | 0.841 | 0.000 | 0.000 | 0.000 | 0.000 | 0.000 | 0.000 | 0.159 | 0.000 | 5.104 |
| 35 | 96 | G | 3.7067E+01 | 0.926 | 0.000 | 0.000 | 0.000 | 0.000 | 0.000 | 0.000 | 0.073 | 0.001 | 7.757 |
| 36 | 96 | G | 5.3899E+00 | 1.000 | 0.000 | 0.000 | 0.000 | 0.000 | 0.000 | 0.000 | 0.000 | 0.000 | 1.843 |
| 37 | 96 | G | 3.6869E+00 | 0.873 | 0.000 | 0.000 | 0.000 | 0.000 | 0.000 | 0.000 | 0.127 | 0.000 | 6.957 |
| 38 | 96 | G | 6.9315E-01 | 1.000 | 0.000 | 0.000 | 0.000 | 0.000 | 0.000 | 0.000 | 0.000 | 0.000 | 3.918 |
| 39 | 96 | I | 6.9315E-02 | 1.000 | 0.000 | 0.000 | 0.000 | 0.000 | 0.000 | 0.000 | 0.000 | 0.000 | 5.359 |
| 39 | 96 | G | 1.1552E-01 | 1.000 | 0.000 | 0.000 | 0.000 | 0.000 | 0.000 | 0.000 | 0.000 | 0.000 | 3.446 |
| 40 | 96 | G | 0.0000E+00 | 0.000 | 0.000 | 0.000 | 0.000 | 0.000 | 0.000 | 0.000 | 0.000 | 0.000 | 0.000 |
| 41 | 96 | G | 8.2262E-06 | 1.000 | 0.000 | 0.000 | 0.000 | 0.000 | 0.000 | 0.000 | 0.000 | 0.000 | 2.692 |
| 42 | 96 | G | 0.0000E+00 | 0.000 | 0.000 | 0.000 | 0.000 | 0.000 | 0.000 | 0.000 | 0.000 | 0.000 | 0.000 |
| 36 | 97 | G | 9.4848E+00 | 1.000 | 0.000 | 0.000 | 0.000 | 0.000 | 0.000 | 0.000 | 0.000 | 0.000 | 3.064 |
| 37 | 97 | G | 4.0773E+00 | 0.790 | 0.000 | 0.000 | 0.000 | 0.000 | 0.000 | 0.000 | 0.210 | 0.000 | 5.381 |
| 38 | 97 | G | 1.5753E+00 | 0.999 | 0.000 | 0.000 | 0.000 | 0.000 | 0.000 | 0.000 | 0.001 | 0.000 | 4.250 |
| 39 | 97 | I | 6.3013E-01 | 0.983 | 0.000 | 0.000 | 0.000 | 0.000 | 0.017 | 0.000 | 0.000 | 0.000 | 4.279 |
| 39 | 97 | G | 2.2360E-01 | 0.984 | 0.000 | 0.000 | 0.000 | 0.000 | 0.000 | 0.000 | 0.016 | 0.000 | 3.985 |
| 40 | 97 | G | 1.1461E-05 | 0.949 | 0.051 | 0.000 | 0.000 | 0.000 | 0.000 | 0.000 | 0.000 | 0.000 | 1.540 |
| 41 | 97 | I | 1.3078E-02 | 0.000 | 0.000 | 0.000 | 0.000 | 0.000 | 1.000 | 0.000 | 0.000 | 0.000 | 0.743 |
| 41 | 97 | G | 1.5611E-04 | 1.000 | 0.000 | 0.000 | 0.000 | 0.000 | 0.000 | 0.000 | 0.000 | 0.000 | 1.135 |
| 42 | 97 | G | 0.0000E+00 | 0.000 | 0.000 | 0.000 | 0.000 | 0.000 | 0.000 | 0.000 | 0.000 | 0.000 | 0.000 |
| 43 | 97 | I | 8.8164E-08 | 0.000 | 0.000 | 0.000 | 0.000 | 0.000 | 1.000 | 0.000 | 0.000 | 0.000 | 0.097 |
| 43 | 97 | G | 8.4541E-15 | 0.000 | 0.000 | 1.000 | 0.000 | 0.000 | 0.000 | 0.000 | 0.000 | 0.000 | 0.017 |
| 44 | 97 | G | 2.7660E-06 | 0.000 | 0.000 | 1.000 | 0.000 | 0.000 | 0.000 | 0.000 | 0.000 | 0.000 | 0.253 |
| 36 | 98 | G | 9.3115E+00 | 1.000 | 0.000 | 0.000 | 0.000 | 0.000 | 0.000 | 0.000 | 0.000 | 0.000 | 1.989 |
| 37 | 98 | G | 6.0802E+00 | 0.740 | 0.000 | 0.000 | 0.000 | 0.000 | 0.000 | 0.000 | 0.260 | 0.000 | 7.259 |
| 38 | 98 | G | 1.0664E+00 | 0.995 | 0.000 | 0.000 | 0.000 | 0.000 | 0.000 | 0.000 | 0.005 | 0.000 | 2.760 |
| 39 | 98 | I | 3.4657E-01 | 1.000 | 0.000 | 0.000 | 0.000 | 0.000 | 0.000 | 0.000 | 0.000 | 0.000 | 5.682 |
| 39 | 98 | G | 1.0664E+00 | 0.995 | 0.000 | 0.000 | 0.000 | 0.000 | 0.000 | 0.000 | 0.005 | 0.000 | 4.592 |
| 40 | 98 | G | 2.2578E-02 | 1.000 | 0.000 | 0.000 | 0.000 | 0.000 | 0.000 | 0.000 | 0.000 | 0.000 | 0.910 |
| 41 | 98 | I | 2.2652E-04 | 1.000 | 0.000 | 0.000 | 0.000 | 0.000 | 0.000 | 0.000 | 0.000 | 0.000 | 3.486 |
| 41 | 98 | G | 2.3902E-01 | 1.000 | 0.000 | 0.000 | 0.000 | 0.000 | 0.000 | 0.000 | 0.000 | 0.000 | 2.094 |
| 42 | 98 | G | 0.0000E+00 | 0.000 | 0.000 | 0.000 | 0.000 | 0.000 | 0.000 | 0.000 | 0.000 | 0.000 | 0.000 |
| 43 | 98 | G | 5.2912E-15 | 1.000 | 0.000 | 0.000 | 0.000 | 0.000 | 0.000 | 0.000 | 0.000 | 0.000 | 1.518 |
| 44 | 98 | G | 0.0000E+00 | 0.000 | 0.000 | 0.000 | 0.000 | 0.000 | 0.000 | 0.000 | 0.000 | 0.000 | 0.000 |
| 38 | 99 | G | 2.3902E+00 | 1.000 | 0.000 | 0.000 | 0.000 | 0.000 | 0.000 | 0.000 | 0.000 | 0.000 | 4.735 |
| 39 | 99 | G | 4.5904E-01 | 0.962 | 0.000 | 0.000 | 0.000 | 0.000 | 0.000 | 0.000 | 0.038 | 0.000 | 3.812 |
| 40 | 99 | G | 3.3007E-01 | 0.584 | 0.416 | 0.000 | 0.000 | 0.000 | 0.000 | 0.000 | 0.000 | 0.000 | 2.388 |
| 41 | 99 | I | 4.4433E-03 | 1.000 | 0.000 | 0.000 | 0.000 | 0.000 | 0.000 | 0.000 | 0.000 | 0.000 | 2.074 |
| 41 | 99 | G | 4.6210E-02 | 1.000 | 0.000 | 0.000 | 0.000 | 0.000 | 0.000 | 0.000 | 0.000 | 0.000 | 1.696 |
| 42 | 99 | G | 2.9124E-06 | 0.870 | 0.130 | 0.000 | 0.000 | 0.000 | 0.000 | 0.000 | 0.000 | 0.000 | 0.654 |
| 43 | 99 | I | 3.2090E-05 | 0.000 | 0.000 | 0.000 | 0.000 | 0.000 | 1.000 | 0.000 | 0.000 | 0.000 | 0.143 |
| 43 | 99 | G | 1.0471E-13 | 1.000 | 0.000 | 0.000 | 0.000 | 0.000 | 0.000 | 0.000 | 0.000 | 0.000 | 0.085 |
| 44 | 99 | G | 0.0000E+00 | 0.000 | 0.000 | 0.000 | 0.000 | 0.000 | 0.000 | 0.000 | 0.000 | 0.000 | 0.000 |
| 45 | 99 | I | 4.0966E-05 | 0.000 | 0.000 | 1.000 | 0.000 | 0.000 | 0.000 | 0.000 | 0.000 | 0.000 | 0.000 |
| 45 | 99 | G | 5.0155E-07 | 0.000 | 0.000 | 1.000 | 0.000 | 0.000 | 0.000 | 0.000 | 0.000 | 0.000 | 0.000 |
| 46 | 99 | G | 5.3983E-04 | 0.000 | 0.000 | 1.000 | 0.000 | 0.000 | 0.000 | 0.000 | 0.000 | 0.000 | 0.000 |
| 36 | 100 | G | 1.4152E+01 | 1.000 | 0.000 | 0.000 | 0.000 | 0.000 | 0.000 | 0.000 | 0.000 | 0.000 | 3.169 |
| 37 | 100 | G | 1.3520E+01 | 0.669 | 0.000 | 0.000 | 0.000 | 0.000 | 0.000 | 0.000 | 0.329 | 0.002 | 6.199 |
| 38 | 100 | G | 3.2527E+00 | 0.999 | 0.000 | 0.000 | 0.000 | 0.000 | 0.000 | 0.000 | 0.001 | 0.000 | 3.255 |
| 39 | 100 | G | 7.3739E-01 | 1.000 | 0.000 | 0.000 | 0.000 | 0.000 | 0.000 | 0.000 | 0.000 | 0.000 | 7.339 |
| 40 | 100 | G | 9.7626E-02 | 1.000 | 0.000 | 0.000 | 0.000 | 0.000 | 0.000 | 0.000 | 0.000 | 0.000 | 1.850 |
| 41 | 100 | G | 4.6210E-01 | 1.000 | 0.000 | 0.000 | 0.000 | 0.000 | 0.000 | 0.000 | 0.000 | 0.000 | 3.465 |
| 42 | 100 | G | 0.0000E+00 | 0.000 | 0.000 | 0.000 | 0.000 | 0.000 | 0.000 | 0.000 | 0.000 | 0.000 | 0.000 |
| 43 | 100 | G | 4.3879E-02 | 1.000 | 0.000 | 0.000 | 0.000 | 0.000 | 0.000 | 0.000 | 0.000 | 0.000 | 1.405 |
| 44 | 100 | G | 0.0000E+00 | 0.000 | 0.000 | 0.000 | 0.000 | 0.000 | 0.000 | 0.000 | 0.000 | 0.000 | 0.000 |
| 38 | 101 | G | 5.8395E+00 | 0.998 | 0.000 | 0.000 | 0.000 | 0.000 | 0.000 | 0.000 | 0.002 | 0.000 | 4.113 |
| 39 | 101 | G | 9.9021E-01 | 1.000 | 0.000 | 0.000 | 0.000 | 0.000 | 0.000 | 0.000 | 0.000 | 0.000 | 5.898 |
| 40 | 101 | G | 2.8881E-01 | 1.000 | 0.000 | 0.000 | 0.000 | 0.000 | 0.000 | 0.000 | 0.000 | 0.000 | 3.539 |
| 41 | 101 | G | 9.7626E-02 | 1.000 | 0.000 | 0.000 | 0.000 | 0.000 | 0.000 | 0.000 | 0.000 | 0.000 | 2.554 |
| 42 | 101 | G | 7.9126E-04 | 1.000 | 0.000 | 0.000 | 0.000 | 0.000 | 0.000 | 0.000 | 0.000 | 0.000 | 1.995 |
| 43 | 101 | G | 8.1355E-04 | 1.000 | 0.000 | 0.000 | 0.000 | 0.000 | 0.000 | 0.000 | 0.000 | 0.000 | 0.816 |
| 44 | 101 | G | 0.0000E+00 | 0.000 | 0.000 | 0.000 | 0.000 | 0.000 | 0.000 | 0.000 | 0.000 | 0.000 | 0.000 |
| 45 | 101 | I | 1.8231E-06 | 0.000 | 0.000 | 0.500 | 0.000 | 0.000 | 0.500 | 0.000 | 0.000 | 0.000 | 0.076 |
| 45 | 101 | G | 6.6585E-09 | 0.000 | 0.000 | 1.000 | 0.000 | 0.000 | 0.000 | 0.000 | 0.000 | 0.000 | 0.000 |
| 46 | 101 | G | 2.2734E-05 | 0.000 | 0.000 | 1.000 | 0.000 | 0.000 | 0.000 | 0.000 | 0.000 | 0.000 | 0.000 |
| 38 | 102 | G | 5.3401E+00 | 0.992 | 0.000 | 0.000 | 0.000 | 0.000 | 0.000 | 0.000 | 0.008 | 0.000 | 4.105 |
| 39 | 102 | G | 1.3863E+00 | 1.000 | 0.000 | 0.000 | 0.000 | 0.000 | 0.000 | 0.000 | 0.000 | 0.000 | 6.807 |
| 40 | 102 | G | 3.3007E-01 | 1.000 | 0.000 | 0.000 | 0.000 | 0.000 | 0.000 | 0.000 | 0.000 | 0.000 | 2.629 |
| 41 | 102 | G | 5.3319E-01 | 1.000 | 0.000 | 0.000 | 0.000 | 0.000 | 0.000 | 0.000 | 0.000 | 0.000 | 4.396 |
| 42 | 102 | G | 1.0315E-03 | 1.000 | 0.000 | 0.000 | 0.000 | 0.000 | 0.000 | 0.000 | 0.000 | 0.000 | 0.370 |
| 43 | 102 | I | 2.6866E-03 | 0.985 | 0.000 | 0.000 | 0.000 | 0.000 | 0.015 | 0.000 | 0.000 | 0.000 | 3.282 |
| 43 | 102 | G | 1.3078E-01 | 1.000 | 0.000 | 0.000 | 0.000 | 0.000 | 0.000 | 0.000 | 0.000 | 0.000 | 2.037 |
| 44 | 102 | G | 0.0000E+00 | 0.000 | 0.000 | 0.000 | 0.000 | 0.000 | 0.000 | 0.000 | 0.000 | 0.000 | 0.000 |
| 45 | 102 | I | 7.5754E-09 | 0.208 | 0.000 | 0.747 | 0.000 | 0.000 | 0.050 | 0.000 | 0.000 | 0.000 | 0.098 |
| 45 | 102 | G | 8.4530E-15 | 0.000 | 0.000 | 1.000 | 0.000 | 0.000 | 0.000 | 0.000 | 0.000 | 0.000 | 2.152 |
| 46 | 102 | G | 0.0000E+00 | 0.000 | 0.000 | 0.000 | 0.000 | 0.000 | 0.000 | 0.000 | 0.000 | 0.000 | 0.000 |
| 39 | 103 | G | 2.0884E+00 | 0.969 | 0.000 | 0.000 | 0.000 | 0.000 | 0.000 | 0.000 | 0.031 | 0.000 | 4.997 |
| 40 | 103 | G | 5.3319E-01 | 1.000 | 0.000 | 0.000 | 0.000 | 0.000 | 0.000 | 0.000 | 0.000 | 0.000 | 5.325 |
| 41 | 103 | G | 4.6210E-01 | 1.000 | 0.000 | 0.000 | 0.000 | 0.000 | 0.000 | 0.000 | 0.000 | 0.000 | 2.545 |
| 42 | 103 | G | 1.0269E-02 | 1.000 | 0.000 | 0.000 | 0.000 | 0.000 | 0.000 | 0.000 | 0.000 | 0.000 | 2.674 |

## Fig.8 Teil6

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 43 | 103 | G | 1.2789E-02 | 1.000 | 0.000 | 0.000 | 0.000 | 0.000 | 0.000 | 0.000 | 0.000 | 0.000 | 1.226 |
| 44 | 103 | G | 2.0387E-07 | 0.038 | 0.362 | 0.000 | 0.000 | 0.000 | 0.000 | 0.000 | 0.000 | 0.000 | 0.556 |
| 45 | 103 | I | 2.0593E-04 | 0.000 | 0.000 | 0.000 | 0.000 | 0.000 | 1.000 | 0.000 | 0.000 | 0.000 | 0.040 |
| 45 | 103 | G | 0.0000E+00 | 0.000 | 0.000 | 0.000 | 0.000 | 0.000 | 0.000 | 0.000 | 0.000 | 0.000 | 0.000 |
| 46 | 103 | G | 4.7314E-07 | 0.000 | 0.000 | 1.000 | 0.000 | 0.000 | 0.000 | 0.000 | 0.000 | 0.000 | 0.065 |
| 47 | 103 | I | 1.2161E-01 | 0.000 | 0.000 | 0.000 | 0.000 | 0.000 | 1.000 | 0.000 | 0.000 | 0.000 | 0.134 |
| 47 | 103 | G | 1.7504E-04 | 0.000 | 0.000 | 1.000 | 0.000 | 0.000 | 0.000 | 0.000 | 0.000 | 0.000 | 0.000 |
| 38 | 104 | G | 1.3893E+01 | 0.961 | 0.000 | 0.000 | 0.000 | 0.000 | 0.000 | 0.000 | 0.039 | 0.000 | 4.797 |
| 39 | 104 | G | 3.9272E+00 | 0.988 | 0.000 | 0.000 | 0.000 | 0.000 | 0.000 | 0.000 | 0.012 | 0.000 | 7.58● |
| 40 | 104 | G | 5.7762E-01 | 1.000 | 0.000 | 0.000 | 0.000 | 0.000 | 0.000 | 0.000 | 0.000 | 0.000 | 2.212 |
| 41 | 104 | G | 8.6643E-01 | 1.000 | 0.000 | 0.000 | 0.000 | 0.000 | 0.000 | 0.000 | 0.000 | 0.000 | 5.414 |
| 42 | 104 | G | 1.1552E-02 | 1.000 | 0.000 | 0.000 | 0.000 | 0.000 | 0.000 | 0.000 | 0.000 | 0.000 | 1.440 |
| 43 | 104 | G | 6.3475E-04 | 1.000 | 0.000 | 0.000 | 0.000 | 0.000 | 0.000 | 0.000 | 0.000 | 0.000 | 3.500 |
| 44 | 104 | G | 0.0000E+00 | 0.000 | 0.000 | 0.000 | 0.000 | 0.000 | 0.000 | 0.000 | 0.000 | 0.000 | 0.000 |
| 45 | 104 | I | 2.6256E-03 | 0.002 | 0.000 | 0.000 | 0.000 | 0.000 | 0.998 | 0.000 | 0.000 | 0.000 | 0.133 |
| 45 | 104 | G | 1.6504E-02 | 0.996 | 0.000 | 0.004 | 0.000 | 0.000 | 0.000 | 0.000 | 0.000 | 0.000 | 1.000 |
| 46 | 104 | G | 0.0000E+00 | 0.000 | 0.000 | 0.000 | 0.000 | 0.000 | 0.000 | 0.000 | 0.000 | 0.000 | 0.000 |
| 40 | 105 | G | 2.4951E+00 | 1.000 | 0.000 | 0.000 | 0.000 | 0.000 | 0.000 | 0.000 | 0.000 | 0.000 | 4.470 |
| 41 | 105 | G | 2.4755E-01 | 1.000 | 0.000 | 0.000 | 0.000 | 0.000 | 0.000 | 0.000 | 0.000 | 0.000 | 4.030 |
| 42 | 105 | G | 1.8887E-02 | 1.000 | 0.000 | 0.000 | 0.000 | 0.000 | 0.000 | 0.000 | 0.000 | 0.000 | 3.669 |
| 43 | 105 | G | 1.5201E-03 | 1.000 | 0.000 | 0.000 | 0.000 | 0.000 | 0.000 | 0.000 | 0.000 | 0.000 | 1.890 |
| 44 | 105 | G | 4.3759E-05 | 0.745 | 0.255 | 0.000 | 0.000 | 0.000 | 0.000 | 0.000 | 0.000 | 0.000 | 1.153 |
| 45 | 105 | I | 1.5403E-02 | 0.000 | 0.000 | 0.000 | 0.000 | 0.000 | 1.000 | 0.000 | 0.000 | 0.000 | 0.130 |
| 45 | 105 | G | 5.4152E-06 | 1.000 | 0.000 | 0.000 | 0.000 | 0.000 | 0.000 | 0.000 | 0.000 | 0.000 | 0.231 |
| 46 | 105 | G | 0.0000E+00 | 0.000 | 0.000 | 0.000 | 0.000 | 0.000 | 0.000 | 0.000 | 0.000 | 0.000 | 0.000 |
| 47 | 105 | I | 1.6045E-03 | 0.000 | 0.000 | 0.000 | 0.000 | 0.000 | 1.000 | 0.000 | 0.000 | 0.000 | 0.025 |
| 47 | 105 | G | 1.9432E-07 | 0.000 | 0.000 | 1.000 | 0.000 | 0.000 | 0.000 | 0.000 | 0.000 | 0.000 | 0.000 |
| 48 | 105 | G | 2.0815E-04 | 0.000 | 0.000 | 1.000 | 0.000 | 0.000 | 0.000 | 0.000 | 0.000 | 0.000 | 0.000 |
| 40 | 106 | G | 4.0678E+00 | 1.000 | 0.000 | 0.000 | 0.000 | 0.000 | 0.000 | 0.000 | 0.000 | 0.000 | 2.756 |
| 41 | 106 | G | 6.9315E-01 | 1.000 | 0.000 | 0.000 | 0.000 | 0.000 | 0.000 | 0.000 | 0.000 | 0.000 | 5.824 |
| 42 | 106 | G | 8.4530E-02 | 1.000 | 0.000 | 0.000 | 0.000 | 0.000 | 0.000 | 0.000 | 0.000 | 0.000 | 1.610 |
| 43 | 106 | G | 1.9254E-02 | 1.000 | 0.000 | 0.000 | 0.000 | 0.000 | 0.000 | 0.000 | 0.000 | 0.000 | 4.187 |
| 44 | 106 | G | 2.1797E-08 | 1.000 | 0.000 | 0.000 | 0.000 | 0.000 | 0.000 | 0.000 | 0.000 | 0.000 | 0.010 |
| 45 | 106 | I | 8.7519E-05 | 1.000 | 0.000 | 0.000 | 0.000 | 0.000 | 0.000 | 0.000 | 0.000 | 0.000 | 3.094 |
| 45 | 106 | G | 2.3105E-02 | 1.000 | 0.000 | 0.000 | 0.000 | 0.000 | 0.000 | 0.000 | 0.000 | 0.000 | 1.626 |
| 46 | 106 | G | 0.0000E+00 | 0.000 | 0.000 | 0.000 | 0.000 | 0.000 | 0.000 | 0.000 | 0.000 | 0.000 | 0.000 |
| 47 | 106 | I | 9.6673E-07 | 0.000 | 0.000 | 1.000 | 0.000 | 0.000 | 0.000 | 0.000 | 0.000 | 0.000 | 0.000 |
| 47 | 106 | G | 4.8135E-04 | 0.000 | 0.000 | 1.000 | 0.000 | 0.000 | 0.000 | 0.000 | 0.000 | 0.000 | 1.219 |
| 48 | 106 | G | 0.0000E+00 | 0.000 | 0.000 | 0.000 | 0.000 | 0.000 | 0.000 | 0.000 | 0.000 | 0.000 | 0.000 |
| 41 | 107 | G | 1.7755E+00 | 0.986 | 0.000 | 0.000 | 0.000 | 0.000 | 0.000 | 0.000 | 0.014 | 0.000 | 3.267 |
| 42 | 107 | G | 2.3902E-01 | 1.000 | 0.000 | 0.000 | 0.000 | 0.000 | 0.000 | 0.000 | 0.000 | 0.000 | 4.724 |
| 43 | 107 | G | 3.3007E-02 | 1.000 | 0.000 | 0.000 | 0.000 | 0.000 | 0.000 | 0.000 | 0.000 | 0.000 | 2.384 |
| 44 | 107 | G | 3.0401E-03 | 1.000 | 0.000 | 0.000 | 0.000 | 0.000 | 0.000 | 0.000 | 0.000 | 0.000 | 1.444 |
| 45 | 107 | G | 5.3237E-04 | 1.000 | 0.000 | 0.000 | 0.000 | 0.000 | 0.000 | 0.000 | 0.000 | 0.000 | 0.747 |
| 46 | 107 | I | 3.2542E-02 | 0.000 | 0.000 | 0.000 | 0.000 | 0.000 | 1.000 | 0.000 | 0.000 | 0.000 | 0.215 |
| 46 | 107 | G | 3.3812E-15 | 1.000 | 0.000 | 0.000 | 0.000 | 0.000 | 0.000 | 0.000 | 0.000 | 0.000 | 0.008 |
| 47 | 107 | I | 1.5647E-02 | 0.000 | 0.000 | 0.000 | 0.000 | 0.000 | 1.000 | 0.000 | 0.000 | 0.000 | 0.093 |
| 47 | 107 | G | 0.0000E+00 | 0.000 | 0.000 | 0.000 | 0.000 | 0.000 | 0.000 | 0.000 | 0.000 | 0.000 | 0.000 |
| 48 | 107 | G | 2.9622E-05 | 0.000 | 0.000 | 1.000 | 0.000 | 0.000 | 0.000 | 0.000 | 0.000 | 0.000 | 0.171 |
| 49 | 107 | I | 1.3753E-07 | 0.000 | 0.000 | 0.000 | 0.000 | 0.000 | 1.000 | 0.000 | 0.000 | 0.000 | 0.678 |
| 49 | 107 | G | 3.5656E-04 | 0.000 | 0.000 | 1.000 | 0.000 | 0.000 | 0.000 | 0.000 | 0.000 | 0.000 | 0.000 |
| 40 | 108 | G | 6.8901E+00 | 0.994 | 0.000 | 0.000 | 0.000 | 0.000 | 0.000 | 0.000 | 0.006 | 0.000 | 3.522 |
| 41 | 108 | G | 3.2330E+00 | 0.994 | 0.000 | 0.000 | 0.000 | 0.000 | 0.000 | 0.000 | 0.006 | 0.000 | 6.460 |
| 42 | 108 | G | 5.3319E-01 | 1.000 | 0.000 | 0.000 | 0.000 | 0.000 | 0.000 | 0.000 | 0.000 | 0.000 | 1.735 |
| 43 | 108 | G | 1.3863E-01 | 1.000 | 0.000 | 0.000 | 0.000 | 0.000 | 0.000 | 0.000 | 0.000 | 0.000 | 3.985 |
| 44 | 108 | G | 2.5672E-03 | 0.000 | 1.000 | 0.000 | 0.000 | 0.000 | 0.000 | 0.000 | 0.000 | 0.000 | 0.492 |
| 45 | 108 | I | 4.1259E-02 | 1.000 | 0.000 | 0.000 | 0.000 | 0.000 | 0.000 | 0.000 | 0.000 | 0.000 | 2.146 |
| 45 | 108 | G | 1.9560E-03 | 1.000 | 0.000 | 0.000 | 0.000 | 0.000 | 0.000 | 0.000 | 0.000 | 0.000 | 3.460 |
| 46 | 108 | G | 0.0000E+00 | 0.000 | 0.000 | 0.000 | 0.000 | 0.000 | 0.000 | 0.000 | 0.000 | 0.000 | 0.000 |
| 47 | 108 | I | 1.7285E-09 | 0.000 | 0.000 | 0.913 | 0.000 | 0.000 | 0.087 | 0.000 | 0.000 | 0.000 | 1.634 |
| 47 | 108 | G | 4.7936E-03 | 0.972 | 0.000 | 0.028 | 0.000 | 0.000 | 0.000 | 0.000 | 0.000 | 0.000 | 0.628 |
| 48 | 108 | G | 0.0000E+00 | 0.000 | 0.000 | 0.000 | 0.000 | 0.000 | 0.000 | 0.000 | 0.000 | 0.000 | 0.000 |
| 41 | 109 | G | 2.7354E+00 | 0.945 | 0.000 | 0.000 | 0.000 | 0.000 | 0.000 | 0.000 | 0.055 | 0.000 | 1.550 |
| 42 | 109 | G | 6.4299E-01 | 1.000 | 0.000 | 0.000 | 0.000 | 0.000 | 0.000 | 0.000 | 0.000 | 0.000 | 4.834 |
| 43 | 109 | G | 4.9510E-01 | 1.000 | 0.000 | 0.000 | 0.000 | 0.000 | 0.000 | 0.000 | 0.000 | 0.000 | 2.924 |
| 44 | 109 | G | 2.0091E-02 | 1.000 | 0.000 | 0.000 | 0.000 | 0.000 | 0.000 | 0.000 | 0.000 | 0.000 | 3.001 |
| 45 | 109 | G | 8.6643E-03 | 1.000 | 0.000 | 0.000 | 0.000 | 0.000 | 0.000 | 0.000 | 0.000 | 0.000 | 1.232 |
| 46 | 109 | I | 2.4667E-03 | 0.000 | 0.000 | 0.000 | 0.000 | 0.000 | 1.000 | 0.000 | 0.000 | 0.000 | 0.189 |
| 46 | 109 | G | 1.4336E-05 | 0.000 | 1.000 | 0.000 | 0.000 | 0.000 | 0.000 | 0.000 | 0.000 | 0.000 | 0.362 |
| 47 | 109 | I | 1.7504E-02 | 0.000 | 0.000 | 0.000 | 0.000 | 0.000 | 1.000 | 0.000 | 0.000 | 0.000 | 0.068 |
| 47 | 109 | G | 0.0000E+00 | 0.000 | 0.000 | 0.000 | 0.000 | 0.000 | 1.000 | 0.000 | 0.000 | 0.000 | 0.000 |
| 48 | 109 | I | 4.8505E-11 | 0.000 | 0.000 | 1.000 | 0.000 | 0.000 | 0.000 | 0.000 | 0.000 | 0.000 | 0.020 |
| 49 | 109 | I | 8.6191E-03 | 0.000 | 0.000 | 0.000 | 0.000 | 0.000 | 1.000 | 0.000 | 0.000 | 0.000 | 0.650 |
| 49 | 109 | G | 4.5843E-05 | 0.000 | 0.000 | 1.000 | 0.000 | 0.000 | 0.000 | 0.000 | 0.000 | 0.000 | 0.000 |
| 40 | 110 | G | 1.1112E+01 | 0.961 | 0.000 | 0.000 | 0.000 | 0.000 | 0.000 | 0.000 | 0.039 | 0.000 | 4.326 |
| 41 | 110 | G | 5.3074E+00 | 0.953 | 0.000 | 0.000 | 0.000 | 0.000 | 0.000 | 0.000 | 0.047 | 0.000 | 7.011 |
| 42 | 110 | G | 8.5248E-01 | 1.000 | 0.000 | 0.000 | 0.000 | 0.000 | 0.000 | 0.000 | 0.000 | 0.000 | 2.630 |
| 43 | 110 | G | 8.3512E-01 | 1.000 | 0.000 | 0.000 | 0.000 | 0.000 | 0.000 | 0.000 | 0.000 | 0.000 | 5.649 |
| 44 | 110 | G | 5.5012E-02 | 1.000 | 0.000 | 0.000 | 0.000 | 0.000 | 0.000 | 0.000 | 0.000 | 0.000 | 1.064 |
| 45 | 110 | I | 2.1005E-01 | 1.000 | 0.000 | 0.000 | 0.000 | 0.000 | 0.000 | 0.000 | 0.000 | 0.000 | 2.573 |

## Fig.8 Teil7

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 45 | 110 | I | 2.5023E-02 | 1.000 | 0.000 | 0.000 | 0.000 | 0.000 | 0.000 | 0.000 | 0.000 | 0.000 | 3.738 |
| 46 | 110 | G | 0.0000E+00 | 0.000 | 0.000 | 0.000 | 0.000 | 0.000 | 0.000 | 0.000 | 0.000 | 0.000 | 0.000 |
| 47 | 110 | I | 3.2090E-02 | 0.986 | 0.000 | 0.000 | 0.000 | 0.000 | 0.014 | 0.000 | 0.000 | 0.000 | 2.812 |
| 47 | 110 | G | 2.8177E-02 | 0.997 | 0.000 | 0.003 | 0.000 | 0.000 | 0.000 | 0.000 | 0.000 | 0.000 | 1.218 |
| 48 | 110 | G | 0.0000E+00 | 0.000 | 0.000 | 0.000 | 0.000 | 0.000 | 0.000 | 0.000 | 0.000 | 0.000 | 0.000 |
| 42 | 111 | G | 1.4413E+00 | 0.999 | 0.000 | 0.000 | 0.000 | 0.000 | 0.000 | 0.000 | 0.001 | 0.000 | 5.607 |
| 43 | 111 | G | 4.7153E-01 | 1.000 | 0.000 | 0.000 | 0.000 | 0.000 | 0.000 | 0.000 | 0.000 | 0.000 | 3.421 |
| 44 | 111 | G | 3.1507E-01 | 1.000 | 0.000 | 0.000 | 0.000 | 0.000 | 0.000 | 0.000 | 0.000 | 0.000 | 3.180 |
| 45 | 111 | G | 6.3013E-02 | 1.000 | 0.000 | 0.000 | 0.000 | 0.000 | 0.000 | 0.000 | 0.000 | 0.000 | 2.009 |
| 46 | 111 | I | 3.5007E-05 | 0.077 | 0.184 | 0.000 | 0.000 | 0.000 | 0.739 | 0.000 | 0.000 | 0.000 | 0.537 |
| 46 | 111 | G | 4.9369E-04 | 0.010 | 0.990 | 0.000 | 0.000 | 0.000 | 0.000 | 0.000 | 0.000 | 0.000 | 0.879 |
| 47 | 111 | I | 1.0664E-02 | 0.002 | 0.005 | 0.000 | 0.000 | 0.000 | 0.993 | 0.000 | 0.000 | 0.000 | 0.062 |
| 47 | 111 | G | 1.0763E-06 | 0.987 | 0.013 | 0.000 | 0.000 | 0.000 | 0.000 | 0.000 | 0.000 | 0.000 | 0.376 |
| 48 | 111 | I | 2.3576E-04 | 0.000 | 0.000 | 0.000 | 0.000 | 0.000 | 1.000 | 0.000 | 0.000 | 0.000 | 0.396 |
| 48 | 111 | G | 0.0000E+00 | 0.000 | 0.000 | 0.000 | 0.000 | 0.000 | 0.000 | 0.000 | 0.000 | 0.000 | 0.000 |
| 49 | 111 | I | 1.5201E-03 | 0.000 | 0.000 | 0.000 | 0.000 | 0.000 | 1.000 | 0.000 | 0.000 | 0.000 | 0.537 |
| 49 | 111 | G | 2.8548E-06 | 0.000 | 0.000 | 1.000 | 0.000 | 0.000 | 0.000 | 0.000 | 0.000 | 0.000 | 0.000 |
| 50 | 111 | G | 3.2726E-04 | 0.000 | 0.000 | 1.000 | 0.000 | 0.000 | 0.000 | 0.000 | 0.000 | 0.000 | 0.000 |
| 42 | 112 | G | 1.7696E+00 | 0.998 | 0.000 | 0.000 | 0.000 | 0.000 | 0.000 | 0.000 | 0.002 | 0.000 | 3.542 |
| 43 | 112 | G | 7.7222E-01 | 0.999 | 0.000 | 0.000 | 0.000 | 0.000 | 0.000 | 0.000 | 0.001 | 0.000 | 6.503 |
| 44 | 112 | G | 1.9254E-01 | 1.000 | 0.000 | 0.000 | 0.000 | 0.000 | 0.000 | 0.000 | 0.000 | 0.000 | 1.361 |
| 45 | 112 | G | 9.9021E-01 | 1.000 | 0.000 | 0.000 | 0.000 | 0.000 | 0.000 | 0.000 | 0.000 | 0.000 | 3.727 |
| 46 | 112 | G | 9.1252E-06 | 1.000 | 0.000 | 0.000 | 0.000 | 0.000 | 0.000 | 0.000 | 0.000 | 0.000 | 0.097 |
| 47 | 112 | G | 6.1723E-05 | 1.000 | 0.000 | 0.000 | 0.000 | 0.000 | 0.000 | 0.000 | 0.000 | 0.000 | 2.077 |
| 48 | 112 | G | 0.0000E+00 | 0.000 | 0.000 | 0.000 | 0.000 | 0.000 | 0.000 | 0.000 | 0.000 | 0.000 | 0.000 |
| 49 | 112 | I | 5.5541E-04 | 0.000 | 0.000 | 0.000 | 0.000 | 0.000 | 1.000 | 0.000 | 0.000 | 0.000 | 0.155 |
| 49 | 112 | G | 6.0225E-04 | 0.440 | 0.000 | 0.560 | 0.000 | 0.000 | 0.000 | 0.000 | 0.000 | 0.000 | 0.094 |
| 50 | 112 | G | 0.0000E+00 | 0.000 | 0.000 | 0.000 | 0.000 | 0.000 | 0.000 | 0.000 | 0.000 | 0.000 | 0.000 |
| 43 | 113 | G | 8.1739E-01 | 0.994 | 0.000 | 0.000 | 0.000 | 0.000 | 0.000 | 0.000 | 0.006 | 0.000 | 4.217 |
| 44 | 113 | G | 2.3105E-01 | 1.000 | 0.000 | 0.000 | 0.000 | 0.000 | 0.000 | 0.000 | 0.000 | 0.000 | 3.952 |
| 45 | 113 | G | 7.7016E-01 | 1.000 | 0.000 | 0.000 | 0.000 | 0.000 | 0.000 | 0.000 | 0.000 | 0.000 | 2.185 |
| 46 | 113 | G | 7.2203E-03 | 1.000 | 0.000 | 0.000 | 0.000 | 0.000 | 0.000 | 0.000 | 0.000 | 0.000 | 2.242 |
| 47 | 113 | I | 1.0502E-02 | 0.196 | 0.000 | 0.000 | 0.000 | 0.000 | 0.804 | 0.000 | 0.000 | 0.000 | 0.259 |
| 47 | 113 | G | 3.5859E-05 | 0.985 | 0.015 | 0.000 | 0.000 | 0.000 | 0.000 | 0.000 | 0.000 | 0.000 | 0.830 |
| 48 | 113 | I | 1.5068E-09 | 0.999 | 0.000 | 0.000 | 0.000 | 0.000 | 0.001 | 0.000 | 0.000 | 0.000 | 0.184 |
| 48 | 113 | G | 2.4407E-24 | 1.000 | 0.000 | 0.000 | 0.000 | 0.000 | 0.000 | 0.000 | 0.000 | 0.000 | 0.091 |
| 49 | 113 | I | 1.1613E-04 | 0.000 | 0.000 | 0.000 | 0.000 | 0.000 | 1.000 | 0.000 | 0.000 | 0.000 | 0.392 |
| 49 | 113 | G | 0.0000E+00 | 0.000 | 0.000 | 0.000 | 0.000 | 0.000 | 0.000 | 0.000 | 0.000 | 0.000 | 0.000 |
| 50 | 113 | I | 5.3983E-04 | 0.000 | 0.000 | 0.500 | 0.000 | 0.000 | 0.500 | 0.000 | 0.000 | 0.000 | 0.079 |
| 50 | 113 | G | 6.9698E-08 | 0.000 | 0.000 | 1.000 | 0.000 | 0.000 | 0.000 | 0.000 | 0.000 | 0.000 | 0.026 |
| 51 | 113 | G | 1.7320E-03 | 0.000 | 0.000 | 1.000 | 0.000 | 0.000 | 0.000 | 0.000 | 0.000 | 0.000 | 0.000 |
| 42 | 114 | G | 4.1882E+00 | 0.981 | 0.000 | 0.000 | 0.000 | 0.000 | 0.000 | 0.000 | 0.019 | 0.000 | 4.438 |
| 43 | 114 | G | 1.4003E+00 | 0.989 | 0.000 | 0.000 | 0.000 | 0.000 | 0.000 | 0.000 | 0.011 | 0.000 | 7.236 |
| 44 | 114 | G | 6.1340E-01 | 1.000 | 0.000 | 0.000 | 0.000 | 0.000 | 0.000 | 0.000 | 0.000 | 0.000 | 1.945 |
| 45 | 114 | G | 4.0773E-01 | 1.000 | 0.000 | 0.000 | 0.000 | 0.000 | 0.000 | 0.000 | 0.000 | 0.000 | 4.582 |
| 46 | 114 | G | 4.8135E-03 | 1.000 | 0.000 | 0.000 | 0.000 | 0.000 | 0.000 | 0.000 | 0.000 | 0.000 | 0.559 |
| 47 | 114 | G | 1.5403E-01 | 1.000 | 0.000 | 0.000 | 0.000 | 0.000 | 0.000 | 0.000 | 0.000 | 0.000 | 2.277 |
| 48 | 114 | G | 0.0000E+00 | 0.000 | 0.000 | 0.000 | 0.000 | 0.000 | 0.000 | 0.000 | 0.000 | 0.000 | 0.000 |
| 49 | 114 | I | 1.6195E-07 | 0.000 | 0.000 | 0.043 | 0.000 | 0.000 | 0.957 | 0.000 | 0.000 | 0.000 | 0.239 |
| 49 | 114 | G | 9.6404E-03 | 0.995 | 0.000 | 0.005 | 0.000 | 0.000 | 0.000 | 0.000 | 0.000 | 0.000 | 0.803 |
| 50 | 114 | G | 0.0000E+00 | 0.000 | 0.000 | 0.000 | 0.000 | 0.000 | 0.000 | 0.000 | 0.000 | 0.000 | 0.000 |
| 44 | 115 | G | 1.1486E+00 | 1.000 | 0.000 | 0.000 | 0.000 | 0.000 | 0.000 | 0.000 | 0.000 | 0.000 | 4.704 |
| 45 | 115 | G | 7.0643E-01 | 1.000 | 0.000 | 0.000 | 0.000 | 0.000 | 0.000 | 0.000 | 0.000 | 0.000 | 2.491 |
| 46 | 115 | G | 1.8241E-02 | 1.000 | 0.000 | 0.000 | 0.000 | 0.000 | 0.000 | 0.000 | 0.000 | 0.000 | 3.362 |
| 47 | 115 | G | 5.2511E-04 | 1.000 | 0.000 | 0.000 | 0.000 | 0.000 | 0.000 | 0.000 | 0.000 | 0.000 | 1.571 |
| 48 | 115 | I | 1.7911E-07 | 1.000 | 0.000 | 0.000 | 0.000 | 0.000 | 0.000 | 0.000 | 0.000 | 0.000 | 0.637 |
| 48 | 115 | G | 3.6101E-06 | 0.000 | 1.000 | 0.000 | 0.000 | 0.000 | 0.000 | 0.000 | 0.000 | 0.000 | 0.510 |
| 49 | 115 | I | 4.2893E-05 | 0.050 | 0.000 | 0.000 | 0.000 | 0.000 | 0.950 | 0.000 | 0.000 | 0.000 | 0.333 |
| 49 | 115 | G | 5.5012E-23 | 1.000 | 0.000 | 0.000 | 0.000 | 0.000 | 0.000 | 0.000 | 0.000 | 0.000 | 0.154 |
| 50 | 115 | G | 0.0000E+00 | 0.000 | 0.000 | 0.000 | 0.000 | 0.000 | 0.000 | 0.000 | 0.000 | 0.000 | 0.000 |
| 51 | 115 | G | 3.5969E-04 | 0.000 | 0.000 | 1.000 | 0.000 | 0.000 | 0.000 | 0.000 | 0.000 | 0.000 | 0.000 |
| 52 | 115 | I | 1.7243E-03 | 0.000 | 0.000 | 1.000 | 0.000 | 0.000 | 0.000 | 0.000 | 0.000 | 0.000 | 0.000 |
| 52 | 115 | G | 2.0268E-03 | 0.000 | 0.000 | 1.000 | 0.000 | 0.000 | 0.000 | 0.000 | 0.000 | 0.000 | 0.000 |
| 42 | 116 | G | 8.3865E-01 | 0.969 | 0.000 | 0.000 | 0.000 | 0.000 | 0.000 | 0.000 | 0.031 | 0.000 | 5.328 |
| 43 | 116 | G | 3.0848E+00 | 0.961 | 0.000 | 0.000 | 0.000 | 0.000 | 0.000 | 0.000 | 0.039 | 0.000 | 7.755 |
| 44 | 116 | G | 1.7491E+00 | 1.000 | 0.000 | 0.000 | 0.000 | 0.000 | 0.000 | 0.000 | 0.000 | 0.000 | 2.827 |
| 45 | 116 | G | 1.1363E+00 | 1.000 | 0.000 | 0.000 | 0.000 | 0.000 | 0.000 | 0.000 | 0.000 | 0.000 | 5.154 |
| 46 | 116 | G | 5.5452E-02 | 1.000 | 0.000 | 0.000 | 0.000 | 0.000 | 0.000 | 0.000 | 0.000 | 0.000 | 1.164 |
| 47 | 116 | I | 6.6649E-02 | 0.984 | 0.000 | 0.000 | 0.000 | 0.000 | 0.016 | 0.000 | 0.000 | 0.000 | 3.628 |
| 47 | 116 | G | 4.2787E-03 | 1.000 | 0.000 | 0.000 | 0.000 | 0.000 | 0.000 | 0.000 | 0.000 | 0.000 | 3.786 |
| 48 | 116 | G | 0.0000E+00 | 0.000 | 0.000 | 0.000 | 0.000 | 0.000 | 0.000 | 0.000 | 0.000 | 0.000 | 0.000 |
| 49 | 116 | I | 2.1393E-04 | 1.000 | 0.000 | 0.000 | 0.000 | 0.000 | 0.000 | 0.000 | 0.000 | 0.000 | 2.810 |
| 49 | 116 | G | 4.9510E-02 | 1.000 | 0.000 | 0.000 | 0.000 | 0.000 | 0.000 | 0.000 | 0.000 | 0.000 | 1.394 |
| 50 | 116 | G | 0.0000E+00 | 0.000 | 0.000 | 0.000 | 0.000 | 0.000 | 0.000 | 0.000 | 0.000 | 0.000 | 0.000 |
| 44 | 117 | G | 2.8714E+00 | 0.998 | 0.000 | 0.000 | 0.000 | 0.000 | 0.000 | 0.000 | 0.002 | 0.000 | 5.487 |
| 45 | 117 | G | 1.7544E+00 | 0.998 | 0.000 | 0.000 | 0.000 | 0.000 | 0.000 | 0.000 | 0.002 | 0.000 | 2.303 |
| 46 | 117 | G | 1.4441E-01 | 1.000 | 0.000 | 0.000 | 0.000 | 0.000 | 0.000 | 0.000 | 0.000 | 0.000 | 3.752 |
| 47 | 117 | I | 1.3078E-01 | 0.868 | 0.132 | 0.000 | 0.000 | 0.000 | 0.000 | 0.000 | 0.000 | 0.000 | 2.155 |
| 47 | 117 | G | 9.4952E-03 | 0.878 | 0.122 | 0.000 | 0.000 | 0.000 | 0.000 | 0.000 | 0.000 | 0.000 | 2.401 |
| 48 | 117 | I | 5.8150E-05 | 0.990 | 0.010 | 0.000 | 0.000 | 0.000 | 0.000 | 0.000 | 0.000 | 0.000 | 2.231 |

# Fig.8 Teil8

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 49 | 117 | G | 7.9562E-05 | 0.084 | 0.916 | 0.000 | 0.000 | 0.000 | 0.000 | 0.000 | 0.000 | 0.000 | 1.508 |
| 49 | 117 | I | 9.9248E-05 | 0.529 | 0.000 | 0.000 | 0.000 | 0.000 | 0.471 | 0.000 | 0.000 | 0.000 | 0.525 |
| 49 | 117 | G | 2.6604E-04 | 0.998 | 0.002 | 0.000 | 0.000 | 0.000 | 0.000 | 0.000 | 0.000 | 0.000 | 0.955 |
| 50 | 117 | I | 5.8991E-07 | 0.000 | 0.000 | 0.000 | 0.000 | 0.000 | 1.000 | 0.000 | 0.000 | 0.000 | 0.315 |
| 50 | 117 | G | 0.0000E+00 | 0.000 | 0.000 | 0.000 | 0.000 | 0.000 | 0.000 | 0.000 | 0.000 | 0.000 | 0.000 |
| 51 | 117 | G | 6.6765E-05 | 0.000 | 0.000 | 1.000 | 0.000 | 0.000 | 0.000 | 0.000 | 0.000 | 0.000 | 0.000 |
| 52 | 117 | G | 1.1564E-04 | 0.000 | 0.000 | 1.000 | 0.000 | 0.000 | 0.000 | 0.000 | 0.000 | 0.000 | 0.000 |
| 44 | 118 | G | 4.0440E+00 | 0.997 | 0.000 | 0.000 | 0.000 | 0.000 | 0.000 | 0.000 | 0.000 | 0.000 | 0.000 |
| 45 | 118 | G | 2.1182E+00 | 0.998 | 0.000 | 0.000 | 0.000 | 0.000 | 0.000 | 0.000 | 0.063 | 0.000 | 3.701 |
| 46 | 118 | G | 2.2362E-01 | 1.000 | 0.000 | 0.000 | 0.000 | 0.000 | 0.000 | 0.000 | 0.002 | 0.000 | 5.916 |
| 47 | 118 | I | 2.4755E-01 | 0.580 | 0.000 | 0.000 | 0.000 | 0.000 | 0.420 | 0.000 | 0.000 | 0.000 | 1.612 |
| 47 | 118 | G | 1.6734E-01 | 1.000 | 0.000 | 0.000 | 0.000 | 0.000 | 0.000 | 0.000 | 0.000 | 0.000 | 2.600 |
| 48 | 118 | G | 2.2967E-04 | 1.000 | 0.000 | 0.000 | 0.000 | 0.000 | 0.000 | 0.000 | 0.000 | 0.000 | 3.663 |
| 49 | 118 | I | 2.6256E-03 | 1.000 | 0.000 | 0.000 | 0.000 | 0.000 | 0.000 | 0.000 | 0.000 | 0.000 | 0.244 |
| 49 | 118 | G | 1.3863E-01 | 1.000 | 0.000 | 0.000 | 0.000 | 0.000 | 0.000 | 0.000 | 0.000 | 0.000 | 3.289 |
| 50 | 118 | G | 0.0000E+00 | 0.000 | 0.000 | 0.000 | 0.000 | 0.000 | 0.000 | 0.000 | 0.000 | 0.000 | 1.866 |
| 51 | 118 | I | 3.8505E-05 | 0.000 | 0.000 | 1.000 | 0.000 | 0.000 | 0.000 | 0.000 | 0.000 | 0.000 | 0.000 |
| 51 | 118 | G | 7.2203E-04 | 0.000 | 0.000 | 1.000 | 0.000 | 0.000 | 0.000 | 0.000 | 0.000 | 0.000 | 0.000 |
| 52 | 118 | G | 1.3371E-06 | 0.000 | 0.000 | 1.000 | 0.000 | 0.000 | 0.000 | 0.000 | 0.000 | 0.000 | 0.000 |
| 44 | 119 | G | 6.1016E+00 | 0.924 | 0.000 | 0.000 | 0.000 | 0.000 | 0.000 | 0.000 | 0.000 | 0.000 | 0.000 |
| 45 | 119 | G | 3.6830E+00 | 0.934 | 0.000 | 0.000 | 0.000 | 0.000 | 0.000 | 0.000 | 0.012 | 0.000 | 6.276 |
| 46 | 119 | G | 4.4313E-01 | 1.000 | 0.000 | 0.000 | 0.000 | 0.000 | 0.000 | 0.000 | 0.016 | 0.000 | 4.394 |
| 47 | 119 | G | 3.3007E-01 | 0.780 | 0.220 | 0.000 | 0.000 | 0.000 | 0.000 | 0.000 | 0.000 | 0.000 | 3.834 |
| 48 | 119 | I | 5.2511E-03 | 0.845 | 0.155 | 0.000 | 0.000 | 0.000 | 0.000 | 0.000 | 0.000 | 0.000 | 2.904 |
| 48 | 119 | G | 4.2787E-03 | 0.055 | 0.945 | 0.000 | 0.000 | 0.000 | 0.000 | 0.000 | 0.000 | 0.000 | 2.837 |
| 49 | 119 | I | 6.4180E-04 | 0.975 | 0.000 | 0.000 | 0.000 | 0.000 | 0.025 | 0.000 | 0.000 | 0.000 | 1.995 |
| 49 | 119 | G | 5.0222E-03 | 0.900 | 0.100 | 0.000 | 0.000 | 0.000 | 0.000 | 0.000 | 0.000 | 0.000 | 1.082 |
| 50 | 119 | I | 2.7397E-08 | 0.000 | 0.000 | 0.000 | 0.000 | 0.000 | 1.000 | 0.000 | 0.000 | 0.000 | 1.324 |
| 50 | 119 | G | 0.0000E+00 | 0.000 | 0.000 | 0.000 | 0.000 | 0.000 | 0.000 | 0.000 | 0.000 | 0.000 | 0.090 |
| 51 | 119 | G | 5.0011E-07 | 0.000 | 0.000 | 1.000 | 0.000 | 0.000 | 0.000 | 0.000 | 0.000 | 0.000 | 0.000 |
| 52 | 119 | I | 1.7068E-06 | 0.000 | 0.000 | 1.000 | 0.000 | 0.000 | 0.000 | 0.000 | 0.000 | 0.000 | 0.000 |
| 52 | 119 | G | 1.2033E-05 | 0.000 | 0.000 | 1.000 | 0.000 | 0.000 | 0.000 | 0.000 | 0.000 | 0.000 | 0.000 |
| 44 | 120 | G | 6.9105E+00 | 0.977 | 0.000 | 0.000 | 0.000 | 0.000 | 0.000 | 0.000 | 0.000 | 0.000 | 0.000 |
| 45 | 120 | G | 5.5143E+00 | 0.981 | 0.000 | 0.000 | 0.000 | 0.000 | 0.000 | 0.000 | 0.023 | 0.000 | 4.430 |
| 46 | 120 | G | 7.6053E-01 | 1.000 | 0.000 | 0.000 | 0.000 | 0.000 | 0.000 | 0.000 | 0.019 | 0.000 | 6.523 |
| 47 | 120 | I | 2.1661E+00 | 0.570 | 0.000 | 0.000 | 0.000 | 0.000 | 0.430 | 0.000 | 0.000 | 0.000 | 1.944 |
| 47 | 120 | G | 5.9243E-01 | 1.000 | 0.000 | 0.000 | 0.000 | 0.000 | 0.430 | 0.000 | 0.000 | 0.000 | 2.908 |
| 48 | 120 | G | 1.3645E-02 | 1.000 | 0.000 | 0.000 | 0.000 | 0.000 | 0.000 | 0.000 | 0.000 | 0.000 | 4.170 |
| 49 | 120 | I | 1.5003E-02 | 1.000 | 0.000 | 0.000 | 0.000 | 0.000 | 0.000 | 0.000 | 0.000 | 0.000 | 0.709 |
| 49 | 120 | G | 2.2360E-01 | 1.000 | 0.000 | 0.000 | 0.000 | 0.000 | 0.000 | 0.000 | 0.000 | 0.000 | 2.630 |
| 50 | 120 | G | 0.0000E+00 | 0.000 | 0.000 | 0.000 | 0.000 | 0.000 | 0.000 | 0.000 | 0.000 | 0.000 | 3.903 |
| 51 | 120 | I | 1.3919E-06 | 0.000 | 0.000 | 1.000 | 0.000 | 0.000 | 0.000 | 0.000 | 0.000 | 0.000 | 0.000 |
| 51 | 120 | G | 7.2657E-04 | 0.000 | 0.000 | 1.000 | 0.000 | 0.000 | 0.000 | 0.000 | 0.000 | 0.000 | 0.000 |
| 52 | 120 | G | 0.0000E+00 | 0.000 | 0.000 | 0.000 | 0.000 | 0.000 | 0.000 | 0.000 | 0.000 | 0.000 | 0.000 |
| 45 | 121 | G | 5.7332E+00 | 0.959 | 0.000 | 0.000 | 0.000 | 0.000 | 0.000 | 0.000 | 0.000 | 0.000 | 0.000 |
| 46 | 121 | G | 1.2725E+00 | 1.000 | 0.000 | 0.000 | 0.000 | 0.000 | 0.000 | 0.000 | 0.041 | 0.000 | 4.662 |
| 47 | 121 | G | 8.6643E-01 | 1.000 | 0.000 | 0.000 | 0.000 | 0.000 | 0.000 | 0.000 | 0.000 | 0.000 | 4.251 |
| 48 | 121 | I | 1.4441E-01 | 1.000 | 0.000 | 0.000 | 0.000 | 0.000 | 0.000 | 0.000 | 0.000 | 0.000 | 3.775 |
| 48 | 121 | G | 5.4152E-02 | 0.300 | 0.700 | 0.000 | 0.000 | 0.000 | 0.000 | 0.000 | 0.000 | 0.000 | 3.326 |
| 49 | 121 | I | 3.0401E-03 | 1.000 | 0.000 | 0.000 | 0.000 | 0.000 | 0.000 | 0.000 | 0.000 | 0.000 | 2.954 |
| 49 | 121 | G | 3.0006E-02 | 0.887 | 0.113 | 0.000 | 0.000 | 0.000 | 0.000 | 0.000 | 0.000 | 0.000 | 1.618 |
| 50 | 121 | I | 4.3870E-10 | 0.224 | 0.000 | 0.000 | 0.000 | 0.000 | 0.776 | 0.000 | 0.000 | 0.000 | 1.913 |
| 50 | 121 | G | 7.1311E-06 | 1.000 | 0.000 | 0.000 | 0.000 | 0.000 | 0.000 | 0.000 | 0.000 | 0.000 | 0.036 |
| 51 | 121 | G | 0.0000E+00 | 0.000 | 0.000 | 0.000 | 0.000 | 0.000 | 0.000 | 0.000 | 0.000 | 0.000 | 0.117 |
| 52 | 121 | I | 5.2077E-08 | 0.000 | 0.000 | 0.500 | 0.000 | 0.000 | 0.500 | 0.000 | 0.000 | 0.000 | 0.000 |
| 52 | 121 | G | 4.7737E-07 | 0.000 | 0.000 | 1.000 | 0.000 | 0.000 | 0.000 | 0.000 | 0.000 | 0.000 | 0.295 |
| 53 | 121 | G | 9.0821E-05 | 0.000 | 0.000 | 1.000 | 0.000 | 0.000 | 0.000 | 0.000 | 0.000 | 0.000 | 0.585 |
| 44 | 122 | G | 1.0868E+01 | 0.934 | 0.000 | 0.000 | 0.000 | 0.000 | 0.000 | 0.000 | 0.000 | 0.000 | 0.000 |
| 45 | 122 | G | 8.5956E+00 | 0.951 | 0.000 | 0.000 | 0.000 | 0.000 | 0.000 | 0.000 | 0.066 | 0.000 | 5.302 |
| 46 | 122 | G | 1.6184E+00 | 1.000 | 0.000 | 0.000 | 0.000 | 0.000 | 0.000 | 0.000 | 0.049 | 0.000 | 6.974 |
| 47 | 122 | G | 1.4441E+00 | 1.000 | 0.000 | 0.000 | 0.000 | 0.000 | 0.000 | 0.000 | 0.000 | 0.000 | 2.793 |
| 48 | 122 | G | 1.2603E-01 | 1.000 | 0.000 | 0.000 | 0.000 | 0.000 | 0.000 | 0.000 | 0.000 | 0.000 | 6.141 |
| 49 | 122 | I | 6.1296E-07 | 1.000 | 0.000 | 0.000 | 0.000 | 0.000 | 0.000 | 0.000 | 0.000 | 0.000 | 1.254 |
| 49 | 122 | G | 4.6210E-01 | 1.000 | 0.000 | 0.000 | 0.000 | 0.000 | 0.000 | 0.000 | 0.000 | 0.000 | 4.506 |
| 50 | 122 | G | 0.0000E+00 | 0.000 | 0.000 | 0.000 | 0.000 | 0.000 | 0.000 | 0.000 | 0.000 | 0.000 | 3.196 |
| 51 | 122 | I | 2.7506E-03 | 0.000 | 0.000 | 0.000 | 0.000 | 0.000 | 1.000 | 0.000 | 0.000 | 0.000 | 0.000 |
| 51 | 122 | G | 2.9749E-06 | 0.967 | 0.000 | 0.033 | 0.000 | 0.000 | 0.000 | 0.000 | 0.000 | 0.000 | 0.163 |
| 52 | 122 | G | 0.0000E+00 | 0.000 | 0.000 | 0.000 | 0.000 | 0.000 | 0.000 | 0.000 | 0.000 | 0.000 | 1.006 |
| 45 | 123 | G | 8.4468E+00 | 0.929 | 0.000 | 0.000 | 0.000 | 0.000 | 0.000 | 0.000 | 0.000 | 0.000 | 0.000 |
| 46 | 123 | G | 2.4915E+00 | 0.999 | 0.000 | 0.000 | 0.000 | 0.000 | 0.000 | 0.000 | 0.071 | 0.000 | 5.234 |
| 47 | 123 | G | 1.7773E+00 | 1.000 | 0.000 | 0.000 | 0.000 | 0.000 | 0.000 | 0.000 | 0.001 | 0.000 | 5.024 |
| 48 | 123 | G | 2.1634E-01 | 1.000 | 0.000 | 0.000 | 0.000 | 0.000 | 0.000 | 0.000 | 0.000 | 0.000 | 4.137 |
| 49 | 123 | I | 1.4501E-02 | 0.000 | 1.000 | 0.000 | 0.000 | 0.000 | 0.000 | 0.000 | 0.000 | 0.000 | 4.370 |
| 49 | 123 | G | 1.1591E-01 | 0.037 | 0.963 | 0.000 | 0.000 | 0.000 | 0.000 | 0.000 | 0.000 | 0.000 | 2.102 |
| 50 | 123 | I | 2.8809E-04 | 1.000 | 0.000 | 0.000 | 0.000 | 0.000 | 0.000 | 0.000 | 0.000 | 0.000 | 2.487 |
| 50 | 123 | G | 6.1888E-08 | 1.000 | 0.000 | 0.000 | 0.000 | 0.000 | 0.000 | 0.000 | 0.000 | 0.000 | 0.621 |
| 51 | 123 | G | 0.0000E+00 | 0.000 | 0.000 | 0.000 | 0.000 | 0.000 | 0.000 | 0.000 | 0.000 | 0.000 | 0.523 |
| 52 | 123 | I | 6.7035E-08 | 0.000 | 0.000 | 0.000 | 0.000 | 0.000 | 1.000 | 0.000 | 0.000 | 0.000 | 0.000 |
| 52 | 123 | G | 1.7728E-21 | 0.000 | 0.000 | 0.000 | 0.000 | 0.000 | 1.000 | 0.000 | 0.000 | 0.000 | 0.248 |
| 53 | 123 | G | 1.4586E-05 | 0.000 | 0.000 | 1.000 | 0.000 | 0.000 | 0.000 | 0.000 | 0.000 | 0.000 | 0.017 |
| | | | | | | | | | | | | | 0.000 |

**Fig.8  Teil9**

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 44 | 124 | G | 1.7741E+01 | 0.794 | 0.000 | 0.000 | 0.000 | 0.000 | 0.000 | 0.000 | 0.206 | 0.000 | 5.670 |
| 45 | 124 | G | 1.2789E+01 | 0.900 | 0.000 | 0.000 | 0.000 | 0.000 | 0.000 | 0.000 | 0.095 | 0.005 | 7.597 |
| 46 | 124 | G | 2.3967E+00 | 0.996 | 0.000 | 0.000 | 0.000 | 0.000 | 0.000 | 0.000 | 0.004 | 0.000 | 3.629 |
| 47 | 124 | G | 1.7561E+01 | 0.996 | 0.000 | 0.000 | 0.000 | 0.000 | 0.000 | 0.000 | 0.004 | 0.000 | 6.769 |
| 48 | 124 | G | 1.7016E-01 | 1.000 | 0.000 | 0.000 | 0.000 | 0.000 | 0.000 | 0.000 | 0.000 | 0.000 | 1.926 |
| 49 | 124 | I | 2.8201E-01 | 1.000 | 0.000 | 0.000 | 0.000 | 0.000 | 0.000 | 0.000 | 0.000 | 0.000 | 5.123 |
| 49 | 124 | G | 2.1681E-01 | 1.000 | 0.000 | 0.000 | 0.000 | 0.000 | 0.000 | 0.000 | 0.000 | 0.000 | 4.651 |
| 50 | 124 | G | 0.0000E+00 | 0.000 | 0.000 | 0.000 | 0.000 | 0.000 | 0.000 | 0.000 | 0.000 | 0.000 | 0.000 |
| 51 | 124 | I | 7.2203E-03 | 0.200 | 0.000 | 0.000 | 0.000 | 0.000 | 0.800 | 0.000 | 0.000 | 0.000 | 0.442 |
| 51 | 124 | G | 1.3304E-07 | 1.000 | 0.000 | 0.000 | 0.000 | 0.000 | 0.000 | 0.000 | 0.000 | 0.000 | 2.234 |
| 52 | 124 | G | 0.0000E+00 | 0.000 | 0.000 | 0.000 | 0.000 | 0.000 | 0.000 | 0.000 | 0.000 | 0.000 | 0.000 |
| 46 | 125 | G | 4.4719E+00 | 0.982 | 0.000 | 0.000 | 0.000 | 0.000 | 0.000 | 0.000 | 0.018 | 0.000 | 5.718 |
| 47 | 125 | G | 2.0586E+00 | 0.992 | 0.000 | 0.000 | 0.000 | 0.000 | 0.000 | 0.000 | 0.008 | 0.000 | 4.777 |
| 48 | 125 | G | 5.6676E-01 | 1.000 | 0.000 | 0.000 | 0.000 | 0.000 | 0.000 | 0.000 | 0.000 | 0.000 | 5.021 |
| 49 | 125 | I | 5.6815E-02 | 0.000 | 0.000 | 0.000 | 0.000 | 0.000 | 0.000 | 0.000 | 0.000 | 0.000 | 2.610 |
| 49 | 125 | G | 3.0137E-01 | 0.112 | 0.888 | 0.000 | 0.000 | 0.000 | 0.000 | 0.000 | 0.000 | 0.000 | 3.098 |
| 50 | 125 | I | 1.2161E-03 | 1.000 | 0.000 | 0.000 | 0.000 | 0.000 | 0.000 | 0.000 | 0.000 | 0.000 | 1.156 |
| 50 | 125 | G | 8.3211E-07 | 1.000 | 0.000 | 0.000 | 0.000 | 0.000 | 0.000 | 0.000 | 0.000 | 0.000 | 1.128 |
| 51 | 125 | G | 7.9307E-09 | 1.000 | 0.000 | 0.000 | 0.000 | 0.000 | 0.000 | 0.000 | 0.000 | 0.000 | 0.565 |
| 52 | 125 | I | 1.3975E-07 | 0.000 | 0.000 | 0.000 | 0.000 | 0.000 | 1.000 | 0.000 | 0.000 | 0.000 | 0.145 |
| 52 | 125 | G | 0.0000E+00 | 0.000 | 0.000 | 0.000 | 0.000 | 0.000 | 0.000 | 0.000 | 0.000 | 0.000 | 0.000 |
| 53 | 125 | G | 1.3340E-07 | 0.000 | 0.000 | 1.000 | 0.000 | 0.000 | 0.000 | 0.000 | 0.000 | 0.000 | 0.059 |
| 54 | 125 | I | 1.2161E-07 | 0.000 | 0.000 | 0.000 | 0.000 | 0.000 | 1.000 | 0.000 | 0.000 | 0.000 | 0.253 |
| 54 | 125 | G | 1.1461E-05 | 0.000 | 0.000 | 1.000 | 0.000 | 0.000 | 0.000 | 0.000 | 0.000 | 0.000 | 0.301 |
| 46 | 126 | G | 5.2273E+00 | 0.968 | 0.000 | 0.000 | 0.000 | 0.000 | 0.000 | 0.000 | 0.032 | 0.000 | 4.512 |
| 47 | 126 | G | 2.9647E+00 | 0.987 | 0.000 | 0.000 | 0.000 | 0.000 | 0.000 | 0.000 | 0.013 | 0.000 | 7.354 |
| 48 | 126 | G | 1.3591E+00 | 1.000 | 0.000 | 0.000 | 0.000 | 0.000 | 0.000 | 0.000 | 0.000 | 0.000 | 3.061 |
| 49 | 126 | G | 4.9510E-01 | 1.000 | 0.000 | 0.000 | 0.000 | 0.000 | 0.000 | 0.000 | 0.000 | 0.000 | 5.934 |
| 50 | 126 | G | 2.0941E-09 | 0.000 | 1.000 | 0.000 | 0.000 | 0.000 | 0.000 | 0.000 | 0.000 | 0.000 | 0.181 |
| 51 | 126 | I | 7.2203E-03 | 0.864 | 0.000 | 0.000 | 0.000 | 0.000 | 0.136 | 0.000 | 0.000 | 0.000 | 2.202 |
| 51 | 126 | G | 6.4780E-07 | 1.000 | 0.000 | 0.000 | 0.000 | 0.000 | 0.000 | 0.000 | 0.000 | 0.000 | 3.051 |
| 52 | 126 | G | 0.0000E+00 | 0.000 | 0.000 | 0.000 | 0.000 | 0.000 | 0.000 | 0.000 | 0.000 | 0.000 | 0.000 |
| 53 | 126 | G | 1.9308E-06 | 0.437 | 0.000 | 0.563 | 0.000 | 0.000 | 0.000 | 0.000 | 0.000 | 0.000 | 0.599 |
| 54 | 126 | G | 0.0000E+00 | 0.000 | 0.000 | 0.000 | 0.000 | 0.000 | 0.000 | 0.000 | 0.000 | 0.000 | 0.000 |
| 47 | 127 | G | 3.5114E+00 | 0.872 | 0.000 | 0.000 | 0.000 | 0.000 | 0.000 | 0.000 | 0.128 | 0.000 | 5.121 |
| 48 | 127 | G | 1.2171E+00 | 1.000 | 0.000 | 0.000 | 0.000 | 0.000 | 0.000 | 0.000 | 0.000 | 0.000 | 6.055 |
| 49 | 127 | I | 1.8734E-01 | 0.000 | 1.000 | 0.000 | 0.000 | 0.000 | 0.000 | 0.000 | 0.000 | 0.000 | 3.253 |
| 49 | 127 | G | 6.1888E-01 | 0.146 | 0.847 | 0.000 | 0.000 | 0.000 | 0.000 | 0.000 | 0.007 | 0.000 | 3.740 |
| 50 | 127 | I | 2.8177E-03 | 1.000 | 0.000 | 0.000 | 0.000 | 0.000 | 0.000 | 0.000 | 0.000 | 0.000 | 1.607 |
| 50 | 127 | G | 9.1686E-05 | 1.000 | 0.000 | 0.000 | 0.000 | 0.000 | 0.000 | 0.000 | 0.000 | 0.000 | 2.373 |
| 51 | 127 | G | 2.0815E-06 | 0.850 | 0.150 | 0.000 | 0.000 | 0.000 | 0.000 | 0.000 | 0.000 | 0.000 | 0.975 |
| 52 | 127 | I | 7.3583E-08 | 0.024 | 0.000 | 0.000 | 0.000 | 0.000 | 0.976 | 0.000 | 0.000 | 0.000 | 0.093 |
| 52 | 127 | G | 2.0593E-05 | 1.000 | 0.000 | 0.000 | 0.000 | 0.000 | 0.000 | 0.000 | 0.000 | 0.000 | 0.230 |
| 53 | 127 | G | 0.0000E+00 | 0.000 | 0.000 | 0.000 | 0.000 | 0.000 | 0.000 | 0.000 | 0.000 | 0.000 | 0.000 |
| 54 | 127 | I | 9.9021E-03 | 0.000 | 0.000 | 0.000 | 0.000 | 0.000 | 1.000 | 0.000 | 0.000 | 0.000 | 0.000 |
| 54 | 127 | G | 2.2075E-07 | 0.000 | 0.000 | 1.000 | 0.000 | 0.000 | 0.000 | 0.000 | 0.000 | 0.000 | 0.309 |
| 55 | 127 | G | 3.0807E-05 | 0.000 | 0.000 | 1.000 | 0.000 | 0.000 | 0.000 | 0.000 | 0.000 | 0.000 | 0.000 |
| 46 | 128 | G | 8.4757E+00 | 0.805 | 0.000 | 0.000 | 0.000 | 0.000 | 0.000 | 0.000 | 0.195 | 0.000 | 5.094 |
| 47 | 128 | G | 4.8102E+00 | 0.949 | 0.000 | 0.000 | 0.000 | 0.000 | 0.000 | 0.000 | 0.051 | 0.000 | 7.652 |
| 48 | 128 | G | 1.4673E+00 | 0.998 | 0.000 | 0.000 | 0.000 | 0.000 | 0.000 | 0.000 | 0.002 | 0.000 | 4.304 |
| 49 | 128 | I | 7.7016E-01 | 0.130 | 0.870 | 0.000 | 0.000 | 0.000 | 0.000 | 0.000 | 0.000 | 0.000 | 6.133 |
| 49 | 128 | G | 7.7016E-01 | 0.988 | 0.000 | 0.000 | 0.000 | 0.000 | 0.000 | 0.000 | 0.012 | 0.000 | 5.848 |
| 50 | 128 | G | 1.9547E-04 | 0.000 | 1.000 | 0.000 | 0.000 | 0.000 | 0.000 | 0.000 | 0.000 | 0.000 | 0.846 |
| 51 | 128 | I | 1.1552E-03 | 0.966 | 0.000 | 0.000 | 0.000 | 0.000 | 0.034 | 0.000 | 0.000 | 0.000 | 2.864 |
| 51 | 128 | G | 2.1393E-05 | 1.000 | 0.000 | 0.000 | 0.000 | 0.000 | 0.000 | 0.000 | 0.000 | 0.000 | 3.556 |
| 52 | 128 | G | 0.0000E+00 | 0.000 | 0.000 | 0.000 | 0.000 | 0.000 | 0.000 | 0.000 | 0.000 | 0.000 | 0.000 |
| 53 | 128 | G | 4.6210E-04 | 0.931 | 0.000 | 0.069 | 0.000 | 0.000 | 0.000 | 0.000 | 0.000 | 0.000 | 0.837 |
| 54 | 128 | G | 0.0000E+00 | 0.000 | 0.000 | 0.000 | 0.000 | 0.000 | 0.000 | 0.000 | 0.000 | 0.000 | 0.000 |
| 48 | 129 | G | 2.2734E+00 | 0.989 | 0.000 | 0.000 | 0.000 | 0.000 | 0.000 | 0.000 | 0.011 | 0.000 | 7.139 |
| 49 | 129 | I | 5.5012E-01 | 1.000 | 0.000 | 0.000 | 0.000 | 0.000 | 0.000 | 0.000 | 0.000 | 0.000 | 3.751 |
| 49 | 129 | G | 1.1748E+00 | 0.859 | 0.106 | 0.000 | 0.000 | 0.000 | 0.000 | 0.000 | 0.035 | 0.000 | 4.480 |
| 50 | 129 | I | 1.5403E-03 | 1.000 | 0.000 | 0.000 | 0.000 | 0.000 | 0.000 | 0.000 | 0.000 | 0.000 | 2.605 |
| 50 | 129 | G | 5.2511E-03 | 1.000 | 0.000 | 0.000 | 0.000 | 0.000 | 0.000 | 0.000 | 0.000 | 0.000 | 2.064 |
| 51 | 129 | G | 4.4575E-05 | 0.810 | 0.190 | 0.000 | 0.000 | 0.000 | 0.000 | 0.000 | 0.000 | 0.000 | 1.664 |
| 52 | 129 | I | 2.3907E-07 | 0.370 | 0.000 | 0.000 | 0.000 | 0.000 | 0.630 | 0.000 | 0.000 | 0.000 | 0.308 |
| 52 | 129 | G | 1.6598E-04 | 1.000 | 0.000 | 0.000 | 0.000 | 0.000 | 0.000 | 0.000 | 0.000 | 0.000 | 0.607 |
| 53 | 129 | G | 1.4003E-18 | 1.000 | 0.000 | 0.000 | 0.000 | 0.000 | 0.000 | 0.000 | 0.000 | 0.000 | 0.079 |
| 54 | 129 | I | 9.0253E-06 | 0.000 | 0.000 | 0.000 | 0.000 | 0.000 | 1.000 | 0.000 | 0.000 | 0.000 | 0.236 |
| 54 | 129 | G | 0.0000E+00 | 0.000 | 0.000 | 0.000 | 0.000 | 0.000 | 0.000 | 0.000 | 0.000 | 0.000 | 0.000 |
| 55 | 129 | G | 6.0065E-06 | 0.000 | 0.000 | 1.000 | 0.000 | 0.000 | 0.000 | 0.000 | 0.000 | 0.000 | 0.000 |
| 56 | 129 | I | 9.0395E-05 | 0.000 | 0.000 | 1.000 | 0.000 | 0.000 | 0.000 | 0.000 | 0.000 | 0.000 | 0.000 |
| 56 | 129 | G | 8.7519E-05 | 0.000 | 0.000 | 1.000 | 0.000 | 0.000 | 0.000 | 0.000 | 0.000 | 0.000 | 0.000 |
| 46 | 130 | G | 1.3034E+01 | 0.000 | 0.000 | 0.000 | 0.000 | 0.000 | 0.000 | 0.000 | 0.972 | 0.028 | 3.141 |
| 47 | 130 | G | 7.9782E+00 | 0.111 | 0.000 | 0.000 | 0.000 | 0.000 | 0.000 | 0.000 | 0.878 | 0.011 | 3.857 |
| 48 | 130 | G | 2.8396E+00 | 0.963 | 0.000 | 0.000 | 0.000 | 0.000 | 0.000 | 0.000 | 0.037 | 0.000 | 5.842 |
| 49 | 130 | G | 2.1005E+00 | 0.955 | 0.000 | 0.000 | 0.000 | 0.000 | 0.000 | 0.000 | 0.045 | 0.000 | 6.744 |
| 50 | 130 | I | 6.7956E-03 | 1.000 | 0.000 | 0.000 | 0.000 | 0.000 | 0.000 | 0.000 | 0.000 | 0.000 | 1.044 |
| 50 | 130 | G | 3.1223E-03 | 0.000 | 1.000 | 0.000 | 0.000 | 0.000 | 0.000 | 0.000 | 0.000 | 0.000 | 1.492 |
| 51 | 130 | I | 1.7773E-03 | 1.000 | 0.000 | 0.000 | 0.000 | 0.000 | 0.000 | 0.000 | 0.000 | 0.000 | 3.545 |
| 51 | 130 | G | 2.8881E-04 | 1.000 | 0.000 | 0.000 | 0.000 | 0.000 | 0.000 | 0.000 | 0.000 | 0.000 | 3.887 |

## Fig.8  Teil10

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 52 | 130 | G | 0.3003E+00 | 0.000 | 0.000 | 0.000 | 0.000 | 0.000 | 0.000 | 0.000 | 0.000 | 0.000 | 0.000 |
| 53 | 130 | I | 1.2236E-03 | 0.170 | 0.000 | 0.000 | 0.000 | 0.000 | 0.830 | 0.000 | 0.000 | 0.000 | 0.114 |
| 53 | 130 | G | 1.5575E-05 | 1.000 | 0.000 | 0.000 | 0.000 | 0.000 | 0.000 | 0.000 | 0.000 | 0.000 | 2.432 |
| 54 | 130 | G | 0.0000E+00 | 0.000 | 0.000 | 0.000 | 0.000 | 0.000 | 0.000 | 0.000 | 0.000 | 0.000 | 0.000 |
| 48 | 131 | G | 4.0370E+00 | 0.007 | 0.000 | 0.000 | 0.000 | 0.000 | 0.000 | 0.000 | 0.002 | 0.001 | 3.167 |
| 49 | 131 | G | 2.5672E+00 | 0.905 | 0.000 | 0.000 | 0.000 | 0.000 | 0.000 | 0.000 | 0.095 | 0.000 | 5.461 |
| 50 | 131 | G | 1.3863E-02 | 1.000 | 0.000 | 0.000 | 0.000 | 0.000 | 0.000 | 0.000 | 0.000 | 0.000 | 2.965 |
| 51 | 131 | G | 5.0229E-04 | 0.930 | 0.070 | 0.000 | 0.000 | 0.000 | 0.000 | 0.000 | 0.000 | 0.000 | 2.253 |
| 52 | 131 | I | 6.4167E-06 | 0.813 | 0.000 | 0.000 | 0.000 | 0.000 | 0.187 | 0.000 | 0.000 | 0.000 | 1.646 |
| 52 | 131 | G | 4.6210E-04 | 1.000 | 0.000 | 0.000 | 0.000 | 0.000 | 0.000 | 0.000 | 0.000 | 0.000 | 1.132 |
| 53 | 131 | G | 1.0002E-06 | 0.994 | 0.006 | 0.000 | 0.000 | 0.000 | 0.000 | 0.000 | 0.000 | 0.000 | 0.574 |
| 54 | 131 | I | 6.7296E-07 | 0.000 | 0.000 | 0.000 | 0.000 | 0.000 | 1.000 | 0.000 | 0.000 | 0.000 | 0.164 |
| 54 | 131 | G | 0.0000E+00 | 0.000 | 0.000 | 0.000 | 0.000 | 0.000 | 0.000 | 0.000 | 0.000 | 0.000 | 0.000 |
| 55 | 131 | G | 8.2743E-07 | 0.000 | 0.000 | 1.000 | 0.000 | 0.000 | 0.000 | 0.000 | 0.000 | 0.000 | 0.028 |
| 56 | 131 | I | 7.9672E-04 | 0.000 | 0.000 | 0.000 | 0.000 | 0.000 | 1.000 | 0.000 | 0.000 | 0.000 | 0.198 |
| 56 | 131 | G | 6.9761E-07 | 0.000 | 0.000 | 1.000 | 0.000 | 0.000 | 0.000 | 0.000 | 0.000 | 0.000 | 0.515 |
| 48 | 132 | G | 4.8642E+00 | 0.000 | 0.000 | 0.000 | 0.000 | 0.000 | 0.000 | 0.000 | 0.995 | 0.005 | 2.616 |
| 49 | 132 | G | 3.1507E+00 | 1.000 | 0.000 | 0.000 | 0.000 | 0.000 | 0.000 | 0.000 | 0.000 | 0.000 | 3.766 |
| 50 | 132 | G | 1.7329E-02 | 1.000 | 0.000 | 0.000 | 0.000 | 0.000 | 0.000 | 0.000 | 0.000 | 0.000 | 2.017 |
| 51 | 132 | I | 2.8177E-03 | 1.000 | 0.000 | 0.000 | 0.000 | 0.000 | 0.000 | 0.000 | 0.000 | 0.000 | 3.723 |
| 51 | 132 | G | 4.1259E-03 | 1.000 | 0.000 | 0.000 | 0.000 | 0.000 | 0.000 | 0.000 | 0.000 | 0.000 | 3.745 |
| 52 | 132 | G | 2.5205E-06 | 1.000 | 0.000 | 0.000 | 0.000 | 0.000 | 0.000 | 0.000 | 0.000 | 0.000 | 0.337 |
| 53 | 132 | I | 1.3519E-04 | 0.116 | 0.000 | 0.000 | 0.000 | 0.000 | 0.882 | 0.000 | 0.000 | 0.000 | 0.445 |
| 53 | 132 | G | 8.3713E-05 | 1.000 | 0.000 | 0.000 | 0.000 | 0.000 | 0.000 | 0.000 | 0.000 | 0.000 | 2.751 |
| 54 | 132 | G | 0.0000E+00 | 0.000 | 0.000 | 0.000 | 0.000 | 0.000 | 0.000 | 0.000 | 0.000 | 0.000 | 0.000 |
| 55 | 132 | G | 1.2103E-06 | 0.020 | 0.000 | 0.980 | 0.000 | 0.000 | 0.000 | 0.000 | 0.000 | 0.000 | 0.728 |
| 56 | 132 | G | 0.0000E+00 | 0.000 | 0.000 | 0.000 | 0.000 | 0.000 | 0.000 | 0.000 | 0.000 | 0.000 | 0.000 |
| 49 | 133 | G | 3.0056E+00 | 0.000 | 0.000 | 0.000 | 0.000 | 0.000 | 0.000 | 0.000 | 0.991 | 0.009 | 2.664 |
| 50 | 133 | G | 4.6813E-01 | 1.000 | 0.000 | 0.000 | 0.000 | 0.000 | 0.000 | 0.000 | 0.000 | 0.000 | 4.809 |
| 51 | 133 | G | 5.0226E-01 | 1.000 | 0.000 | 0.000 | 0.000 | 0.000 | 0.000 | 0.000 | 0.000 | 0.000 | 2.075 |
| 52 | 133 | I | 2.0853E-04 | 0.773 | 0.061 | 0.000 | 0.000 | 0.000 | 0.166 | 0.000 | 0.000 | 0.000 | 1.813 |
| 52 | 133 | G | 9.2420E-04 | 1.000 | 0.000 | 0.000 | 0.000 | 0.000 | 0.000 | 0.000 | 0.000 | 0.000 | 1.741 |
| 53 | 133 | I | 7.7016E-02 | 0.000 | 0.000 | 0.000 | 0.000 | 0.000 | 1.000 | 0.000 | 0.000 | 0.000 | 0.634 |
| 53 | 133 | G | 9.2568E-06 | 0.970 | 0.030 | 0.000 | 0.000 | 0.000 | 0.000 | 0.000 | 0.000 | 0.000 | 1.015 |
| 54 | 133 | I | 3.6674E-06 | 0.000 | 0.000 | 0.000 | 0.000 | 0.000 | 1.000 | 0.000 | 0.000 | 0.000 | 0.233 |
| 54 | 133 | G | 1.5268E-06 | 1.000 | 0.000 | 0.000 | 0.000 | 0.000 | 0.000 | 0.000 | 0.000 | 0.000 | 0.182 |
| 55 | 133 | G | 0.0000E+00 | 0.000 | 0.000 | 0.000 | 0.000 | 0.000 | 0.000 | 0.000 | 0.000 | 0.000 | 0.000 |
| 56 | 133 | I | 4.9511E-06 | 0.000 | 0.000 | 0.000 | 0.000 | 0.000 | 1.000 | 0.000 | 0.000 | 0.000 | 0.246 |
| 56 | 133 | G | 2.0935E-03 | 0.000 | 0.000 | 1.000 | 0.000 | 0.000 | 0.000 | 0.000 | 0.000 | 0.000 | 0.442 |
| 57 | 133 | G | 1.9580E-04 | 0.000 | 0.000 | 1.000 | 0.000 | 0.000 | 0.000 | 0.000 | 0.000 | 0.000 | 0.000 |
| 48 | 134 | G | 1.3512E+01 | 0.000 | 0.000 | 0.000 | 0.000 | 0.000 | 0.000 | 0.000 | 0.951 | 0.049 | 3.125 |
| 49 | 134 | G | 4.8472E+00 | 0.000 | 0.000 | 0.000 | 0.000 | 0.000 | 0.000 | 0.000 | 0.728 | 0.272 | 2.834 |
| 50 | 134 | G | 2.7140E-01 | 0.068 | 0.000 | 0.000 | 0.000 | 0.000 | 0.000 | 0.000 | 0.932 | 0.000 | 1.558 |
| 51 | 134 | I | 8.1547E-01 | 0.999 | 0.000 | 0.000 | 0.000 | 0.000 | 0.000 | 0.000 | 0.001 | 0.000 | 3.854 |
| 51 | 134 | G | 6.6014E-02 | 1.000 | 0.000 | 0.000 | 0.000 | 0.000 | 0.000 | 0.000 | 0.000 | 0.000 | 4.933 |
| 52 | 134 | G | 2.7637E-01 | 1.000 | 0.000 | 0.000 | 0.000 | 0.000 | 0.000 | 0.000 | 0.000 | 0.000 | 1.124 |
| 53 | 134 | I | 3.3007E-03 | 0.000 | 0.023 | 0.000 | 0.000 | 0.000 | 0.977 | 0.000 | 0.000 | 0.000 | 0.332 |
| 53 | 134 | G | 2.2216E-04 | 1.000 | 0.000 | 0.000 | 0.000 | 0.000 | 0.000 | 0.000 | 0.000 | 0.000 | 3.151 |
| 54 | 134 | I | 2.3902E+00 | 0.000 | 0.000 | 0.000 | 0.000 | 0.000 | 1.000 | 0.000 | 0.000 | 0.000 | 1.966 |
| 54 | 134 | G | 0.0000E+00 | 0.000 | 0.000 | 0.000 | 0.000 | 0.000 | 0.000 | 0.000 | 0.000 | 0.000 | 0.000 |
| 55 | 134 | I | 6.6393E-05 | 0.000 | 0.000 | 0.000 | 0.000 | 0.000 | 1.000 | 0.000 | 0.000 | 0.000 | 0.139 |
| 55 | 134 | G | 1.0664E-08 | 0.728 | 0.272 | 0.000 | 0.000 | 0.000 | 0.000 | 0.000 | 0.000 | 0.000 | 1.718 |
| 56 | 134 | G | 0.0000E+00 | 0.000 | 0.000 | 0.000 | 0.000 | 0.000 | 0.000 | 0.000 | 0.000 | 0.000 | 0.000 |
| 50 | 135 | G | 4.8882E-01 | 0.006 | 0.000 | 0.000 | 0.000 | 0.000 | 0.000 | 0.000 | 0.985 | 0.007 | 1.507 |
| 51 | 135 | G | 4.0773E-01 | 0.920 | 0.000 | 0.000 | 0.000 | 0.000 | 0.000 | 0.000 | 0.080 | 0.000 | 1.175 |
| 52 | 135 | G | 3.850AE-02 | 1.000 | 0.000 | 0.000 | 0.000 | 0.000 | 0.000 | 0.000 | 0.000 | 0.000 | 4.428 |
| 53 | 135 | G | 2.9124E-05 | 0.854 | 0.146 | 0.000 | 0.000 | 0.000 | 0.000 | 0.000 | 0.000 | 0.000 | 1.954 |
| 54 | 135 | I | 7.5506E-04 | 0.000 | 0.000 | 0.000 | 0.000 | 0.000 | 1.000 | 0.000 | 0.000 | 0.000 | 0.527 |
| 54 | 135 | G | 2.1158E-05 | 1.000 | 0.000 | 0.000 | 0.000 | 0.000 | 0.000 | 0.000 | 0.000 | 0.000 | 0.567 |
| 55 | 135 | I | 2.1797E-04 | 0.000 | 0.000 | 0.000 | 0.000 | 0.000 | 1.000 | 0.000 | 0.000 | 0.000 | 1.627 |
| 55 | 135 | G | 1.0985E-14 | 1.000 | 0.000 | 0.000 | 0.000 | 0.000 | 0.000 | 0.000 | 0.000 | 0.000 | 0.056 |
| 56 | 135 | I | 6.7296E-05 | 0.000 | 0.000 | 0.000 | 0.000 | 0.000 | 1.000 | 0.000 | 0.000 | 0.000 | 0.268 |
| 56 | 135 | G | 0.0000E+00 | 0.000 | 0.000 | 0.000 | 0.000 | 0.000 | 0.000 | 0.000 | 0.000 | 0.000 | 0.000 |
| 57 | 135 | G | 9.9748E-06 | 0.000 | 0.000 | 1.000 | 0.000 | 0.000 | 0.000 | 0.000 | 0.000 | 0.000 | 0.000 |
| 58 | 135 | I | 3.4657E-02 | 0.000 | 0.000 | 0.000 | 0.000 | 0.000 | 1.000 | 0.000 | 0.000 | 0.000 | 0.447 |
| 58 | 135 | G | 1.0941E-05 | 0.000 | 0.000 | 1.000 | 0.000 | 0.000 | 0.000 | 0.000 | 0.000 | 0.000 | 0.000 |
| 48 | 136 | G | 2.0623E+01 | 0.000 | 0.000 | 0.000 | 0.000 | 0.000 | 0.000 | 0.000 | 0.899 | 0.101 | 3.407 |
| 49 | 136 | G | 1.1158E+01 | 0.000 | 0.000 | 0.000 | 0.000 | 0.000 | 0.000 | 0.000 | 0.877 | 0.123 | 2.984 |
| 50 | 136 | G | 2.1440E+00 | 0.614 | 0.000 | 0.000 | 0.000 | 0.000 | 0.000 | 0.000 | 0.386 | 0.000 | 3.670 |
| 51 | 136 | G | 8.6643E-01 | 1.000 | 0.000 | 0.000 | 0.000 | 0.000 | 0.000 | 0.000 | 0.000 | 0.000 | 1.547 |
| 52 | 136 | G | 3.9608E-02 | 0.995 | 0.000 | 0.000 | 0.000 | 0.000 | 0.000 | 0.000 | 0.005 | 0.000 | 3.396 |
| 53 | 136 | I | 1.5403E-02 | 1.000 | 0.000 | 0.000 | 0.000 | 0.000 | 0.000 | 0.000 | 0.000 | 0.000 | 4.643 |
| 53 | 136 | G | 8.2518E-03 | 1.000 | 0.000 | 0.000 | 0.000 | 0.000 | 0.000 | 0.000 | 0.000 | 0.000 | 4.379 |
| 54 | 136 | G | 0.0000E+00 | 0.000 | 0.000 | 0.000 | 0.000 | 0.000 | 0.000 | 0.000 | 0.000 | 0.000 | 0.000 |
| 55 | 136 | I | 3.6481E-02 | 0.000 | 0.000 | 0.000 | 0.000 | 0.000 | 1.000 | 0.000 | 0.000 | 0.000 | 0.001 |
| 55 | 136 | G | 6.0802E-07 | 0.854 | 0.146 | 0.000 | 0.000 | 0.000 | 0.000 | 0.000 | 0.000 | 0.000 | 2.008 |
| 56 | 136 | I | 1.8734E+00 | 0.000 | 0.000 | 0.000 | 0.000 | 0.000 | 1.000 | 0.000 | 0.000 | 0.000 | 2.031 |
| 56 | 136 | G | 0.0000E+00 | 0.000 | 0.000 | 0.000 | 0.000 | 0.000 | 0.000 | 0.000 | 0.000 | 0.000 | 0.000 |
| 50 | 137 | G | 3.2835E+00 | 0.071 | 0.000 | 0.000 | 0.000 | 0.000 | 0.000 | 0.000 | 0.908 | 0.021 | 2.614 |
| 51 | 137 | G | 1.9079E+00 | 0.164 | 0.000 | 0.000 | 0.000 | 0.000 | 0.000 | 0.000 | 0.836 | 0.000 | 2.516 |

# Fig.8    Teil II

16/23

0176105

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 52 | 137 | G | 1.9804E-01 | 0.995 | 0.000 | 0.000 | 0.000 | 0.000 | 0.000 | 0.000 | 0.005 | 0.000 | 5.056 |
| 53 | 137 | G | 2.8642E-02 | 0.946 | 0.000 | 0.000 | 0.000 | 0.000 | 0.000 | 0.000 | 0.054 | 0.000 | 3.220 |
| 54 | 137 | G | 3.0137E-03 | 1.000 | 0.000 | 0.000 | 0.000 | 0.000 | 0.000 | 0.000 | 0.000 | 0.000 | 1.898 |
| 55 | 137 | G | 7.2886E-10 | 0.056 | 0.944 | 0.000 | 0.000 | 0.000 | 0.000 | 0.000 | 0.000 | 0.000 | 0.172 |
| 56 | 137 | I | 4.5304E-03 | 0.000 | 0.000 | 0.000 | 0.000 | 0.000 | 1.000 | 0.000 | 0.000 | 0.000 | 0.662 |
| 56 | 137 | G | 0.0000E+00 | 0.000 | 0.000 | 0.000 | 0.000 | 0.000 | 0.000 | 0.000 | 0.000 | 0.000 | 0.000 |
| 57 | 137 | G | 3.6636E-13 | 0.000 | 0.000 | 1.000 | 0.000 | 0.000 | 0.000 | 0.000 | 0.000 | 0.000 | 0.031 |
| 58 | 137 | I | 5.5989E-06 | 0.000 | 0.000 | 0.000 | 0.000 | 0.000 | 0.000 | 0.000 | 0.000 | 0.000 | 0.254 |
| 58 | 137 | G | 2.1393E-05 | 0.000 | 0.000 | 1.000 | 0.000 | 0.000 | 1.000 | 0.000 | 0.000 | 0.000 | 0.052 |
| 50 | 138 | G | 0.0000E+00 | 1.000 | 0.000 | 0.000 | 0.000 | 0.000 | 0.000 | 0.000 | 0.000 | 0.000 | 2.562 |
| 51 | 138 | G | 3.0202E+00 | 0.167 | 0.000 | 0.000 | 0.000 | 0.000 | 0.000 | 0.000 | 0.815 | 0.018 | 2.980 |
| 52 | 138 | G | 4.9510E-01 | 1.000 | 0.000 | 0.000 | 0.000 | 0.000 | 0.000 | 0.000 | 0.000 | 0.000 | 3.895 |
| 53 | 138 | G | 1.0830E-01 | 0.975 | 0.000 | 0.000 | 0.000 | 0.000 | 0.000 | 0.000 | 0.025 | 0.000 | 4.365 |
| 54 | 138 | G | 8.1937E-04 | 1.000 | 0.000 | 0.000 | 0.000 | 0.000 | 0.000 | 0.000 | 0.000 | 0.000 | 1.772 |
| 55 | 138 | I | 3.9836E-03 | 0.190 | 0.000 | 0.000 | 0.000 | 0.000 | 0.810 | 0.000 | 0.000 | 0.000 | 0.736 |
| 55 | 138 | G | 3.5877E-04 | 1.000 | 0.000 | 0.000 | 0.000 | 0.000 | 0.000 | 0.000 | 0.000 | 0.000 | 3.609 |
| 56 | 138 | G | 0.0000E+00 | 0.000 | 0.000 | 0.000 | 0.000 | 0.000 | 0.000 | 0.000 | 0.000 | 0.000 | 0.000 |
| 57 | 138 | G | 1.6271E-19 | 0.333 | 0.000 | 0.667 | 0.000 | 0.000 | 0.000 | 0.000 | 0.000 | 0.000 | 1.237 |
| 58 | 138 | G | 0.0000E+00 | 0.000 | 0.000 | 0.000 | 0.000 | 0.000 | 0.000 | 0.000 | 0.000 | 0.000 | 0.000 |
| 51 | 139 | G | 3.5221E+00 | 0.002 | 0.000 | 0.000 | 0.000 | 0.000 | 0.000 | 0.000 | 0.997 | 0.001 | 2.298 |
| 52 | 139 | G | 9.7695E-01 | 0.991 | 0.000 | 0.000 | 0.000 | 0.000 | 0.000 | 0.000 | 0.009 | 0.000 | 5.509 |
| 53 | 139 | G | 3.0268E-01 | 0.900 | 0.000 | 0.000 | 0.000 | 0.000 | 0.000 | 0.010 | 0.100 | 0.000 | 4.119 |
| 54 | 139 | G | 1.7460E-02 | 1.000 | 0.000 | 0.000 | 0.000 | 0.000 | 0.000 | 0.000 | 0.000 | 0.000 | 2.670 |
| 55 | 139 | G | 1.2422E-03 | 1.000 | 0.000 | 0.000 | 0.000 | 0.000 | 0.000 | 0.000 | 0.000 | 0.000 | 1.981 |
| 56 | 139 | G | 1.3907E-04 | 1.000 | 0.000 | 0.000 | 0.000 | 0.000 | 0.000 | 0.000 | 0.000 | 0.000 | 0.946 |
| 57 | 139 | G | 0.0000E+00 | 0.000 | 0.000 | 0.000 | 0.000 | 0.000 | 0.000 | 0.000 | 0.000 | 0.000 | 0.000 |
| 58 | 139 | I | 1.2268E-02 | 0.000 | 0.000 | 1.000 | 0.000 | 0.000 | 0.000 | 0.000 | 0.000 | 0.000 | 0.752 |
| 58 | 139 | G | 5.8297E-08 | 0.000 | 0.000 | 1.000 | 0.000 | 0.000 | 0.000 | 0.000 | 0.000 | 0.000 | 0.192 |
| 50 | 139 | G | 4.2787E-05 | 0.000 | 0.000 | 1.000 | 0.000 | 0.000 | 0.000 | 0.000 | 0.000 | 0.000 | 0.164 |
| 52 | 140 | G | 1.2214E+00 | 0.825 | 0.000 | 0.000 | 0.000 | 0.000 | 0.000 | 0.000 | 0.175 | 0.000 | 3.917 |
| 53 | 140 | G | 8.0599E-01 | 0.680 | 0.000 | 0.000 | 0.000 | 0.000 | 0.000 | 0.000 | 0.320 | 0.000 | 4.965 |
| 54 | 140 | G | 5.0967E-02 | 1.000 | 0.000 | 0.000 | 0.000 | 0.000 | 0.000 | 0.000 | 0.000 | 0.000 | 2.348 |
| 55 | 140 | G | 1.0861E-02 | 1.000 | 0.000 | 0.000 | 0.000 | 0.000 | 0.000 | 0.000 | 0.000 | 0.000 | 3.840 |
| 56 | 140 | G | 6.3013E-07 | 1.000 | 0.000 | 0.000 | 0.000 | 0.000 | 0.000 | 0.000 | 0.000 | 0.000 | 0.492 |
| 57 | 140 | G | 4.7803E-06 | 1.000 | 0.000 | 0.000 | 0.000 | 0.000 | 0.000 | 0.000 | 0.000 | 0.000 | 2.852 |
| 58 | 140 | G | 0.0000E+00 | 0.000 | 0.000 | 0.000 | 0.000 | 0.000 | 0.000 | 0.000 | 0.000 | 0.000 | 0.000 |
| 59 | 140 | G | 3.3978E-03 | 0.000 | 0.000 | 1.000 | 0.000 | 0.000 | 0.000 | 0.000 | 0.000 | 0.000 | 0.700 |
| 60 | 140 | G | 2.3803E-06 | 0.000 | 0.000 | 1.000 | 0.000 | 0.000 | 0.000 | 0.000 | 0.000 | 0.000 | 0.000 |
| 53 | 141 | G | 1.6120E+00 | 0.880 | 0.000 | 0.000 | 0.000 | 0.000 | 0.000 | 0.000 | 0.120 | 0.000 | 3.880 |
| 54 | 141 | G | 4.0299E-01 | 0.999 | 0.000 | 0.000 | 0.000 | 0.000 | 0.000 | 0.000 | 0.001 | 0.000 | 3.186 |
| 55 | 141 | G | 2.7793E-02 | 0.999 | 0.000 | 0.000 | 0.000 | 0.000 | 0.000 | 0.000 | 0.001 | 0.000 | 2.799 |
| 56 | 141 | G | 6.3128E-04 | 1.000 | 0.000 | 0.000 | 0.000 | 0.000 | 0.000 | 0.000 | 0.000 | 0.000 | 1.759 |
| 57 | 141 | G | 4.8986E-05 | 1.000 | 0.000 | 0.000 | 0.000 | 0.000 | 0.000 | 0.000 | 0.000 | 0.000 | 1.003 |
| 58 | 141 | I | 2.4667E-07 | 1.000 | 0.000 | 0.000 | 0.000 | 0.000 | 0.000 | 0.000 | 0.000 | 0.000 | 0.247 |
| 59 | 141 | G | 0.0000E+00 | 0.000 | 0.000 | 0.000 | 0.000 | 0.000 | 0.000 | 0.000 | 0.000 | 0.000 | 0.000 |
| 60 | 141 | I | 1.1180E-02 | 0.000 | 0.000 | 0.000 | 0.000 | 0.000 | 1.000 | 0.000 | 0.000 | 0.000 | 0.000 |
| 60 | 141 | G | 7.7016E-05 | 0.000 | 0.000 | 1.000 | 0.000 | 0.000 | 0.000 | 0.000 | 0.000 | 0.000 | 0.032 |
| 61 | 141 | G | 5.5275E-04 | 0.000 | 0.000 | 1.000 | 0.000 | 0.000 | 0.000 | 0.000 | 0.000 | 0.000 | 0.000 |
| 52 | 142 | G | 2.2579E+00 | 0.669 | 0.000 | 0.000 | 0.000 | 0.000 | 0.000 | 0.000 | 0.331 | 0.000 | 3.898 |
| 53 | 142 | G | 3.4657E+00 | 1.000 | 0.000 | 0.000 | 0.000 | 0.000 | 0.000 | 0.000 | 0.000 | 0.000 | 3.935 |
| 54 | 142 | G | 5.5899E-01 | 0.995 | 0.005 | 0.000 | 0.000 | 0.000 | 0.000 | 0.000 | 0.005 | 0.000 | 3.065 |
| 55 | 142 | G | 4.0773E-01 | 0.998 | 0.000 | 0.000 | 0.000 | 0.000 | 0.000 | 0.000 | 0.002 | 0.000 | 5.443 |
| 56 | 142 | G | 1.0797E-03 | 1.000 | 0.000 | 0.000 | 0.000 | 0.000 | 0.000 | 0.000 | 0.000 | 0.000 | 1.428 |
| 57 | 142 | G | 1.2469E-04 | 1.000 | 0.000 | 0.000 | 0.000 | 0.000 | 0.000 | 0.000 | 0.000 | 0.000 | 3.225 |
| 58 | 142 | G | 0.0000E+00 | 0.000 | 0.000 | 0.000 | 0.000 | 0.000 | 0.000 | 0.000 | 0.000 | 0.000 | 0.000 |
| 59 | 142 | I | 7.9126E-04 | 0.000 | 0.000 | 0.000 | 0.000 | 0.000 | 0.000 | 0.000 | 0.000 | 0.000 | 0.004 |
| 59 | 142 | G | 1.0065E-05 | 1.000 | 0.000 | 0.000 | 0.000 | 0.000 | 1.000 | 0.000 | 0.000 | 0.000 | 0.879 |
| 60 | 142 | G | 0.0000E+00 | 0.000 | 0.000 | 0.000 | 0.000 | 0.000 | 0.000 | 0.000 | 0.000 | 0.000 | 0.000 |
| 54 | 143 | G | 2.3105E+00 | 0.989 | 0.000 | 0.000 | 0.000 | 0.000 | 0.000 | 0.000 | 0.000 | 0.000 | 4.794 |
| 55 | 143 | G | 3.8941E-01 | 0.989 | 0.000 | 0.000 | 0.000 | 0.000 | 0.000 | 0.000 | 0.011 | 0.000 | 2.858 |
| 56 | 143 | G | 4.7803E-02 | 1.000 | 0.000 | 0.000 | 0.000 | 0.000 | 0.000 | 0.000 | 0.011 | 0.000 | 1.937 |
| 57 | 143 | G | 8.1165E-04 | 1.000 | 0.000 | 0.000 | 0.000 | 0.000 | 0.000 | 0.000 | 0.000 | 0.000 | 1.427 |
| 58 | 143 | G | 5.8248E-06 | 1.000 | 0.000 | 0.000 | 0.000 | 0.000 | 0.000 | 0.000 | 0.000 | 0.000 | 0.714 |
| 59 | 143 | G | 5.9243E-07 | 1.000 | 0.000 | 0.000 | 0.000 | 0.000 | 0.000 | 0.000 | 0.000 | 0.000 | 0.316 |
| 60 | 143 | G | 0.0000E+00 | 0.000 | 0.000 | 0.000 | 0.000 | 0.000 | 0.000 | 0.000 | 0.000 | 0.000 | 0.000 |
| 61 | 143 | G | 4.0268E-08 | 0.000 | 0.000 | 1.000 | 0.000 | 0.000 | 0.000 | 0.000 | 0.000 | 0.000 | 0.000 |
| 62 | 143 | I | 1.0661E-02 | 0.000 | 0.000 | 0.000 | 0.000 | 0.000 | 0.000 | 0.000 | 0.000 | 0.000 | 0.754 |
| 62 | 143 | G | 1.3012E-03 | 0.000 | 0.000 | 1.000 | 0.000 | 0.000 | 1.000 | 0.000 | 0.000 | 0.000 | 0.000 |
| 54 | 144 | G | 6.0274E-01 | 1.000 | 0.000 | 0.000 | 0.000 | 0.000 | 0.000 | 0.000 | 0.000 | 0.000 | 3.335 |
| 55 | 144 | G | 9.9315E-01 | 0.989 | 0.000 | 0.000 | 0.000 | 0.000 | 0.000 | 0.000 | 0.011 | 0.000 | 5.534 |
| 56 | 144 | G | 5.8248E-02 | 1.000 | 0.000 | 0.000 | 0.000 | 0.000 | 0.000 | 0.000 | 0.000 | 0.000 | 1.558 |
| 57 | 144 | G | 1.6947E-02 | 1.000 | 0.000 | 0.000 | 0.000 | 0.000 | 0.000 | 0.000 | 0.000 | 0.000 | 3.414 |
| 58 | 144 | G | 2.8177E-08 | 0.985 | 0.015 | 0.000 | 0.000 | 0.000 | 0.000 | 0.000 | 0.000 | 0.000 | 0.110 |
| 59 | 144 | I | 1.0045E-03 | 0.000 | 0.000 | 0.000 | 0.000 | 0.000 | 0.000 | 0.000 | 0.000 | 0.000 | 0.059 |
| 50 | 144 | G | 6.6777E-04 | 1.000 | 0.000 | 0.000 | 0.000 | 0.000 | 1.000 | 0.000 | 0.000 | 0.000 | 1.246 |
| 60 | 144 | G | 0.0000E+00 | 0.000 | 0.000 | 0.000 | 0.000 | 0.000 | 0.000 | 0.000 | 0.000 | 0.000 | 0.000 |
| 61 | 144 | G | 2.2005E-08 | 0.000 | 0.000 | 0.000 | 0.000 | 0.000 | 0.000 | 0.000 | 0.000 | 0.000 | 0.000 |
| 62 | 144 | G | 0.0000E+00 | 0.000 | 0.000 | 1.000 | 0.000 | 0.000 | 0.000 | 0.000 | 0.000 | 0.000 | 0.000 |
| 54 | 145 | G | 7.7016E-01 | 1.000 | 0.000 | 0.000 | 0.000 | 0.000 | 0.000 | 0.000 | 0.000 | 0.000 | 4.949 |
| 55 | 145 | G | 1.1743E+00 | 0.956 | 0.000 | 0.000 | 0.000 | 0.000 | 0.000 | 0.000 | 0.044 | 0.000 | 4.197 |

# Fig.8  Teil 12

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 56 | 145 | G | 1.6120E-01 | 1.000 | 0.000 | 0.000 | 0.000 | 0.000 | 0.000 | 0.000 | 0.000 | 0.000 | 2.342 |
| 57 | 145 | G | 2.7943E-02 | 1.000 | 0.000 | 0.000 | 0.000 | 0.000 | 0.000 | 0.000 | 0.000 | 0.000 | 2.119 |
| 58 | 145 | G | 3.8723E-03 | 1.000 | 0.000 | 0.000 | 1.000 | 0.000 | 0.000 | 0.000 | 0.000 | 0.000 | 1.450 |
| 59 | 145 | G | 3.2194E-05 | 1.000 | 0.000 | 0.000 | 0.000 | 0.000 | 0.000 | 0.000 | 0.000 | 0.000 | 0.695 |
| 60 | 145 | G | 0.0000E+00 | 0.000 | 0.000 | 0.000 | 0.000 | 0.000 | 0.000 | 0.000 | 0.000 | 0.000 | 0.000 |
| 61 | 145 | G | 1.2422E-02 | 0.000 | 0.000 | 1.000 | 0.000 | 0.000 | 0.000 | 0.000 | 0.000 | 0.000 | 0.044 |
| 62 | 145 | G | 2.3576E-03 | 0.000 | 0.000 | 1.000 | 0.000 | 0.000 | 0.000 | 0.000 | 0.000 | 0.000 | 0.097 |
| 54 | 146 | G | 1.6919E+00 | 0.996 | 0.000 | 0.000 | 0.000 | 0.000 | 0.000 | 0.000 | 0.004 | 0.000 | 3.433 |
| 55 | 146 | G | 2.2360E+00 | 0.961 | 0.000 | 0.000 | 0.000 | 0.000 | 0.000 | 0.000 | 0.039 | 0.000 | 5.320 |
| 56 | 146 | G | 1.1507E-01 | 1.000 | 0.000 | 0.000 | 0.000 | 0.000 | 0.000 | 0.000 | 0.000 | 0.000 | 2.497 |
| 57 | 146 | I | 6.9315E-02 | 1.000 | 0.000 | 0.000 | 0.000 | 0.000 | 0.000 | 0.000 | 0.000 | 0.000 | 3.745 |
| 57 | 146 | G | 1.1180E-01 | 1.000 | 0.000 | 0.000 | 0.000 | 0.000 | 0.000 | 0.000 | 0.000 | 0.000 | 3.577 |
| 58 | 146 | G | 8.5574E-03 | 1.000 | 0.000 | 0.000 | 0.000 | 0.000 | 0.000 | 0.000 | 0.000 | 0.000 | 0.568 |
| 59 | 146 | G | 4.4135E-04 | 1.000 | 0.000 | 0.000 | 0.000 | 0.000 | 0.000 | 0.000 | 0.000 | 0.000 | 2.292 |
| 60 | 146 | G | 0.0000E+00 | 0.000 | 0.000 | 0.000 | 0.000 | 0.000 | 0.000 | 0.000 | 0.000 | 0.000 | 0.000 |
| 61 | 146 | G | 3.9836E-02 | 0.331 | 0.000 | 0.669 | 0.000 | 0.000 | 0.000 | 0.000 | 0.000 | 0.000 | 0.851 |
| 62 | 146 | G | 2.1323E-16 | 0.000 | 0.000 | 0.000 | 0.000 | 1.000 | 0.000 | 0.000 | 0.000 | 0.000 | 2.540 |
| 56 | 147 | G | 9.6277E-01 | 1.000 | 0.000 | 0.000 | 0.000 | 0.000 | 0.000 | 0.000 | 0.000 | 0.000 | 3.820 |
| 57 | 147 | G | 3.1507E-01 | 1.000 | 0.000 | 0.000 | 0.000 | 0.000 | 0.000 | 0.000 | 0.000 | 0.000 | 3.607 |
| 58 | 147 | G | 1.2161E-02 | 1.000 | 0.000 | 0.000 | 0.000 | 0.000 | 0.000 | 0.000 | 0.000 | 0.000 | 2.297 |
| 59 | 147 | G | 8.4945E-03 | 1.000 | 0.000 | 0.000 | 0.000 | 0.000 | 0.000 | 0.000 | 0.000 | 0.000 | 1.511 |
| 60 | 147 | G | 7.3047E-07 | 1.000 | 0.000 | 0.000 | 0.000 | 0.000 | 0.000 | 0.000 | 0.000 | 0.000 | 0.411 |
| 61 | 147 | G | 8.3916E-02 | 1.000 | 0.000 | 0.000 | 0.000 | 0.000 | 0.000 | 0.000 | 0.000 | 0.000 | 0.062 |
| 62 | 147 | G | 7.0753E-19 | 0.000 | 0.000 | 0.000 | 0.000 | 1.000 | 0.000 | 0.000 | 0.000 | 0.000 | 2.310 |
| 63 | 147 | G | 3.2542E-07 | 0.000 | 0.000 | 1.000 | 0.000 | 0.000 | 0.000 | 0.000 | 0.000 | 0.000 | 0.000 |
| 64 | 147 | G | 5.0595E-06 | 0.000 | 0.000 | 1.000 | 0.000 | 0.000 | 0.000 | 0.000 | 0.000 | 0.000 | 0.000 |
| 54 | 148 | G | 4.3512E+00 | 0.990 | 0.000 | 0.000 | 0.000 | 0.000 | 0.000 | 0.000 | 0.010 | 0.000 | 3.447 |
| 55 | 148 | G | 4.0773E+00 | 1.000 | 0.000 | 0.000 | 0.000 | 0.000 | 0.000 | 0.000 | 0.000 | 0.000 | 5.778 |
| 56 | 148 | G | 1.0930E+00 | 1.000 | 0.000 | 0.000 | 0.000 | 0.000 | 0.000 | 0.000 | 0.000 | 0.000 | 3.350 |
| 57 | 148 | G | 5.3319E-01 | 1.000 | 0.000 | 0.000 | 0.000 | 0.000 | 0.000 | 0.000 | 0.000 | 0.000 | 3.543 |
| 58 | 148 | G | 1.4141E-02 | 1.000 | 0.000 | 0.000 | 0.000 | 0.000 | 0.000 | 0.000 | 0.000 | 0.000 | 1.274 |
| 59 | 148 | G | 5.6967E-03 | 1.000 | 0.000 | 0.000 | 0.000 | 0.000 | 0.000 | 0.000 | 0.000 | 0.000 | 2.606 |
| 60 | 148 | G | 0.0000E+00 | 0.000 | 0.000 | 0.000 | 0.000 | 0.000 | 0.000 | 0.000 | 0.000 | 0.000 | 0.000 |
| 61 | 148 | I | 1.9116E-07 | 0.954 | 0.000 | 0.000 | 0.000 | 0.000 | 0.046 | 0.000 | 0.000 | 0.000 | 2.162 |
| 61 | 148 | G | 1.4938E-06 | 1.000 | 0.000 | 0.000 | 0.000 | 0.000 | 0.000 | 0.000 | 0.000 | 0.000 | 1.315 |
| 62 | 148 | G | 3.1364E-24 | 0.000 | 0.000 | 0.000 | 0.000 | 1.000 | 0.000 | 0.000 | 0.000 | 0.000 | 2.014 |
| 56 | 149 | G | 8.3602E-01 | 0.999 | 0.000 | 0.000 | 0.000 | 0.000 | 0.000 | 0.000 | 0.001 | 0.000 | 5.596 |
| 57 | 149 | G | 5.7762E-01 | 1.000 | 0.000 | 0.000 | 0.000 | 0.000 | 0.000 | 0.000 | 0.000 | 0.000 | 4.142 |
| 58 | 149 | G | 1.3863E-01 | 1.000 | 0.000 | 0.000 | 0.000 | 0.000 | 0.000 | 0.000 | 0.000 | 0.000 | 2.304 |
| 59 | 149 | G | 5.1341E-03 | 1.000 | 0.000 | 0.000 | 0.000 | 0.000 | 0.000 | 0.000 | 0.000 | 0.000 | 1.432 |
| 60 | 149 | G | 1.1130E-04 | 1.000 | 0.000 | 0.000 | 0.000 | 0.000 | 0.000 | 0.000 | 0.000 | 0.000 | 0.868 |
| 61 | 149 | G | 3.0292E-06 | 1.000 | 0.000 | 0.000 | 0.000 | 0.000 | 0.000 | 0.000 | 0.000 | 0.000 | 0.378 |
| 62 | 149 | G | 0.0000E+00 | 0.000 | 0.000 | 0.000 | 0.000 | 0.000 | 0.000 | 0.000 | 0.000 | 0.000 | 0.000 |
| 63 | 149 | G | 3.0712E-08 | 0.000 | 0.000 | 1.000 | 0.000 | 0.000 | 0.000 | 0.000 | 0.000 | 0.000 | 0.075 |
| 64 | 149 | G | 8.4427E-07 | 0.000 | 0.000 | 1.000 | 0.000 | 0.000 | 0.000 | 0.000 | 0.000 | 0.000 | 0.000 |
| 54 | 150 | G | 7.0686E+00 | 0.954 | 0.000 | 0.000 | 0.000 | 0.000 | 0.000 | 0.000 | 0.046 | 0.000 | 4.353 |
| 55 | 150 | G | 8.1374E+00 | 0.415 | 0.000 | 0.000 | 0.000 | 0.000 | 0.000 | 0.000 | 0.583 | 0.002 | 4.858 |
| 56 | 150 | G | 1.5355E+00 | 0.996 | 0.000 | 0.000 | 0.000 | 0.000 | 0.000 | 0.000 | 0.002 | 0.000 | 3.920 |
| 57 | 150 | G | 9.2198E-01 | 0.999 | 0.000 | 0.000 | 0.000 | 0.000 | 0.000 | 0.000 | 0.001 | 0.000 | 5.490 |
| 58 | 150 | G | 1.4441E-01 | 1.000 | 0.000 | 0.000 | 0.000 | 0.000 | 0.000 | 0.000 | 0.000 | 0.000 | 1.525 |
| 59 | 150 | G | 1.1363E-01 | 1.000 | 0.000 | 0.000 | 0.000 | 0.000 | 0.000 | 0.000 | 0.000 | 0.000 | 3.475 |
| 60 | 150 | G | 0.0000E+00 | 0.000 | 0.000 | 0.000 | 0.000 | 0.000 | 0.000 | 0.000 | 0.000 | 0.000 | 0.000 |
| 61 | 150 | G | 7.1311E-05 | 1.000 | 0.000 | 0.000 | 0.000 | 0.000 | 0.000 | 0.000 | 0.000 | 0.000 | 2.331 |
| 62 | 150 | G | 0.0000E+00 | 0.000 | 0.000 | 0.000 | 0.000 | 0.000 | 0.000 | 0.000 | 0.000 | 0.000 | 0.000 |
| 57 | 151 | G | 1.0866E+00 | 0.996 | 0.000 | 0.000 | 0.000 | 0.000 | 0.000 | 0.000 | 0.004 | 0.000 | 4.912 |
| 58 | 151 | G | 4.5901E-01 | 1.000 | 0.000 | 0.000 | 0.000 | 0.000 | 0.000 | 0.000 | 0.000 | 0.000 | 2.557 |
| 59 | 151 | G | 3.0344E-02 | 1.000 | 0.000 | 0.000 | 0.000 | 0.000 | 0.000 | 0.000 | 0.000 | 0.000 | 2.516 |
| 60 | 151 | G | 9.3165E-04 | 1.000 | 0.000 | 0.000 | 0.000 | 0.000 | 0.000 | 0.000 | 0.000 | 0.000 | 1.455 |
| 61 | 151 | G | 6.8628E-06 | 1.000 | 0.000 | 0.000 | 0.000 | 0.000 | 0.000 | 0.000 | 0.000 | 0.000 | 0.626 |
| 62 | 151 | G | 2.3657E-10 | 1.000 | 0.000 | 0.000 | 0.000 | 0.000 | 0.000 | 0.000 | 0.000 | 0.000 | 0.020 |
| 63 | 151 | G | 0.0000E+00 | 0.000 | 0.000 | 0.000 | 0.000 | 0.000 | 0.000 | 0.000 | 0.000 | 0.000 | 0.000 |
| 64 | 151 | G | 6.6643E-03 | 0.000 | 0.000 | 1.000 | 0.000 | 0.000 | 0.000 | 0.000 | 0.000 | 0.000 | 0.000 |
| 65 | 151 | I | 2.7726E-02 | 0.000 | 0.000 | 1.000 | 0.000 | 0.000 | 0.000 | 0.000 | 0.000 | 0.000 | 0.000 |
| 65 | 151 | G | 1.1940E-05 | 0.000 | 0.000 | 1.000 | 0.000 | 0.000 | 0.000 | 0.000 | 0.000 | 0.000 | 0.000 |
| 56 | 152 | G | 2.8154E+00 | 0.990 | 0.000 | 0.000 | 0.000 | 0.000 | 0.000 | 0.000 | 0.010 | 0.000 | 4.513 |
| 57 | 152 | G | 1.6193E+00 | 0.991 | 0.000 | 0.000 | 0.000 | 0.000 | 0.000 | 0.000 | 0.009 | 0.000 | 6.203 |
| 58 | 152 | G | 3.5221E-01 | 1.000 | 0.000 | 0.000 | 0.000 | 0.000 | 0.000 | 0.000 | 0.000 | 0.000 | 2.652 |
| 59 | 152 | G | 7.6526E-01 | 1.000 | 0.000 | 0.000 | 0.000 | 0.000 | 0.000 | 0.000 | 0.000 | 0.000 | 3.557 |
| 60 | 152 | G | 1.0134E-03 | 1.000 | 0.000 | 0.000 | 0.000 | 0.000 | 0.000 | 0.000 | 0.000 | 0.000 | 0.496 |
| 61 | 152 | I | 1.5303E-03 | 1.000 | 0.000 | 0.000 | 0.000 | 0.000 | 0.000 | 0.000 | 0.000 | 0.000 | 2.346 |
| 61 | 152 | G | 2.7506E-03 | 1.000 | 0.000 | 0.000 | 0.000 | 0.000 | 0.000 | 0.000 | 0.000 | 0.000 | 1.547 |
| 62 | 152 | G | 0.0000E+00 | 0.000 | 0.000 | 0.000 | 0.000 | 0.000 | 0.000 | 0.000 | 0.000 | 0.000 | 0.000 |
| 63 | 152 | I | 2.0703E-05 | 0.715 | 0.000 | 0.285 | 0.000 | 0.000 | 0.000 | 0.000 | 0.000 | 0.000 | 0.810 |
| 63 | 152 | G | 1.6503E-09 | 0.277 | 0.000 | 0.723 | 0.000 | 0.000 | 0.000 | 0.000 | 0.000 | 0.000 | 1.276 |
| 64 | 152 | G | 0.0000E+00 | 0.000 | 0.000 | 0.000 | 0.000 | 0.000 | 0.000 | 0.000 | 0.000 | 0.000 | 0.000 |
| 57 | 153 | G | 3.0670E+00 | 0.992 | 0.000 | 0.000 | 0.000 | 0.000 | 0.000 | 0.000 | 0.008 | 0.000 | 5.502 |
| 58 | 153 | G | 6.1449E-01 | 1.000 | 0.000 | 0.000 | 0.000 | 0.000 | 0.000 | 0.000 | 0.000 | 0.000 | 3.942 |
| 59 | 153 | G | 2.4623E-01 | 1.000 | 0.000 | 0.000 | 0.000 | 0.000 | 0.000 | 0.000 | 0.000 | 0.000 | 3.458 |
| 60 | 153 | G | 2.1601E-02 | 1.000 | 0.000 | 0.000 | 0.000 | 0.000 | 0.000 | 0.000 | 0.000 | 0.000 | 1.980 |
| 61 | 153 | G | 2.1797E-03 | 1.000 | 0.000 | 0.000 | 0.000 | 0.000 | 0.000 | 0.000 | 0.000 | 0.000 | 0.766 |

## Fig.8  Teil 13

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 62 | 153 | G | 4.1259E-06 | 1.000 | 0.000 | 0.000 | 0.000 | 0.000 | 0.000 | 0.000 | 0.000 | 0.000 | 0.332 |
| 63 | 153 | G | 0.0000E+00 | 0.000 | 0.000 | 0.000 | 0.000 | 0.000 | 0.000 | 0.000 | 0.000 | 0.000 | 0.000 |
| 64 | 153 | G | 3.3165E-08 | 0.000 | 0.000 | 1.000 | 0.000 | 0.000 | 0.000 | 0.000 | 0.000 | 0.000 | 0.152 |
| 65 | 153 | G | 3.4314E-06 | 0.000 | 0.000 | 1.000 | 0.000 | 0.000 | 0.000 | 0.000 | 0.000 | 0.000 | 0.000 |
| 56 | 154 | G | 4.7089E+00 | 0.864 | 0.000 | 0.000 | 0.000 | 0.000 | 0.000 | 0.000 | 0.136 | 0.000 | 4.651 |
| 57 | 154 | G | 4.8102E+00 | 0.983 | 0.000 | 0.000 | 0.000 | 0.000 | 0.000 | 0.000 | 0.017 | 0.000 | 6.987 |
| 58 | 154 | G | 1.1620E+00 | 1.000 | 0.000 | 0.000 | 0.000 | 0.000 | 0.000 | 0.000 | 0.000 | 0.000 | 3.305 |
| 59 | 154 | G | 4.7574E-01 | 1.000 | 0.000 | 0.000 | 0.000 | 0.000 | 0.000 | 0.000 | 0.000 | 0.000 | 4.807 |
| 60 | 154 | G | 1.7329E-07 | 1.000 | 0.000 | 0.000 | 0.000 | 0.000 | 0.000 | 0.000 | 0.000 | 0.000 | 1.852 |
| 61 | 154 | I | 4.2787E-03 | 1.000 | 0.000 | 0.000 | 0.000 | 0.000 | 0.000 | 0.000 | 0.000 | 0.000 | 2.694 |
| 61 | 154 | G | 6.7956E-03 | 1.000 | 0.000 | 0.000 | 0.000 | 0.000 | 0.000 | 0.000 | 0.000 | 0.000 | 2.676 |
| 62 | 154 | G | 0.0000E+00 | 0.000 | 0.000 | 0.000 | 0.000 | 0.000 | 0.000 | 0.000 | 0.000 | 0.000 | 0.000 |
| 63 | 154 | I | 2.5114E-04 | 0.000 | 0.000 | 0.000 | 0.000 | 0.000 | 1.000 | 0.000 | 0.000 | 0.000 | 0.160 |
| 63 | 154 | G | 2.4933E-00 | 1.000 | 0.000 | 0.000 | 0.000 | 0.000 | 0.000 | 0.000 | 0.000 | 0.000 | 1.514 |
| 64 | 154 | G | 0.0000E+00 | 0.000 | 0.000 | 0.000 | 0.000 | 0.000 | 0.000 | 0.000 | 0.000 | 0.000 | 0.000 |
| 58 | 155 | G | 1.N688E+00 | 0.999 | 0.000 | 0.000 | 0.000 | 0.000 | 0.000 | 0.000 | 0.001 | 0.000 | 4.788 |
| 59 | 155 | G | 8.6893E-01 | 1.000 | 0.000 | 0.000 | 0.000 | 0.000 | 0.000 | 0.000 | 0.000 | 0.000 | 4.111 |
| 60 | 155 | G | 4.5186E-02 | 1.000 | 0.000 | 0.000 | 0.000 | 0.000 | 0.000 | 0.000 | 0.000 | 0.000 | 3.437 |
| 61 | 155 | G | 2.4711E-01 | 1.000 | 0.000 | 0.000 | 0.000 | 0.000 | 0.000 | 0.000 | 0.000 | 0.000 | 1.567 |
| 62 | 155 | G | 6.1727E-04 | 1.000 | 0.000 | 0.000 | 0.000 | 0.000 | 0.000 | 0.000 | 0.000 | 0.000 | 0.656 |
| 63 | 155 | G | 4.4432E-09 | 1.000 | 0.000 | 0.000 | 0.000 | 0.000 | 0.000 | 0.000 | 0.000 | 0.000 | 0.129 |
| 64 | 155 | G | 0.0000E+00 | 0.000 | 0.000 | 0.000 | 0.000 | 0.000 | 0.000 | 0.000 | 0.000 | 0.000 | 0.000 |
| 65 | 155 | G | 1.5068E-06 | 0.000 | 0.000 | 1.000 | 0.000 | 0.000 | 0.000 | 0.000 | 0.000 | 0.000 | 0.000 |
| 66 | 155 | G | 1.9254E-05 | 0.000 | 0.000 | 1.000 | 0.000 | 0.000 | 0.000 | 0.000 | 0.000 | 0.000 | 0.000 |
| 58 | 156 | G | 2.2719E+00 | 0.997 | 0.000 | 0.000 | 0.000 | 0.000 | 0.000 | 0.000 | 0.003 | 0.000 | 3.854 |
| 59 | 156 | G | 1.5121E+00 | 0.998 | 0.000 | 0.000 | 0.000 | 0.000 | 0.000 | 0.000 | 0.002 | 0.000 | 5.611 |
| 60 | 156 | G | 8.2873E-02 | 1.000 | 0.000 | 0.000 | 0.000 | 0.000 | 0.000 | 0.000 | 0.000 | 0.000 | 2.564 |
| 61 | 156 | G | 5.0447E-01 | 1.000 | 0.000 | 0.000 | 0.000 | 0.000 | 0.000 | 0.000 | 0.000 | 0.000 | 3.198 |
| 62 | 156 | G | 2.0507E-05 | 1.000 | 0.000 | 0.000 | 0.000 | 0.000 | 0.000 | 0.000 | 0.000 | 0.000 | 0.326 |
| 63 | 156 | G | 5.2912E-07 | 1.000 | 0.000 | 0.000 | 0.000 | 0.000 | 0.000 | 0.000 | 0.000 | 0.000 | 1.729 |
| 64 | 156 | G | 0.0000E+00 | 0.000 | 0.000 | 0.000 | 0.000 | 0.000 | 0.000 | 0.000 | 0.000 | 0.000 | 0.000 |
| 65 | 156 | I | 3.5656E-05 | 1.000 | 0.000 | 0.000 | 0.000 | 0.000 | 0.000 | 0.000 | 0.000 | 0.000 | 0.000 |
| 65 | 156 | G | 1.4843E-06 | 0.000 | 0.000 | 1.000 | 0.000 | 0.000 | 0.000 | 0.000 | 0.000 | 0.000 | 0.000 |
| 66 | 156 | G | 0.0000E+00 | 0.000 | 0.000 | 0.000 | 0.000 | 0.000 | 0.000 | 0.000 | 0.000 | 0.000 | 0.000 |
| 58 | 157 | G | 3.4365E+00 | 0.989 | 0.000 | 0.000 | 0.000 | 0.000 | 0.000 | 0.000 | 0.011 | 0.000 | 5.521 |
| 59 | 157 | G | 1.8289E+00 | 0.996 | 0.000 | 0.000 | 0.000 | 0.000 | 0.000 | 0.000 | 0.004 | 0.000 | 4.679 |
| 60 | 157 | G | 1.6902E-01 | 1.000 | 0.000 | 0.000 | 0.000 | 0.000 | 0.000 | 0.000 | 0.000 | 0.000 | 4.078 |
| 61 | 157 | G | 1.4811E-01 | 1.000 | 0.000 | 0.000 | 0.000 | 0.000 | 0.000 | 0.000 | 0.000 | 0.000 | 2.936 |
| 62 | 157 | G | 1.4233E-03 | 1.000 | 0.000 | 0.000 | 0.000 | 0.000 | 0.000 | 0.000 | 0.000 | 0.000 | 1.221 |
| 63 | 157 | G | 1.2718E-05 | 1.000 | 0.000 | 0.000 | 0.000 | 0.000 | 0.000 | 0.000 | 0.000 | 0.000 | 0.663 |
| 64 | 157 | G | 0.0000E+00 | 0.000 | 0.000 | 0.000 | 0.000 | 0.000 | 0.000 | 0.000 | 0.000 | 0.000 | 0.000 |
| 65 | 157 | G | 1.4654E-10 | 0.000 | 0.000 | 1.000 | 0.000 | 0.000 | 0.000 | 0.000 | 0.000 | 0.000 | 0.008 |
| 66 | 157 | G | 2.3771E-05 | 0.000 | 0.000 | 1.000 | 0.000 | 0.000 | 0.000 | 0.000 | 0.000 | 0.000 | 0.362 |
| 58 | 158 | G | 3.8767E+00 | 0.986 | 0.000 | 0.000 | 0.000 | 0.000 | 0.000 | 0.000 | 0.014 | 0.000 | 4.368 |
| 59 | 158 | G | 2.9508E+00 | 0.992 | 0.000 | 0.000 | 0.000 | 0.000 | 0.000 | 0.000 | 0.008 | 0.000 | 6.356 |
| 60 | 158 | G | 2.4862E-01 | 1.000 | 0.000 | 0.000 | 0.000 | 0.000 | 0.000 | 0.000 | 0.000 | 0.000 | 3.094 |
| 61 | 158 | G | 2.9980E-01 | 1.000 | 0.000 | 0.000 | 0.000 | 0.000 | 0.000 | 0.000 | 0.000 | 0.000 | 4.195 |
| 62 | 158 | G | 2.0941E-03 | 1.000 | 0.000 | 0.000 | 0.000 | 0.000 | 0.000 | 0.000 | 0.000 | 0.000 | 1.063 |
| 63 | 158 | G | 2.5114E-04 | 1.000 | 0.000 | 0.000 | 0.000 | 0.000 | 0.000 | 0.000 | 0.000 | 0.000 | 2.031 |
| 64 | 158 | G | 0.0000E+00 | 0.000 | 0.000 | 0.000 | 0.000 | 0.000 | 0.000 | 0.000 | 0.000 | 0.000 | 0.000 |
| 65 | 158 | I | 6.6014E-02 | 0.000 | 0.000 | 0.000 | 0.000 | 0.000 | 1.000 | 0.000 | 0.000 | 0.000 | 0.110 |
| 65 | 158 | G | 1.4654E-10 | 0.180 | 0.000 | 0.820 | 0.000 | 0.000 | 0.000 | 0.000 | 0.000 | 0.000 | 0.000 |
| 66 | 158 | G | 0.0000E+00 | 0.000 | 0.000 | 0.000 | 0.000 | 0.000 | 0.000 | 0.000 | 0.000 | 0.000 | 0.000 |
| 59 | 159 | G | 3.2634E+00 | 0.986 | 0.000 | 0.000 | 0.000 | 0.000 | 0.000 | 0.000 | 0.014 | 0.000 | 5.224 |
| 60 | 159 | G | 4.8068E-01 | 1.000 | 0.000 | 0.000 | 0.000 | 0.000 | 0.000 | 0.000 | 0.000 | 0.000 | 4.747 |
| 61 | 159 | G | 4.2999E-01 | 1.000 | 0.000 | 0.000 | 0.000 | 0.000 | 0.000 | 0.000 | 0.000 | 0.000 | 3.509 |
| 62 | 159 | G | 6.8358E-02 | 1.000 | 0.000 | 0.000 | 0.000 | 0.000 | 0.000 | 0.000 | 0.000 | 0.000 | 2.371 |
| 63 | 159 | G | 6.3591E-04 | 1.000 | 0.000 | 0.000 | 0.000 | 0.000 | 0.000 | 0.000 | 0.000 | 0.000 | 1.967 |
| 64 | 159 | G | 1.0376E-05 | 1.000 | 0.000 | 0.000 | 0.000 | 0.000 | 0.000 | 0.000 | 0.000 | 0.000 | 0.363 |
| 65 | 159 | G | 0.0000E+00 | 0.000 | 0.000 | 0.000 | 0.000 | 0.000 | 0.000 | 0.000 | 0.000 | 0.000 | 0.000 |
| 66 | 159 | G | 5.5452E-08 | 0.000 | 0.000 | 1.000 | 0.000 | 0.000 | 0.000 | 0.000 | 0.000 | 0.000 | 0.058 |
| 67 | 159 | I | 8.3512E-02 | 0.000 | 0.000 | 1.000 | 0.000 | 0.000 | 0.000 | 0.000 | 0.000 | 0.000 | 0.000 |
| 67 | 159 | G | 3.5007E-04 | 0.000 | 0.000 | 1.000 | 0.000 | 0.000 | 0.000 | 0.000 | 0.000 | 0.000 | 0.000 |
| 58 | 160 | G | 6.4062E+00 | 0.872 | 0.000 | 0.000 | 0.000 | 0.000 | 0.000 | 0.000 | 0.128 | 0.000 | 4.522 |
| 59 | 160 | G | 5.5231E+00 | 0.950 | 0.000 | 0.000 | 0.000 | 0.000 | 0.000 | 0.000 | 0.050 | 0.000 | 6.900 |
| 60 | 160 | G | 5.8941E-01 | 1.000 | 0.000 | 0.000 | 0.000 | 0.000 | 0.000 | 0.000 | 0.000 | 0.000 | 3.636 |
| 61 | 160 | G | 8.3301E-01 | 1.000 | 0.000 | 0.000 | 0.000 | 0.000 | 0.000 | 0.000 | 0.000 | 0.000 | 4.956 |
| 62 | 160 | G | 1.1432E-01 | 1.000 | 0.000 | 0.000 | 0.000 | 0.000 | 0.000 | 0.000 | 0.000 | 0.000 | 1.518 |
| 63 | 160 | G | 1.6504E-02 | 1.000 | 0.000 | 0.000 | 0.000 | 0.000 | 0.000 | 0.000 | 0.000 | 0.000 | 2.461 |
| 64 | 160 | G | 0.0000E+00 | 0.000 | 0.000 | 0.000 | 0.000 | 0.000 | 0.000 | 0.000 | 0.000 | 0.000 | 0.000 |
| 65 | 160 | G | 1.0950E-07 | 1.000 | 0.000 | 0.000 | 0.000 | 0.000 | 0.000 | 0.000 | 0.000 | 0.000 | 1.390 |
| 66 | 160 | G | 0.0000E+00 | 0.000 | 0.000 | 0.000 | 0.000 | 0.000 | 0.000 | 0.000 | 0.000 | 0.000 | 0.000 |
| 60 | 161 | G | 1.0553E+00 | 0.999 | 0.000 | 0.000 | 0.000 | 0.000 | 0.000 | 0.000 | 0.001 | 0.000 | 5.405 |
| 61 | 161 | G | 9.9676E-01 | 0.999 | 0.000 | 0.000 | 0.000 | 0.000 | 0.000 | 0.000 | 0.001 | 0.000 | 4.084 |
| 62 | 161 | G | 2.4969E-01 | 1.000 | 0.000 | 0.000 | 0.000 | 0.000 | 0.000 | 0.000 | 0.000 | 0.000 | 3.013 |
| 63 | 161 | G | 2.7916E-02 | 1.000 | 0.000 | 0.000 | 0.000 | 0.000 | 0.000 | 0.000 | 0.000 | 0.000 | 2.637 |
| 64 | 161 | G | 3.2090E-03 | 1.000 | 0.000 | 0.000 | 0.000 | 0.000 | 0.000 | 0.000 | 0.000 | 0.000 | 0.983 |
| 65 | 161 | G | 1.1626E-06 | 1.000 | 0.000 | 0.000 | 0.000 | 0.000 | 0.000 | 0.000 | 0.000 | 0.000 | 0.238 |
| 66 | 161 | G | 0.0000E+00 | 0.000 | 0.000 | 0.000 | 0.000 | 0.000 | 0.000 | 0.000 | 0.000 | 0.000 | 0.000 |
| 67 | 161 | I | 1.0345E-01 | 0.000 | 0.000 | 1.000 | 0.000 | 0.000 | 0.000 | 0.000 | 0.000 | 0.000 | 0.000 |

# Fig.8  Teil 14

| Z | A | K | $\lambda_{tot}$ | $P_{\beta-(G)}$ | $P_{\beta-(I)}$ | $P_{\beta+(G)}$ | $P_{\beta+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 67 | 161 | G | 7.7016E-05 | 0.000 | 0.000 | 1.000 | 0.000 | 0.000 | 0.000 | 0.000 | 0.000 | 0.000 | 0.000 |
| 68 | 161 | G | 5.9447E-05 | 0.000 | 0.000 | 1.000 | 0.000 | 0.000 | 0.000 | 0.000 | 0.000 | 0.000 | 0.000 |
| 60 | 162 | G | 1.4751E+00 | 0.994 | 0.000 | 0.000 | 0.000 | 0.000 | 0.000 | 0.000 | 0.002 | 0.000 | 4.22W |
| 61 | 162 | G | 1.7971E+00 | 0.996 | 0.000 | 0.000 | 0.000 | 0.000 | 0.000 | 0.000 | 0.004 | 0.000 | 5.692 |
| 62 | 162 | G | 3.2640E-01 | 1.000 | 0.000 | 0.000 | 0.000 | 0.000 | 0.000 | 0.000 | 0.000 | 0.000 | 2.02W |
| 63 | 162 | G | 7.4118E-02 | 1.000 | 0.000 | 0.000 | 0.000 | 0.000 | 0.000 | 0.000 | 0.000 | 0.000 | 4.266 |
| 64 | 162 | G | 1.4988E-03 | 1.000 | 0.000 | 0.000 | 0.000 | 0.000 | 0.000 | 0.000 | 0.000 | 0.000 | 0.764 |
| 65 | 162 | G | 1.4874E-03 | 1.000 | 0.000 | 0.000 | 0.000 | 0.000 | 0.000 | 0.000 | 0.000 | 0.000 | 1.643 |
| 66 | 162 | G | 0.0000E+00 | 0.000 | 0.000 | 0.000 | 0.000 | 0.000 | 0.000 | 0.000 | 0.000 | 0.000 | 0.000 |
| 67 | 162 | I | 1.6989E-04 | 0.000 | 0.000 | 0.390 | 0.000 | 0.000 | 0.610 | 0.000 | 0.000 | 0.000 | 0.067 |
| 67 | 162 | G | 7.7016E-04 | 0.000 | 0.000 | 1.000 | 0.000 | 0.000 | 0.000 | 0.000 | 0.000 | 0.000 | 0.000 |
| 68 | 162 | G | 0.0000E+00 | 0.000 | 0.000 | 0.000 | 0.000 | 0.000 | 0.000 | 0.000 | 0.000 | 0.000 | 0.000 |
| 60 | 163 | G | 2.4527E+00 | 0.950 | 0.000 | 0.000 | 0.000 | 0.000 | 0.000 | 0.000 | 0.050 | 0.000 | 5.874 |
| 61 | 163 | G | 2.3935E+00 | 0.994 | 0.000 | 0.000 | 0.000 | 0.000 | 0.000 | 0.000 | 0.006 | 0.000 | 4.711 |
| 62 | 163 | G | 6.4062E-01 | 1.000 | 0.000 | 0.000 | 0.000 | 0.000 | 0.000 | 0.000 | 0.000 | 0.000 | 3.674 |
| 63 | 163 | G | 1.1949E-01 | 1.000 | 0.000 | 0.000 | 0.000 | 0.000 | 0.000 | 0.000 | 0.000 | 0.000 | 3.171 |
| 64 | 163 | G | 1.0452E-02 | 1.000 | 0.000 | 0.000 | 0.000 | 0.000 | 0.000 | 0.000 | 0.000 | 0.000 | 2.408 |
| 65 | 163 | G | 5.9243E-04 | 1.000 | 0.000 | 0.000 | 0.000 | 0.000 | 0.000 | 0.000 | 0.000 | 0.000 | 1.10W |
| 66 | 163 | G | 0.0000E+00 | 0.000 | 0.000 | 0.000 | 0.000 | 0.000 | 0.000 | 0.000 | 0.000 | 0.000 | 0.000 |
| 67 | 163 | I | 6.3013E-01 | 0.000 | 0.000 | 1.000 | 0.000 | 0.000 | 0.000 | 0.000 | 0.000 | 0.000 | 0.000 |
| 67 | 163 | G | 6.6649E-10 | 0.000 | 0.000 | 1.000 | 0.000 | 0.000 | 0.000 | 0.000 | 0.000 | 0.000 | 0.009 |
| 68 | 163 | G | 1.5403E-04 | 0.000 | 0.000 | 1.000 | 0.000 | 0.000 | 0.000 | 0.000 | 0.000 | 0.000 | 0.010 |
| 60 | 164 | G | 2.6680E+00 | 0.934 | 0.000 | 0.000 | 0.000 | 0.000 | 0.000 | 0.000 | 0.066 | 0.000 | 4.520 |
| 61 | 164 | G | 4.0159E+00 | 0.989 | 0.000 | 0.000 | 0.000 | 0.000 | 0.000 | 0.000 | 0.011 | 0.000 | 6.481 |
| 62 | 164 | G | 9.3732E-01 | 1.000 | 0.000 | 0.000 | 0.000 | 0.000 | 0.000 | 0.000 | 0.000 | 0.000 | 2.594 |
| 63 | 164 | G | 2.6048E-01 | 1.000 | 0.000 | 0.000 | 0.000 | 0.000 | 0.000 | 0.000 | 0.000 | 0.000 | 4.905 |
| 64 | 164 | G | 2.2190E-02 | 1.000 | 0.000 | 0.000 | 0.000 | 0.000 | 0.000 | 0.000 | 0.000 | 0.000 | 1.220 |
| 65 | 164 | G | 3.8508E-03 | 1.000 | 0.000 | 0.000 | 0.000 | 0.000 | 0.000 | 0.000 | 0.000 | 0.000 | 2.699 |
| 66 | 164 | G | 0.0000E+00 | 0.000 | 0.000 | 0.000 | 0.000 | 0.000 | 0.000 | 0.000 | 0.000 | 0.000 | 0.000 |
| 67 | 164 | I | 3.1223E-04 | 0.000 | 0.000 | 0.000 | 0.000 | 0.000 | 1.000 | 0.000 | 0.000 | 0.000 | 0.140 |
| 67 | 164 | G | 3.9836E-04 | 0.420 | 0.000 | 0.580 | 0.000 | 0.000 | 0.000 | 0.000 | 0.000 | 0.000 | 0.151 |
| 68 | 164 | G | 0.0000E+00 | 0.000 | 0.000 | 0.000 | 0.000 | 0.000 | 0.000 | 0.000 | 0.000 | 0.000 | 0.000 |
| 61 | 165 | G | 4.2655E+00 | 0.954 | 0.000 | 0.000 | 0.000 | 0.000 | 0.000 | 0.000 | 0.046 | 0.000 | 5.137 |
| 62 | 165 | G | 1.6567E+00 | 1.000 | 0.000 | 0.000 | 0.000 | 0.000 | 0.000 | 0.000 | 0.000 | 0.000 | 4.406 |
| 63 | 165 | G | 4.0870E-01 | 1.000 | 0.000 | 0.000 | 0.000 | 0.000 | 0.000 | 0.000 | 0.000 | 0.000 | 3.774 |
| 64 | 165 | G | 5.7427E-02 | 1.000 | 0.000 | 0.000 | 0.000 | 0.000 | 0.000 | 0.000 | 0.000 | 0.000 | 2.945 |
| 65 | 165 | G | 4.7541E-03 | 1.000 | 0.000 | 0.000 | 0.000 | 0.000 | 0.000 | 0.000 | 0.000 | 0.000 | 1.725 |
| 66 | 165 | I | 8.8865E-03 | 0.022 | 0.000 | 0.000 | 0.000 | 0.000 | 0.978 | 0.000 | 0.000 | 0.000 | 0.123 |
| 66 | 165 | G | 8.1932E-05 | 1.000 | 0.000 | 0.000 | 0.000 | 0.000 | 0.000 | 0.000 | 0.000 | 0.000 | 0.475 |
| 67 | 165 | G | 0.0000E+00 | 0.000 | 0.000 | 0.000 | 0.000 | 0.000 | 0.000 | 0.000 | 0.000 | 0.000 | 0.000 |
| 68 | 165 | G | 1.8693E-05 | 0.000 | 0.000 | 1.000 | 0.000 | 0.000 | 0.000 | 0.000 | 0.000 | 0.000 | 0.046 |
| 69 | 165 | G | 6.4062E-06 | 0.000 | 0.000 | 1.000 | 0.000 | 0.000 | 0.000 | 0.000 | 0.000 | 0.000 | 0.000 |
| 62 | 166 | G | 1.8769E+00 | 1.000 | 0.000 | 0.000 | 0.000 | 0.000 | 0.000 | 0.000 | 0.000 | 0.000 | 3.141 |
| 63 | 166 | G | 7.8127E-01 | 1.000 | 0.000 | 0.000 | 0.000 | 0.000 | 0.000 | 0.000 | 0.000 | 0.000 | 5.589 |
| 64 | 166 | G | 1.0807E-01 | 1.000 | 0.000 | 0.000 | 0.000 | 0.000 | 0.000 | 0.000 | 0.000 | 0.000 | 1.749 |
| 65 | 166 | G | 1.2281E-02 | 1.000 | 0.000 | 0.000 | 0.000 | 0.000 | 0.000 | 0.000 | 0.000 | 0.000 | 3.485 |
| 66 | 166 | G | 2.3625E-06 | 1.000 | 0.000 | 0.000 | 0.000 | 0.000 | 0.000 | 0.000 | 0.000 | 0.000 | 0.200 |
| 67 | 166 | I | 1.6337E-11 | 1.000 | 0.000 | 0.000 | 0.000 | 0.000 | 0.000 | 0.000 | 0.000 | 0.000 | 1.817 |
| 67 | 166 | G | 7.1844E-06 | 1.000 | 0.000 | 0.000 | 0.000 | 0.000 | 0.000 | 0.000 | 0.000 | 0.000 | 0.722 |
| 68 | 166 | G | 0.0000E+00 | 0.000 | 0.000 | 0.000 | 0.000 | 0.000 | 0.000 | 0.000 | 0.000 | 0.000 | 0.000 |
| 69 | 166 | G | 2.5005E-05 | 0.000 | 0.000 | 1.000 | 0.000 | 0.000 | 0.000 | 0.000 | 0.000 | 0.000 | 0.000 |
| 70 | 166 | G | 3.3961E-06 | 0.000 | 0.000 | 1.000 | 0.000 | 0.000 | 0.000 | 0.000 | 0.000 | 0.000 | 0.000 |
| 62 | 167 | G | 2.5530E+00 | 0.996 | 0.000 | 0.000 | 0.000 | 0.000 | 0.000 | 0.000 | 0.004 | 0.000 | 5.021 |
| 63 | 167 | G | 9.4628E-01 | 0.999 | 0.000 | 0.000 | 0.000 | 0.000 | 0.000 | 0.000 | 0.001 | 0.000 | 4.314 |
| 64 | 167 | G | 2.3276E-01 | 1.000 | 0.000 | 0.000 | 0.000 | 0.000 | 0.000 | 0.000 | 0.000 | 0.000 | 3.549 |
| 65 | 167 | G | 2.2600E-02 | 1.000 | 0.000 | 0.000 | 0.000 | 0.000 | 0.000 | 0.000 | 0.000 | 0.000 | 2.347 |
| 66 | 167 | G | 1.8633E-03 | 1.000 | 0.000 | 0.000 | 0.000 | 0.000 | 0.000 | 0.000 | 0.000 | 0.000 | 1.255 |
| 67 | 167 | G | 6.1888E-05 | 1.000 | 0.000 | 0.000 | 0.000 | 0.000 | 0.000 | 0.000 | 0.000 | 0.000 | 0.597 |
| 68 | 167 | I | 3.0137E-01 | 0.000 | 0.000 | 0.000 | 0.000 | 0.000 | 1.000 | 0.000 | 0.000 | 0.000 | 0.208 |
| 68 | 167 | G | 0.0000E+00 | 0.000 | 0.000 | 0.000 | 0.000 | 0.000 | 0.000 | 0.000 | 0.000 | 0.000 | 0.000 |
| 69 | 167 | G | 8.6730E-07 | 0.000 | 0.000 | 1.000 | 0.000 | 0.000 | 0.000 | 0.000 | 0.000 | 0.000 | 0.000 |
| 70 | 167 | G | 6.5268E-04 | 0.000 | 0.000 | 1.000 | 0.000 | 0.000 | 0.000 | 0.000 | 0.000 | 0.000 | 0.000 |
| 62 | 168 | G | 3.3599E+00 | 0.993 | 0.000 | 0.000 | 0.000 | 0.000 | 0.000 | 0.000 | 0.007 | 0.000 | 3.641 |
| 63 | 168 | G | 1.3846E+00 | 0.997 | 0.000 | 0.000 | 0.000 | 0.000 | 0.000 | 0.000 | 0.003 | 0.000 | 6.186 |
| 64 | 168 | G | 3.1407E-01 | 1.000 | 0.000 | 0.000 | 0.000 | 0.000 | 0.000 | 0.000 | 0.000 | 0.000 | 2.245 |
| 65 | 168 | G | 4.9055E-02 | 1.000 | 0.000 | 0.000 | 0.000 | 0.000 | 0.000 | 0.000 | 0.000 | 0.000 | 4.122 |
| 66 | 168 | G | 5.2711E-03 | 1.000 | 0.000 | 0.000 | 0.000 | 0.000 | 0.000 | 0.000 | 0.000 | 0.000 | 1.083 |
| 67 | 168 | G | 3.8508E-03 | 1.000 | 0.000 | 0.000 | 0.000 | 0.000 | 0.000 | 0.000 | 0.000 | 0.000 | 1.594 |
| 68 | 168 | G | 0.0000E+00 | 0.000 | 0.000 | 0.000 | 0.000 | 0.000 | 0.000 | 0.000 | 0.000 | 0.000 | 0.000 |
| 69 | 168 | G | 8.6212E-08 | 0.020 | 0.000 | 0.980 | 0.000 | 0.000 | 0.000 | 0.000 | 0.000 | 0.000 | 0.000 |
| 70 | 168 | G | 0.0000E+00 | 0.000 | 0.000 | 0.000 | 0.000 | 0.000 | 0.000 | 0.000 | 0.000 | 0.000 | 0.000 |
| 63 | 169 | G | 1.8871E+00 | 0.991 | 0.000 | 0.000 | 0.000 | 0.000 | 0.000 | 0.000 | 0.009 | 0.000 | 4.831 |
| 64 | 169 | G | 4.8337E-01 | 1.000 | 0.000 | 0.000 | 0.000 | 0.000 | 0.000 | 0.000 | 0.000 | 0.000 | 4.096 |
| 65 | 169 | G | 5.4838E-02 | 1.000 | 0.000 | 0.000 | 0.000 | 0.000 | 0.000 | 0.000 | 0.000 | 0.000 | 2.933 |
| 66 | 169 | G | 1.8164E-02 | 1.000 | 0.000 | 0.000 | 0.000 | 0.000 | 0.000 | 0.000 | 0.000 | 0.000 | 2.495 |
| 67 | 169 | G | 2.5114E-03 | 1.000 | 0.000 | 0.000 | 0.000 | 0.000 | 0.000 | 0.000 | 0.000 | 0.000 | 1.211 |
| 68 | 169 | G | 8.5363E-07 | 1.000 | 0.000 | 0.000 | 0.000 | 0.000 | 0.000 | 0.000 | 0.000 | 0.000 | 0.103 |
| 69 | 169 | G | 0.0000E+00 | 0.000 | 0.000 | 0.000 | 0.000 | 0.000 | 0.000 | 0.000 | 0.000 | 0.000 | 0.000 |
| 70 | 169 | I | 1.5068E-02 | 0.000 | 0.000 | 0.000 | 0.000 | 0.000 | 1.000 | 0.000 | 0.000 | 0.000 | 0.024 |
| 70 | 169 | G | 2.5114E-07 | 0.000 | 0.000 | 1.000 | 0.000 | 0.000 | 0.000 | 0.000 | 0.000 | 0.000 | 0.423 |

## Fig.8  Teil15                    20/23

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 71 | 169 | I | 4.2787E-03 | 0.000 | 0.000 | 0.000 | 0.000 | 0.000 | 1.000 | 0.000 | 0.000 | 0.000 | 0.029 |
| 71 | 169 | G | 5.6353E-06 | 0.000 | 0.000 | 1.000 | 0.000 | 0.000 | 0.000 | 0.000 | 0.000 | 0.000 | 0.000 |
| 62 | 170 | G | 5.5630E+00 | 0.980 | 0.000 | 0.000 | 0.000 | 0.000 | 0.000 | 0.000 | 0.020 | 0.000 | 4.257 |
| 63 | 170 | G | 2.6009E+00 | 0.962 | 0.000 | 0.000 | 0.000 | 0.000 | 0.000 | 0.000 | 0.038 | 0.000 | 6.637 |
| 64 | 170 | G | 7.1873E-01 | 1.000 | 0.000 | 0.000 | 0.000 | 0.000 | 0.000 | 0.000 | 0.000 | 0.000 | 2.767 |
| 65 | 170 | G | 4.4283E-02 | 1.000 | 0.000 | 0.000 | 0.000 | 0.000 | 0.000 | 0.000 | 0.000 | 0.000 | 4.746 |
| 66 | 170 | G | 3.4011E-02 | 1.000 | 0.000 | 0.000 | 0.000 | 0.000 | 0.000 | 0.000 | 0.000 | 0.000 | 1.483 |
| 67 | 170 | G | 4.1756E-03 | 1.000 | 0.000 | 0.000 | 0.000 | 0.000 | 0.000 | 0.000 | 0.000 | 0.000 | 2.473 |
| 68 | 170 | G | 0.0000E+00 | 0.000 | 0.000 | 0.000 | 0.000 | 0.000 | 0.000 | 0.000 | 0.000 | 0.000 | 0.000 |
| 69 | 170 | G | 6.2446E-08 | 1.000 | 0.000 | 0.000 | 0.000 | 0.000 | 0.000 | 0.000 | 0.000 | 0.000 | 0.333 |
| 70 | 170 | G | 0.0000E+00 | 0.000 | 0.000 | 0.000 | 0.000 | 0.000 | 0.000 | 0.000 | 0.000 | 0.000 | 0.000 |
| 64 | 171 | G | 1.0345E+00 | 0.999 | 0.000 | 0.000 | 0.000 | 0.000 | 0.000 | 0.000 | 0.001 | 0.000 | 4.666 |
| 65 | 171 | G | 1.1129E-01 | 0.995 | 0.000 | 0.000 | 0.000 | 0.000 | 0.000 | 0.000 | 0.005 | 0.000 | 3.514 |
| 66 | 171 | G | 6.8089E-02 | 1.000 | 0.000 | 0.000 | 0.000 | 0.000 | 0.000 | 0.000 | 0.000 | 0.000 | 3.021 |
| 67 | 171 | G | 9.5717E-03 | 1.000 | 0.000 | 0.000 | 0.000 | 0.000 | 0.000 | 0.000 | 0.000 | 0.000 | 2.156 |
| 68 | 171 | G | 2.5672E-05 | 1.000 | 0.000 | 0.000 | 0.000 | 0.000 | 0.000 | 0.000 | 0.000 | 0.000 | 0.793 |
| 69 | 171 | G | 1.1457E-08 | 1.000 | 0.000 | 0.000 | 0.000 | 0.000 | 0.000 | 0.000 | 0.000 | 0.000 | 0.026 |
| 70 | 171 | G | 0.0000E+00 | 0.000 | 0.000 | 0.000 | 0.000 | 0.000 | 0.000 | 0.000 | 0.000 | 0.000 | 0.000 |
| 71 | 171 | I | 9.1204E-03 | 0.000 | 0.000 | 0.000 | 0.000 | 0.000 | 1.000 | 0.000 | 0.000 | 0.000 | 0.071 |
| 71 | 171 | G | 9.7626E-07 | 0.000 | 0.000 | 1.000 | 0.000 | 0.000 | 0.000 | 0.000 | 0.000 | 0.000 | 0.000 |
| 72 | 171 | G | 1.5782E-05 | 0.000 | 0.000 | 1.000 | 0.000 | 0.000 | 0.000 | 0.000 | 0.000 | 0.000 | 0.000 |
| 64 | 172 | G | 1.4146E+00 | 0.998 | 0.000 | 0.000 | 0.000 | 0.000 | 0.000 | 0.000 | 0.002 | 0.000 | 3.265 |
| 65 | 172 | G | 1.6184E-01 | 0.987 | 0.000 | 0.000 | 0.000 | 0.000 | 0.000 | 0.000 | 0.013 | 0.000 | 5.321 |
| 66 | 172 | G | 1.2286E-01 | 1.000 | 0.000 | 0.000 | 0.000 | 0.000 | 0.000 | 0.000 | 0.000 | 0.000 | 1.946 |
| 67 | 172 | G | 1.9459E-02 | 1.000 | 0.000 | 0.000 | 0.000 | 0.000 | 0.000 | 0.000 | 0.000 | 0.000 | 3.704 |
| 68 | 172 | G | 3.9294E-06 | 1.000 | 0.000 | 0.000 | 0.000 | 0.000 | 0.000 | 0.000 | 0.000 | 0.000 | 0.658 |
| 69 | 172 | G | 3.0268E-06 | 1.000 | 0.000 | 0.000 | 0.000 | 0.000 | 0.000 | 0.000 | 0.000 | 0.000 | 1.018 |
| 70 | 172 | G | 0.0000E+00 | 0.000 | 0.000 | 0.000 | 0.000 | 0.000 | 0.000 | 0.000 | 0.000 | 0.000 | 0.000 |
| 71 | 172 | I | 3.1223E-03 | 0.000 | 0.000 | 0.000 | 0.000 | 0.000 | 1.000 | 0.000 | 0.000 | 0.000 | 0.000 |
| 71 | 172 | G | 1.1974E-06 | 0.000 | 0.000 | 1.000 | 0.000 | 0.000 | 0.000 | 0.000 | 0.000 | 0.000 | 0.000 |
| 72 | 172 | G | 1.1748E-08 | 0.000 | 0.000 | 1.000 | 0.000 | 0.000 | 0.000 | 0.000 | 0.000 | 0.000 | 0.000 |
| 70 | 173 | G | 0.0000E+00 | 0.000 | 0.000 | 0.000 | 0.000 | 0.000 | 0.000 | 0.000 | 0.000 | 0.000 | 0.000 |
| 70 | 174 | G | 0.0000E+00 | 0.000 | 0.000 | 0.000 | 0.000 | 0.000 | 0.000 | 0.000 | 0.000 | 0.000 | 0.000 |
| 70 | 175 | G | 1.9095E-06 | 1.000 | 0.000 | 0.000 | 0.000 | 0.000 | 0.000 | 0.000 | 0.000 | 0.000 | 0.169 |
| 71 | 175 | G | 0.0000E+00 | 0.000 | 0.000 | 0.000 | 0.000 | 0.000 | 0.000 | 0.000 | 0.000 | 0.000 | 0.000 |
| 71 | 176 | I | 5.2313E-05 | 1.000 | 0.000 | 0.000 | 0.000 | 0.000 | 0.000 | 0.000 | 0.000 | 0.000 | 1.310 |
| 71 | 176 | G | 6.1070E-19 | 1.000 | 0.000 | 0.000 | 0.000 | 0.000 | 0.000 | 0.000 | 0.000 | 0.000 | 1.020 |
| 72 | 176 | G | 0.0000E+00 | 0.000 | 0.000 | 0.000 | 0.000 | 0.000 | 0.000 | 0.000 | 0.000 | 0.000 | 0.000 |
| 71 | 177 | I | 5.0113E-08 | 0.780 | 0.000 | 0.000 | 0.000 | 0.220 | 0.000 | 0.000 | 0.000 | 0.000 | 1.350 |
| 71 | 177 | G | 1.1957E-06 | 1.000 | 0.000 | 0.000 | 0.000 | 0.000 | 0.000 | 0.000 | 0.000 | 0.000 | 0.162 |
| 72 | 177 | G | 0.0000E+00 | 0.000 | 0.000 | 0.000 | 0.000 | 0.000 | 0.000 | 0.000 | 0.000 | 0.000 | 0.000 |
| 72 | 178 | I | 1.7329E-01 | 0.000 | 0.000 | 0.000 | 0.000 | 0.000 | 1.000 | 0.000 | 0.000 | 0.000 | 1.137 |
| 72 | 178 | G | 0.0000E+00 | 0.000 | 0.000 | 0.000 | 0.000 | 0.000 | 0.000 | 0.000 | 0.000 | 0.000 | 0.000 |
| 72 | 179 | I | 3.7067E-02 | 0.000 | 0.000 | 0.000 | 0.000 | 0.000 | 1.000 | 0.000 | 0.000 | 0.000 | 0.375 |
| 72 | 179 | G | 0.0000E+00 | 0.000 | 0.000 | 0.000 | 0.000 | 0.000 | 0.000 | 0.000 | 0.000 | 0.000 | 0.000 |
| 72 | 180 | I | 3.5007E-05 | 0.000 | 0.000 | 0.000 | 0.000 | 0.000 | 1.000 | 0.000 | 0.000 | 0.000 | 1.142 |
| 72 | 180 | G | 0.0000E+00 | 0.000 | 0.000 | 0.000 | 0.000 | 0.000 | 0.000 | 0.000 | 0.000 | 0.000 | 0.000 |
| 72 | 181 | G | 1.8939E-07 | 1.000 | 0.000 | 0.000 | 0.000 | 0.000 | 0.000 | 0.000 | 0.000 | 0.000 | 0.754 |
| 73 | 181 | G | 0.0000E+00 | 0.000 | 0.000 | 0.000 | 0.000 | 0.000 | 0.000 | 0.000 | 0.000 | 0.000 | 0.000 |
| 72 | 182 | I | 1.8745E-01 | 0.540 | 0.000 | 0.000 | 0.000 | 0.000 | 0.460 | 0.000 | 0.000 | 0.000 | 0.540 |
| 72 | 182 | G | 2.4424E-15 | 1.000 | 0.000 | 0.000 | 0.000 | 0.000 | 0.000 | 0.000 | 0.000 | 0.000 | 0.500 |
| 73 | 182 | I | 7.2203E-01 | 0.000 | 0.000 | 0.000 | 0.000 | 0.000 | 1.000 | 0.000 | 0.000 | 0.000 | 0.520 |
| 73 | 182 | G | 7.0107E-08 | 1.000 | 0.000 | 0.000 | 0.000 | 0.000 | 0.000 | 0.000 | 0.000 | 0.000 | 1.502 |
| 74 | 182 | G | 0.0000E+00 | 0.000 | 0.000 | 0.000 | 0.000 | 0.000 | 0.000 | 0.000 | 0.000 | 0.000 | 0.000 |
| 73 | 183 | G | 1.6122E-06 | 1.000 | 0.000 | 0.000 | 0.000 | 0.000 | 0.000 | 0.000 | 0.000 | 0.000 | 1.070 |
| 74 | 183 | I | 1.3079E-01 | 0.000 | 0.000 | 0.000 | 0.000 | 0.000 | 1.000 | 0.000 | 0.000 | 0.000 | 0.309 |
| 74 | 183 | G | 0.0000E+00 | 0.000 | 0.000 | 0.000 | 0.000 | 0.000 | 0.000 | 0.000 | 0.000 | 0.000 | 0.000 |
| 74 | 184 | G | 0.0000E+00 | 0.000 | 0.000 | 0.000 | 0.000 | 0.000 | 0.000 | 0.000 | 0.000 | 0.000 | 0.000 |
| 74 | 185 | I | 6.7956E-03 | 0.000 | 0.000 | 0.000 | 0.000 | 0.000 | 1.000 | 0.000 | 0.000 | 0.000 | 0.197 |
| 74 | 185 | G | 1.0662E-07 | 1.000 | 0.000 | 0.000 | 0.000 | 0.000 | 0.000 | 0.000 | 0.000 | 0.000 | 0.433 |
| 75 | 185 | G | 0.0000E+00 | 0.000 | 0.000 | 0.000 | 0.000 | 0.000 | 0.000 | 0.000 | 0.000 | 0.000 | 0.000 |
| 74 | 186 | G | 0.0000E+00 | 0.000 | 0.000 | 0.000 | 0.000 | 0.000 | 0.000 | 0.000 | 0.000 | 0.000 | 0.000 |
| 75 | 186 | G | 2.1243E-06 | 0.922 | 0.000 | 0.078 | 0.000 | 0.000 | 0.000 | 0.000 | 0.000 | 0.000 | 0.361 |
| 76 | 186 | G | 0.0000E+00 | 0.000 | 0.000 | 0.000 | 0.000 | 0.000 | 0.000 | 0.000 | 0.000 | 0.000 | 0.000 |
| 74 | 187 | G | 8.0707E-06 | 1.000 | 0.000 | 0.000 | 0.000 | 0.000 | 0.000 | 0.000 | 0.000 | 0.000 | 0.765 |
| 75 | 187 | G | 4.3954E-17 | 1.000 | 0.000 | 0.000 | 0.000 | 0.000 | 0.000 | 0.000 | 0.000 | 0.000 | 2.590 |
| 76 | 187 | G | 0.0000E+00 | 0.000 | 0.000 | 0.000 | 0.000 | 0.000 | 0.000 | 0.000 | 0.000 | 0.000 | 0.000 |
| 74 | 188 | G | 1.1626E-07 | 1.000 | 0.000 | 0.000 | 0.000 | 0.000 | 0.000 | 0.000 | 0.000 | 0.000 | 0.151 |
| 75 | 188 | I | 6.2117E-04 | 0.000 | 0.000 | 0.000 | 0.000 | 0.000 | 1.000 | 0.000 | 0.000 | 0.000 | 0.172 |
| 75 | 188 | G | 1.1339E-05 | 1.000 | 0.000 | 0.000 | 0.000 | 0.000 | 0.000 | 0.000 | 0.000 | 0.000 | 0.837 |
| 76 | 188 | G | 0.0000E+00 | 0.000 | 0.000 | 0.000 | 0.000 | 0.000 | 0.000 | 0.000 | 0.000 | 0.000 | 0.000 |
| 75 | 189 | G | 7.9235E-06 | 0.920 | 0.080 | 0.000 | 0.000 | 0.000 | 0.000 | 0.000 | 0.000 | 0.000 | 1.010 |
| 76 | 189 | I | 3.2090E-05 | 1.000 | 0.000 | 0.000 | 0.000 | 0.000 | 0.000 | 0.000 | 0.000 | 0.000 | 0.500 |
| 76 | 189 | G | 0.0000E+00 | 0.000 | 0.000 | 0.000 | 0.000 | 0.000 | 0.000 | 0.000 | 0.000 | 0.000 | 0.000 |
| 76 | 190 | I | 1.1562E-03 | 1.000 | 0.000 | 0.000 | 0.000 | 0.000 | 0.000 | 0.000 | 0.000 | 0.000 | 1.706 |
| 76 | 190 | G | 0.0000E+00 | 0.000 | 0.000 | 0.000 | 0.000 | 0.000 | 0.000 | 0.000 | 0.000 | 0.000 | 0.000 |
| 76 | 191 | I | 1.4698E-05 | 0.000 | 0.000 | 0.000 | 0.000 | 0.000 | 1.000 | 0.000 | 0.000 | 0.000 | 0.744 |
| 76 | 191 | G | 5.2077E-07 | 0.000 | 1.000 | 0.000 | 0.000 | 0.000 | 0.000 | 0.000 | 0.000 | 0.000 | 0.245 |
| 77 | 191 | I | 1.4031E-01 | 0.000 | 0.000 | 0.000 | 0.000 | 0.000 | 1.000 | 0.000 | 0.000 | 0.000 | 0.171 |
| 77 | 191 | G | 0.0000E+00 | 0.000 | 0.000 | 0.000 | 0.000 | 0.000 | 0.000 | 0.000 | 0.000 | 0.000 | 0.000 |

# Fig.8 Teil16

| Z | A | K | λtot | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 77 | 192 | I | 8.2512E-03 | 0.000 | 0.000 | 0.000 | 0.000 | 0.000 | 1.000 | 0.000 | 0.000 | 0.000 | 0.058 |
| 77 | 192 | G | 1.0841E-07 | 0.954 | 0.000 | 0.046 | 0.000 | 0.000 | 0.000 | 0.000 | 0.000 | 0.000 | 1.033 |
| 78 | 192 | G | 0.0000E+00 | 0.000 | 0.000 | 0.000 | 0.000 | 0.000 | 0.000 | 0.000 | 0.000 | 0.000 | 0.000 |
| 77 | 193 | I | 7.5688E-07 | 0.000 | 0.000 | 0.000 | 0.000 | 0.000 | 1.000 | 0.000 | 0.000 | 0.000 | 0.080 |
| 77 | 193 | G | 0.0000E+00 | 0.000 | 0.000 | 0.000 | 0.000 | 0.000 | 0.000 | 0.000 | 0.000 | 0.000 | 0.000 |
| 78 | 193 | I | 1.8529E-06 | 0.000 | 0.000 | 0.000 | 0.000 | 0.000 | 1.000 | 0.000 | 0.000 | 0.000 | 0.150 |
| 78 | 193 | G | 4.3953E-10 | 0.000 | 0.000 | 1.000 | 0.000 | 0.000 | 0.000 | 0.000 | 0.000 | 0.000 | 0.005 |
| 77 | 194 | I | 4.6849E-08 | 1.000 | 0.000 | 0.000 | 0.000 | 0.000 | 0.000 | 0.000 | 0.000 | 0.000 | 0.100 |
| 77 | 194 | G | 1.0054E-05 | 1.000 | 0.000 | 0.000 | 0.000 | 0.000 | 0.000 | 0.000 | 0.000 | 0.000 | 0.900 |
| 78 | 194 | G | 0.0000E+00 | 0.000 | 0.000 | 0.000 | 0.000 | 0.000 | 0.000 | 0.000 | 0.000 | 0.000 | 0.000 |
| 78 | 195 | I | 1.9959E-06 | 0.000 | 0.000 | 0.000 | 0.000 | 0.000 | 0.000 | 0.000 | 0.000 | 0.000 | 0.259 |
| 78 | 195 | G | 0.0000E+00 | 0.000 | 0.000 | 0.000 | 0.000 | 0.000 | 1.000 | 0.000 | 0.000 | 0.000 | 0.000 |
| 78 | 196 | G | 0.0000E+00 | 0.000 | 0.000 | 0.000 | 0.000 | 0.000 | 0.000 | 0.000 | 0.000 | 0.000 | 0.000 |
| 78 | 197 | I | 1.2238E-04 | 0.030 | 0.000 | 0.000 | 0.000 | 0.000 | 0.970 | 0.000 | 0.000 | 0.000 | 0.422 |
| 78 | 197 | G | 1.0521E-05 | 1.000 | 0.000 | 0.000 | 0.000 | 0.000 | 0.000 | 0.000 | 0.000 | 0.000 | 0.750 |
| 79 | 197 | I | 8.6865E-02 | 0.000 | 0.000 | 0.000 | 0.000 | 0.000 | 1.000 | 0.000 | 0.000 | 0.000 | 0.409 |
| 79 | 197 | G | 0.0000E+00 | 0.000 | 0.000 | 0.000 | 0.000 | 0.000 | 0.000 | 0.000 | 0.000 | 0.000 | 0.000 |
| 79 | 198 | I | 3.4884E-06 | 0.000 | 0.000 | 0.000 | 0.000 | 0.000 | 1.000 | 0.000 | 0.000 | 0.000 | 0.812 |
| 79 | 198 | G | 2.9787E-06 | 1.000 | 0.000 | 0.000 | 0.000 | 0.000 | 0.000 | 0.000 | 0.000 | 0.000 | 1.374 |
| 80 | 198 | G | 0.0000E+00 | 0.000 | 0.000 | 0.000 | 0.000 | 0.000 | 0.000 | 0.000 | 0.000 | 0.000 | 0.000 |
| 79 | 199 | I | 2.5558E-06 | 1.000 | 0.000 | 0.000 | 0.000 | 0.000 | 0.000 | 0.000 | 0.000 | 0.000 | 0.231 |
| 80 | 199 | I | 2.7119E-04 | 0.000 | 0.000 | 0.000 | 0.000 | 0.000 | 1.000 | 0.000 | 0.000 | 0.000 | 0.532 |
| 80 | 199 | G | 0.0000E+00 | 0.000 | 0.000 | 0.000 | 0.000 | 0.000 | 0.000 | 0.000 | 0.000 | 0.000 | 0.000 |
| 79 | 200 | I | 1.0296E-05 | 0.840 | 0.000 | 0.000 | 0.000 | 0.000 | 0.160 | 0.000 | 0.000 | 0.000 | 0.160 |
| 79 | 200 | G | 2.3869E-04 | 1.000 | 0.000 | 0.000 | 0.000 | 0.000 | 0.000 | 0.000 | 0.000 | 0.000 | 2.200 |
| 80 | 200 | G | 0.0000E+00 | 0.000 | 0.000 | 0.000 | 0.000 | 0.000 | 0.000 | 0.000 | 0.000 | 0.000 | 0.000 |
| 80 | 201 | G | 0.0000E+00 | 0.000 | 0.000 | 0.000 | 0.000 | 0.000 | 0.000 | 0.000 | 0.000 | 0.000 | 0.000 |
| 80 | 202 | G | 0.0000E+00 | 0.000 | 0.000 | 0.000 | 0.000 | 0.000 | 0.000 | 0.000 | 0.000 | 0.000 | 0.000 |
| 80 | 203 | G | 1.7221E-07 | 1.000 | 0.000 | 0.000 | 0.000 | 0.000 | 0.000 | 0.000 | 0.000 | 0.000 | 0.336 |
| 81 | 203 | G | 0.0000E+00 | 0.000 | 0.000 | 0.000 | 0.000 | 0.000 | 0.000 | 0.000 | 0.000 | 0.000 | 0.000 |
| 80 | 204 | G | 0.0000E+00 | 0.000 | 0.000 | 0.000 | 0.000 | 0.000 | 0.000 | 0.000 | 0.000 | 0.000 | 0.000 |
| 81 | 204 | G | 5.8150E-09 | 0.974 | 0.000 | 0.026 | 0.000 | 0.000 | 0.000 | 0.000 | 0.000 | 0.000 | 0.239 |
| 82 | 204 | I | 1.7191E-04 | 0.000 | 0.000 | 0.000 | 0.000 | 0.000 | 1.000 | 0.000 | 0.000 | 0.000 | 2.186 |
| 82 | 204 | G | 1.5700E-24 | 0.000 | 0.000 | 0.000 | 0.000 | 1.000 | 0.000 | 0.000 | 0.000 | 0.000 | 2.600 |
| 80 | 205 | G | 2.2216E-03 | 1.000 | 0.000 | 0.000 | 0.000 | 0.000 | 0.000 | 0.000 | 0.000 | 0.000 | 1.600 |
| 81 | 205 | G | 0.0000E+00 | 0.000 | 0.000 | 0.000 | 0.000 | 0.000 | 0.000 | 0.000 | 0.000 | 0.000 | 0.000 |
| 82 | 205 | G | 1.4654E-14 | 0.000 | 0.000 | 1.000 | 0.000 | 0.000 | 0.000 | 0.000 | 0.000 | 0.000 | 0.005 |
| 80 | 206 | G | 1.4175E-03 | 1.000 | 0.000 | 0.000 | 0.000 | 0.000 | 0.000 | 0.000 | 0.000 | 0.000 | 2.643 |
| 81 | 206 | I | 3.1723E-03 | 0.000 | 0.000 | 0.000 | 0.000 | 0.000 | 1.000 | 0.000 | 0.000 | 0.000 | 1.524 |
| 81 | 206 | G | 2.7506E-04 | 1.000 | 0.000 | 0.000 | 0.000 | 0.000 | 0.000 | 0.000 | 0.000 | 0.000 | 0.000 |
| 82 | 206 | G | 0.0000E+00 | 0.000 | 0.000 | 0.000 | 0.000 | 0.000 | 0.000 | 0.000 | 0.000 | 0.000 | 0.000 |
| 81 | 207 | I | 5.2116E-01 | 0.000 | 0.000 | 0.000 | 0.000 | 0.000 | 1.000 | 0.000 | 0.000 | 0.000 | 0.495 |
| 81 | 207 | G | 2.4219E-03 | 1.000 | 0.000 | 0.000 | 0.000 | 0.000 | 0.000 | 0.000 | 0.000 | 0.000 | 0.000 |
| 82 | 207 | G | 0.0000E+00 | 0.000 | 0.000 | 0.000 | 0.000 | 0.000 | 0.000 | 0.000 | 0.000 | 0.000 | 3.970 |
| 81 | 208 | G | 3.7840E-03 | 1.000 | 0.000 | 0.000 | 0.000 | 0.000 | 0.000 | 0.000 | 0.000 | 0.000 | 0.000 |
| 82 | 208 | G | 0.0000E+00 | 0.000 | 0.000 | 0.000 | 0.000 | 0.000 | 0.000 | 0.000 | 0.000 | 0.000 | 2.803 |
| 81 | 209 | G | 5.2511E-03 | 1.000 | 0.000 | 0.000 | 0.000 | 0.000 | 0.000 | 0.000 | 0.000 | 0.000 | 0.194 |
| 82 | 209 | G | 5.9193E-05 | 1.000 | 0.000 | 0.000 | 0.000 | 0.000 | 0.000 | 0.000 | 0.000 | 0.000 | 0.000 |
| 83 | 209 | G | 0.0000E+00 | 0.000 | 0.000 | 0.000 | 0.000 | 0.000 | 0.000 | 0.000 | 0.000 | 0.000 | 0.000 |
| 81 | 210 | G | 8.8865E-03 | 1.000 | 0.000 | 0.000 | 0.000 | 0.000 | 0.000 | 0.000 | 0.000 | 0.000 | 0.039 |
| 82 | 210 | G | 9.8556E-10 | 1.000 | 0.000 | 0.000 | 0.000 | 0.000 | 0.000 | 0.000 | 0.000 | 0.000 | 5.296 |
| 83 | 210 | I | 7.3264E-15 | 0.000 | 0.000 | 0.000 | 0.000 | 1.000 | 0.000 | 0.000 | 0.000 | 0.000 | 0.389 |
| 83 | 210 | G | 1.6004E-06 | 1.000 | 0.000 | 0.000 | 0.000 | 0.000 | 0.000 | 0.000 | 0.000 | 0.000 | 5.408 |
| 84 | 210 | G | 5.7955E-07 | 0.000 | 0.000 | 0.000 | 0.000 | 1.000 | 0.000 | 0.000 | 0.000 | 0.000 | 0.506 |
| 82 | 211 | G | 3.2001E-04 | 1.000 | 0.000 | 0.000 | 0.000 | 0.000 | 0.000 | 0.000 | 0.000 | 0.000 | 6.729 |
| 83 | 211 | G | 5.3319E-02 | 0.003 | 0.000 | 0.000 | 0.000 | 0.997 | 0.000 | 0.000 | 0.000 | 0.000 | 7.600 |
| 84 | 211 | I | 2.7506E-03 | 0.000 | 0.000 | 0.000 | 0.000 | 1.000 | 0.000 | 0.000 | 0.000 | 0.000 | 7.592 |
| 84 | 211 | G | 1.3433E+00 | 0.000 | 0.000 | 0.000 | 0.000 | 1.000 | 0.000 | 0.000 | 0.000 | 0.000 | 0.321 |
| 82 | 212 | G | 1.8098E-05 | 1.000 | 0.000 | 0.000 | 0.000 | 0.000 | 0.000 | 0.000 | 0.000 | 0.000 | 0.000 |
| 83 | 212 | I | 4.6210E-04 | 0.070 | 0.000 | 0.000 | 0.000 | 0.930 | 0.000 | 0.000 | 0.000 | 0.000 | 2.869 |
| 83 | 212 | G | 1.9064E-04 | 0.640 | 0.000 | 0.000 | 0.000 | 0.360 | 0.000 | 0.000 | 0.000 | 0.000 | 0.000 |
| 84 | 212 | I | 4.8813E+07 | 0.000 | 0.000 | 0.000 | 0.000 | 1.000 | 0.000 | 0.000 | 0.000 | 0.000 | 8.940 |
| 84 | 212 | G | 2.3105E+06 | 0.000 | 0.000 | 0.000 | 0.000 | 1.000 | 0.000 | 0.000 | 0.000 | 0.000 | 0.000 |
| 82 | 213 | G | 1.1326E-03 | 1.000 | 0.000 | 0.000 | 0.000 | 0.000 | 0.000 | 0.000 | 0.000 | 0.000 | 0.709 |
| 83 | 213 | G | 2.5344E-04 | 0.978 | 0.000 | 0.000 | 0.000 | 0.022 | 0.000 | 0.000 | 0.000 | 0.000 | 8.537 |
| 84 | 213 | G | 1.6504E+05 | 0.000 | 0.000 | 0.000 | 0.000 | 1.000 | 0.000 | 0.000 | 0.000 | 0.000 | 0.538 |
| 82 | 214 | G | 4.3106E-04 | 1.000 | 0.000 | 0.000 | 0.000 | 0.000 | 0.000 | 0.000 | 0.000 | 0.000 | 2.162 |
| 83 | 214 | G | 5.8052E-04 | 1.000 | 0.000 | 0.000 | 0.000 | 0.000 | 0.000 | 0.000 | 0.000 | 0.000 | 7.833 |
| 84 | 214 | G | 4.2265E+03 | 0.000 | 0.000 | 0.000 | 0.000 | 1.000 | 0.000 | 0.000 | 0.000 | 0.000 | 0.000 |
| 83 | 215 | G | 1.5611E-03 | 1.000 | 0.000 | 0.000 | 0.000 | 0.000 | 0.000 | 0.000 | 0.000 | 0.000 | 7.531 |
| 84 | 215 | G | 3.8941E+02 | 0.000 | 0.000 | 0.000 | 0.000 | 1.000 | 0.000 | 0.000 | 0.000 | 0.000 | 6.906 |
| 84 | 216 | G | 4.6210E+00 | 0.000 | 0.000 | 0.000 | 0.000 | 1.000 | 0.000 | 0.000 | 0.000 | 0.000 | 0.000 |
| 84 | 217 | G | 6.9315E-02 | 0.000 | 0.000 | 0.000 | 0.000 | 1.000 | 0.000 | 0.000 | 0.000 | 0.000 | 7.199 |
| 85 | 217 | G | 2.1460E+01 | 0.000 | 0.000 | 0.000 | 0.000 | 1.000 | 0.000 | 0.000 | 0.000 | 0.000 | 6.113 |
| 84 | 218 | G | 3.7877E-03 | 0.000 | 0.000 | 0.000 | 0.000 | 1.000 | 0.000 | 0.000 | 0.000 | 0.000 | 0.000 |
| 85 | 218 | G | 3.4657E-01 | 0.001 | 0.000 | 0.000 | 0.000 | 0.999 | 0.000 | 0.000 | 0.000 | 0.000 | 7.260 |
| 86 | 218 | G | 1.9804E+01 | 0.000 | 0.000 | 0.000 | 0.000 | 1.000 | 0.000 | 0.000 | 0.000 | 0.000 | 0.000 |
| 85 | 219 | G | 1.2836E-07 | 0.030 | 0.000 | 0.000 | 0.000 | 0.970 | 0.000 | 0.000 | 0.000 | 0.000 | 7.000 |
| 86 | 219 | G | 1.7504E-01 | 0.000 | 0.000 | 0.000 | 0.000 | 1.000 | 0.000 | 0.000 | 0.000 | 0.000 | 6.405 |
| 86 | 220 | G | 1.2467E-02 | 0.000 | 0.000 | 0.000 | 0.000 | 1.000 | 0.000 | 0.000 | 0.000 | 0.000 | |

# Fig.8  Teil17

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 86 | 271 | G | 4.6710E-04 | 0.800 | 0.000 | 0.000 | 0.000 | 0.200 | 0.000 | 0.000 | 0.000 | 0.000 | 0.000 |
| 87 | 271 | G | 2.3576E+00 | 0.000 | 0.000 | 0.000 | 0.000 | 1.000 | 0.000 | 0.000 | 0.000 | 0.000 | 6.511 |
| 86 | 272 | G | 2.0973E-06 | 0.000 | 0.000 | 0.000 | 0.000 | 1.000 | 0.000 | 0.000 | 0.000 | 0.000 | 5.590 |
| 87 | 272 | G | 8.0225E-04 | 1.000 | 0.000 | 0.000 | 0.000 | 0.000 | 0.000 | 0.000 | 0.000 | 0.000 | 0.000 |
| 88 | 272 | G | 1.8241E-07 | 0.000 | 0.000 | 0.000 | 0.000 | 1.000 | 0.000 | 0.000 | 0.000 | 0.000 | 6.680 |
| 86 | 223 | G | 2.6866E-04 | 1.000 | 0.000 | 0.000 | 0.000 | 0.000 | 0.000 | 0.000 | 0.000 | 0.000 | 0.000 |
| 87 | 223 | G | 5.2993E-04 | 1.000 | 0.000 | 0.000 | 0.000 | 0.000 | 0.000 | 0.000 | 0.000 | 0.000 | 0.438 |
| 88 | 223 | G | 7.0185E-07 | 0.000 | 0.000 | 0.000 | 0.000 | 1.000 | 0.000 | 0.000 | 0.000 | 0.000 | 6.007 |
| 86 | 224 | G | 1.0817E-04 | 1.000 | 0.000 | 0.000 | 0.000 | 0.000 | 0.000 | 0.000 | 0.000 | 0.000 | 0.000 |
| 87 | 224 | G | 3.5007E-03 | 1.000 | 0.000 | 0.000 | 0.000 | 0.000 | 0.000 | 0.000 | 0.000 | 0.000 | 0.000 |
| 88 | 224 | G | 2.1921E-06 | 0.000 | 0.000 | 0.000 | 0.000 | 1.000 | 0.000 | 0.000 | 0.000 | 0.000 | 5.790 |
| 86 | 225 | G | 2.5672E-03 | 1.000 | 0.000 | 0.000 | 0.000 | 0.000 | 0.000 | 0.000 | 0.000 | 0.000 | 0.000 |
| 87 | 225 | G | 2.9622E-03 | 1.000 | 0.000 | 0.000 | 0.000 | 0.000 | 0.000 | 0.000 | 0.000 | 0.000 | 0.000 |
| 88 | 225 | G | 5.4194E-07 | 1.000 | 0.000 | 0.000 | 0.000 | 0.000 | 0.000 | 0.000 | 0.000 | 0.000 | 0.118 |
| 89 | 225 | G | 8.0225E-07 | 0.000 | 0.000 | 0.000 | 0.000 | 1.000 | 0.000 | 0.000 | 0.000 | 0.000 | 5.893 |
| 86 | 226 | G | 1.9254E-03 | 1.000 | 0.000 | 0.000 | 0.000 | 0.000 | 0.000 | 0.000 | 0.000 | 0.000 | 0.000 |
| 87 | 226 | G | 1.4441E-02 | 1.000 | 0.000 | 0.000 | 0.000 | 0.000 | 0.000 | 0.000 | 0.000 | 0.000 | 0.000 |
| 88 | 226 | G | 1.3737E-10 | 0.000 | 0.000 | 0.000 | 0.000 | 1.000 | 0.000 | 0.000 | 0.000 | 0.000 | 4.871 |
| 89 | 226 | G | 6.6393E-06 | 0.830 | 0.000 | 0.170 | 0.000 | 0.000 | 0.000 | 0.000 | 0.000 | 0.000 | 0.000 |
| 90 | 226 | G | 3.7266E-04 | 0.000 | 0.000 | 0.000 | 0.000 | 1.000 | 0.000 | 0.000 | 0.000 | 0.000 | 6.450 |
| 87 | 227 | G | 4.6834E-03 | 1.000 | 0.000 | 0.000 | 0.000 | 0.000 | 0.000 | 0.000 | 0.000 | 0.000 | 0.000 |
| 88 | 227 | G | 2.7375E-04 | 1.000 | 0.000 | 0.000 | 0.000 | 0.000 | 0.000 | 0.000 | 0.000 | 0.000 | 0.000 |
| 89 | 227 | G | 1.0097E-09 | 0.986 | 0.000 | 0.000 | 0.000 | 0.014 | 0.000 | 0.000 | 0.000 | 0.000 | 0.082 |
| 90 | 227 | G | 4.2866E-07 | 0.000 | 0.000 | 0.000 | 0.000 | 1.000 | 0.000 | 0.000 | 0.000 | 0.000 | 6.157 |
| 87 | 228 | G | 1.7773E-02 | 1.000 | 0.000 | 0.000 | 0.000 | 0.000 | 0.000 | 0.000 | 0.000 | 0.000 | 0.000 |
| 88 | 228 | G | 3.8232E-09 | 1.000 | 0.000 | 0.000 | 0.000 | 0.000 | 0.000 | 0.000 | 0.000 | 0.000 | 0.013 |
| 89 | 228 | G | 3.1407E-05 | 1.000 | 0.000 | 0.000 | 0.000 | 0.000 | 0.000 | 0.000 | 0.000 | 0.000 | 1.458 |
| 90 | 228 | G | 1.1489E-08 | 0.000 | 0.000 | 0.000 | 0.000 | 1.000 | 0.000 | 0.000 | 0.000 | 0.000 | 5.517 |
| 87 | 229 | G | 1.4441E-02 | 1.000 | 0.000 | 0.000 | 0.000 | 0.000 | 0.000 | 0.000 | 0.000 | 0.000 | 0.000 |
| 88 | 229 | G | 2.8881E-03 | 1.000 | 0.000 | 0.000 | 0.000 | 0.000 | 0.000 | 0.000 | 0.000 | 0.000 | 0.000 |
| 89 | 229 | G | 1.8425E-04 | 1.000 | 0.000 | 0.000 | 0.000 | 0.000 | 0.000 | 0.000 | 0.000 | 0.000 | 0.000 |
| 90 | 229 | G | 2.9942E-12 | 0.000 | 0.000 | 0.000 | 0.000 | 1.000 | 0.000 | 0.000 | 0.000 | 0.000 | 5.161 |
| 87 | 230 | G | 3.6481E-02 | 1.000 | 0.000 | 0.000 | 0.000 | 0.000 | 0.000 | 0.000 | 0.000 | 0.000 | 0.000 |
| 88 | 230 | G | 1.2422E-04 | 1.000 | 0.000 | 0.000 | 0.000 | 0.000 | 0.000 | 0.000 | 0.000 | 0.000 | 0.000 |
| 89 | 230 | G | 5.6815E-03 | 1.000 | 0.000 | 0.000 | 0.000 | 0.000 | 0.000 | 0.000 | 0.000 | 0.000 | 0.000 |
| 90 | 230 | G | 2.9148E-13 | 0.000 | 0.000 | 0.000 | 0.000 | 1.000 | 0.000 | 0.000 | 0.000 | 0.000 | 4.774 |
| 89 | 231 | G | 1.5403E-03 | 1.000 | 0.000 | 0.000 | 0.000 | 0.000 | 0.000 | 0.000 | 0.000 | 0.000 | 0.000 |
| 90 | 231 | G | 7.5449E-06 | 1.000 | 0.000 | 0.000 | 0.000 | 0.000 | 0.000 | 0.000 | 0.000 | 0.000 | 0.187 |
| 91 | 231 | G | 6.7100E-13 | 0.000 | 0.000 | 0.000 | 0.000 | 1.000 | 0.000 | 0.000 | 0.000 | 0.000 | 5.083 |
| 89 | 232 | G | 1.9804E-02 | 1.000 | 0.000 | 0.000 | 0.000 | 0.000 | 0.000 | 0.000 | 0.000 | 0.000 | 0.000 |
| 90 | 232 | G | 1.5643E-18 | 0.000 | 0.000 | 0.000 | 0.000 | 1.000 | 0.000 | 0.000 | 0.000 | 0.000 | 4.084 |
| 91 | 232 | G | 6.1232E-06 | 0.998 | 0.000 | 0.002 | 0.000 | 0.000 | 0.000 | 0.000 | 0.000 | 0.000 | 1.107 |
| 92 | 232 | G | 3.0522E-10 | 0.000 | 0.000 | 0.000 | 0.000 | 1.000 | 0.000 | 0.000 | 0.000 | 0.000 | 5.416 |
| 90 | 233 | G | 5.1805E-04 | 1.000 | 0.000 | 0.000 | 0.000 | 0.000 | 0.000 | 0.000 | 0.000 | 0.000 | 0.438 |
| 91 | 233 | G | 2.9711E-07 | 1.000 | 0.000 | 0.000 | 0.000 | 0.000 | 0.000 | 0.000 | 0.000 | 0.000 | 0.403 |
| 92 | 233 | G | 1.3805E-13 | 0.000 | 0.000 | 0.000 | 0.000 | 1.000 | 0.000 | 0.000 | 0.000 | 0.000 | 4.904 |
| 90 | 234 | G | 3.3297E-07 | 0.000 | 1.000 | 0.000 | 0.000 | 0.000 | 0.000 | 0.000 | 0.000 | 0.000 | 0.069 |
| 91 | 234 | I | 9.8739E-03 | 0.999 | 0.000 | 0.000 | 0.000 | 0.000 | 0.001 | 0.000 | 0.000 | 0.000 | 0.845 |
| 91 | 234 | G | 2.8737E-05 | 1.000 | 0.000 | 0.000 | 0.000 | 0.000 | 0.000 | 0.000 | 0.000 | 0.000 | 1.738 |
| 92 | 234 | G | 8.9716E-14 | 0.000 | 0.000 | 0.000 | 0.000 | 1.000 | 0.000 | 0.000 | 0.000 | 0.000 | 4.859 |
| 90 | 235 | G | 1.6743E-03 | 1.000 | 0.000 | 0.000 | 0.000 | 0.000 | 0.000 | 0.000 | 0.000 | 0.000 | 0.654 |
| 91 | 235 | G | 4.7935E-04 | 1.000 | 0.000 | 0.000 | 0.000 | 0.000 | 0.000 | 0.000 | 0.000 | 0.000 | 0.490 |
| 92 | 235 | G | 3.1223E-17 | 0.000 | 0.000 | 0.000 | 0.000 | 1.000 | 0.000 | 0.000 | 0.000 | 0.000 | 4.418 |
| 90 | 236 | G | 3.1139E-04 | 1.000 | 0.000 | 0.000 | 0.000 | 0.000 | 0.000 | 0.000 | 0.000 | 0.000 | 0.000 |
| 92 | 236 | G | 9.3871E-16 | 0.000 | 0.000 | 0.000 | 0.000 | 1.000 | 0.000 | 0.000 | 0.000 | 0.000 | 4.570 |
| 92 | 237 | G | 1.1885E-06 | 1.000 | 0.000 | 0.000 | 0.000 | 0.000 | 0.000 | 0.000 | 0.000 | 0.000 | 0.343 |
| 93 | 237 | G | 1.0270E-14 | 0.000 | 0.000 | 0.000 | 0.000 | 1.000 | 0.000 | 0.000 | 0.000 | 0.000 | 5.156 |
| 92 | 238 | G | 4.9194E-18 | 0.000 | 0.000 | 0.000 | 0.000 | 1.000 | 0.000 | 0.000 | 0.000 | 0.000 | 4.279 |
| 93 | 238 | G | 3.7898E-06 | 1.000 | 0.000 | 0.000 | 0.000 | 0.000 | 0.000 | 0.000 | 0.000 | 0.000 | 0.815 |
| 94 | 238 | G | 2.5050E-10 | 0.000 | 0.000 | 0.000 | 0.000 | 1.000 | 0.000 | 0.000 | 0.000 | 0.000 | 5.591 |
| 92 | 239 | G | 4.9159E-04 | 1.000 | 0.000 | 0.000 | 0.000 | 0.000 | 0.000 | 0.000 | 0.000 | 0.000 | 0.463 |
| 93 | 239 | G | 3.4061E-06 | 1.000 | 0.000 | 0.000 | 0.000 | 0.000 | 0.000 | 0.000 | 0.000 | 0.000 | 0.424 |
| 94 | 239 | G | 9.1132E-13 | 0.000 | 0.000 | 0.000 | 0.000 | 1.000 | 0.000 | 0.000 | 0.000 | 0.000 | 5.199 |
| 92 | 240 | G | 1.3680E-05 | 1.000 | 0.000 | 0.000 | 0.000 | 0.000 | 0.000 | 0.000 | 0.000 | 0.000 | 0.248 |
| 93 | 240 | I | 1.5611E-03 | 0.999 | 0.000 | 0.000 | 0.000 | 0.000 | 0.001 | 0.000 | 0.000 | 0.000 | 1.041 |
| 93 | 240 | G | 1.7773E-04 | 1.000 | 0.000 | 0.000 | 0.000 | 0.000 | 0.000 | 0.000 | 0.000 | 0.000 | 1.548 |
| 94 | 240 | G | 3.3615E-12 | 0.000 | 0.000 | 0.000 | 0.000 | 1.000 | 0.000 | 0.000 | 0.000 | 0.000 | 5.253 |
| 93 | 241 | G | 7.2203E-04 | 1.000 | 0.000 | 0.000 | 0.000 | 0.000 | 0.000 | 0.000 | 0.000 | 0.000 | 0.000 |
| 94 | 241 | G | 1.5264E-09 | 1.000 | 0.000 | 0.000 | 0.000 | 0.000 | 0.000 | 0.000 | 0.000 | 0.000 | 0.005 |
| 95 | 241 | G | 5.0854E-11 | 0.000 | 0.000 | 0.000 | 0.000 | 1.000 | 0.000 | 0.000 | 0.000 | 0.000 | 5.604 |
| 94 | 242 | G | 5.8395E-14 | 0.000 | 0.000 | 0.000 | 0.000 | 1.000 | 0.000 | 0.000 | 0.000 | 0.000 | 4.982 |
| 95 | 242 | I | 1.4462E-10 | 0.000 | 0.000 | 0.000 | 0.000 | 0.005 | 0.995 | 0.000 | 0.000 | 0.000 | 0.067 |
| 95 | 242 | G | 1.2019E-05 | 0.827 | 0.000 | 0.173 | 0.000 | 0.000 | 0.000 | 0.000 | 0.000 | 0.000 | 0.192 |
| 96 | 242 | G | 4.9264E-08 | 0.000 | 0.000 | 0.000 | 0.000 | 1.000 | 0.000 | 0.000 | 0.000 | 0.000 | 6.216 |
| 94 | 243 | G | 3.8853E-05 | 1.000 | 0.000 | 0.000 | 0.000 | 0.000 | 0.000 | 0.000 | 0.000 | 0.000 | 0.199 |
| 95 | 243 | G | 2.9787E-12 | 0.000 | 0.000 | 0.000 | 0.000 | 1.000 | 0.000 | 0.000 | 0.000 | 0.000 | 5.423 |
| 96 | 243 | G | 7.7119E-10 | 0.000 | 0.000 | 0.002 | 0.000 | 0.998 | 0.000 | 0.000 | 0.000 | 0.000 | 6.189 |
| 94 | 244 | G | 2.7204E-16 | 0.000 | 0.000 | 0.000 | 0.000 | 0.999 | 0.000 | 0.001 | 0.000 | 0.000 | 4.892 |
| 95 | 244 | I | 4.4432E-04 | 1.000 | 0.000 | 0.000 | 0.000 | 0.000 | 0.000 | 0.000 | 0.000 | 0.000 | 0.513 |
| 95 | 244 | G | 1.9064E-05 | 1.000 | 0.000 | 0.000 | 0.000 | 0.000 | 0.000 | 0.000 | 0.000 | 0.000 | 1.151 |

## Fig.8 Teil 18

| Z | A | K | $\lambda_{tot}$ | $P_{\beta^-(G)}$ | $P_{\beta^-(I)}$ | $P_{\beta^+(G)}$ | $P_{\beta^+(I)}$ | $P_\alpha$ | $P_\gamma$ | $P_{SF}$ | $P_{1n}$ | $P_{2n}$ | $E_{Total}$ |
|---|---|---|---|---|---|---|---|---|---|---|---|---|---|
| 96 | 214 | C | 1.2143E-09 | 0.000 | 0.000 | 0.000 | 0.000 | 1.000 | 0.000 | 0.000 | 0.000 | 0.000 | 5.901 |
| 94 | 245 | G | 1.8337E-05 | 1.000 | 0.000 | 0.000 | 0.000 | 0.000 | 0.000 | 0.000 | 0.000 | 0.000 | 0.726 |
| 95 | 245 | G | 9.3922E-05 | 1.000 | 0.000 | 0.000 | 0.000 | 0.000 | 0.000 | 0.000 | 0.000 | 0.000 | 0.320 |
| 96 | 245 | G | 2.5854E-12 | 0.000 | 0.000 | 0.000 | 0.000 | 1.000 | 0.000 | 0.000 | 0.000 | 0.000 | 5.598 |
| 94 | 246 | G | 7.3944E-07 | 1.000 | 0.000 | 0.000 | 0.000 | 0.000 | 0.000 | 0.000 | 0.000 | 0.000 | 0.228 |
| 95 | 246 | I | 4.6210E-04 | 1.000 | 0.000 | 0.000 | 0.000 | 0.000 | 0.000 | 0.000 | 0.000 | 0.000 | 1.436 |
| 95 | 246 | G | 2.9622E-04 | 1.000 | 0.000 | 0.000 | 0.000 | 0.000 | 0.000 | 0.000 | 0.000 | 0.000 | 1.544 |
| 96 | 246 | G | 4.6458E-12 | 0.000 | 0.000 | 0.000 | 0.000 | 1.000 | 0.000 | 0.000 | 0.000 | 0.000 | 5.523 |
| 95 | 247 | G | 5.2511E-04 | 1.000 | 0.000 | 0.000 | 0.000 | 0.000 | 0.000 | 0.000 | 0.000 | 0.000 | 0.694 |
| 96 | 247 | G | 1.4088E-15 | 0.000 | 0.000 | 0.000 | 0.000 | 1.000 | 0.000 | 0.000 | 0.000 | 0.000 | 5.390 |
| 96 | 248 | G | 6.4659E-14 | 0.000 | 0.000 | 0.000 | 0.000 | 0.917 | 0.000 | 0.083 | 0.000 | 0.000 | 21.000 |
| 96 | 249 | G | 1.8009E-04 | 1.000 | 0.000 | 0.000 | 0.000 | 0.000 | 0.000 | 0.000 | 0.000 | 0.000 | 0.302 |
| 97 | 249 | G | 2.5069E-08 | 1.000 | 0.000 | 0.000 | 0.000 | 0.000 | 0.000 | 0.000 | 0.000 | 0.000 | 0.033 |
| 98 | 249 | G | 4.0606E-11 | 0.000 | 0.000 | 0.000 | 0.000 | 1.000 | 0.000 | 0.000 | 0.000 | 0.000 | 7.806 |
| 96 | 250 | G | 2.9698E-12 | 0.070 | 0.000 | 0.000 | 0.000 | 0.260 | 0.000 | 0.670 | 0.000 | 0.000 | 123.300 |
| 97 | 250 | G | 5.9857E-05 | 1.000 | 0.000 | 0.000 | 0.000 | 0.000 | 0.000 | 0.000 | 0.000 | 0.000 | 1.197 |
| 98 | 250 | G | 1.6804E-09 | 0.000 | 0.000 | 0.000 | 0.000 | 0.999 | 0.000 | 0.001 | 0.000 | 0.000 | 6.267 |
| 97 | 251 | G | 2.0629E-04 | 1.000 | 0.000 | 0.000 | 0.000 | 0.000 | 0.000 | 0.000 | 0.000 | 0.000 | 0.473 |
| 98 | 251 | G | 2.4475E-11 | 0.000 | 0.000 | 0.000 | 0.000 | 1.000 | 0.000 | 0.000 | 0.000 | 0.000 | 6.027 |
| 98 | 252 | G | 8.3321E-09 | 0.000 | 0.000 | 0.000 | 0.000 | 0.969 | 0.000 | 0.031 | 0.000 | 0.000 | 12.040 |
| 98 | 253 | G | 4.5039E-07 | 0.997 | 0.000 | 0.000 | 0.000 | 0.003 | 0.000 | 0.000 | 0.000 | 0.000 | 0.098 |
| 99 | 253 | G | 9.3927E-04 | 0.000 | 0.000 | 0.000 | 0.000 | 0.000 | 0.000 | 1.000 | 0.000 | 0.000 | 0.098 |
| 98 | 254 | C | 1.3261E-07 | 0.000 | 0.000 | 0.000 | 0.000 | 0.003 | 0.000 | 0.997 | 0.000 | 0.000 | 109.400 |
| 99 | 254 | I | 4.8986E-06 | 0.980 | 0.000 | 0.008 | 0.000 | 0.003 | 0.009 | 0.000 | 0.000 | 0.000 | 8.173 |
| 99 | 254 | G | 2.9099E-08 | 0.000 | 0.000 | 0.000 | 0.000 | 1.000 | 0.000 | 0.000 | 0.000 | 0.000 | 6.623 |
| 100 | 254 | G | 5.9447E-05 | 0.000 | 0.000 | 0.000 | 0.000 | 0.999 | 0.000 | 0.001 | 0.000 | 0.000 | 0.000 |
| 99 | 255 | G | 2.0156E-07 | 0.920 | 0.000 | 0.000 | 0.000 | 0.080 | 0.000 | 0.000 | 0.000 | 0.000 | 7.370 |
| 100 | 255 | G | 4.5791E-06 | 0.000 | 0.000 | 0.000 | 0.000 | 1.000 | 0.000 | 0.000 | 0.000 | 0.000 | 0.000 |
| 99 | 256 | I | 2.5334E-05 | 1.000 | 0.000 | 0.000 | 0.000 | 0.000 | 0.000 | 0.000 | 0.000 | 0.000 | 1.523 |
| 99 | 256 | G | 5.2511E-04 | 1.000 | 0.000 | 0.000 | 0.000 | 0.000 | 0.000 | 0.000 | 0.000 | 0.000 | 0.611 |
| 100 | 256 | G | 7.3302E-05 | 0.000 | 0.000 | 0.000 | 0.000 | 0.081 | 0.000 | 0.919 | 0.000 | 0.000 | 0.000 |
| 100 | 257 | G | 7.9828E-08 | 0.000 | 0.000 | 0.000 | 0.000 | 0.998 | 0.000 | 0.002 | 0.000 | 0.000 | 0.000 |
| 100 | 258 | G | 1.8241E+03 | 0.000 | 0.000 | 0.000 | 0.000 | 0.000 | 0.000 | 1.000 | 0.000 | 0.000 | 0.000 |